# EUROPÄISCHE PATENTSCHRIFT

(11) **EP 4 580 943 B1**
(45) Veröffentlichungstag und Bekanntmachung des Hinweises auf die Patenterteilung: **02.12.2026**
(21) Anmeldenummer: 23771786.3
(22) Anmeldetag: 01.09.2023
(51) Int. Cl.: B64D 11/06, B60N 2/22

(54) **FLUGZEUGSITZVORRICHTUNG**
AIRCRAFT SEATING DEVICE
DISPOSITIF DE SIÈGE POUR AÉRONEF

(30) Priorität: 02.09.2022 DE 102022122321; 05.06.2023 DE 102023114752
(43) Veröffentlichungstag der Anmeldung: 09.07.2025
(73) Patentinhaber: Recaro Aircraft Seating GmbH & Co. KG, 74523 Schwäbisch Hall (DE)
(72) Erfinder: DRENZECK, Thomas, 74545 Michelfeld (DE); HORLACHER, Michael, 74523 Schwäbisch Hall (DE); THIELE, Maik, 70567 Stuttgart (DE)
(74) Vertreter: Daub, Thomas
(86) Internationale Anmeldenummer: PCT/EP2023/074016
(87) Internationale Veröffentlichungsnummer: WO 2024/047221

(56) Entgegenhaltungen:
- EP-A2- 1 598 270
- DE-A1- 102004 002 169
- DE-A1- 102004 025 125
- DE-A1- 102018 120 995
- US-A- 3 762 766
- US-A1- 2017 297 456

## Beschreibung

### Stand der Technik

Die Erfindung betrifft eine Flugzeugsitzvorrichtung nach dem Oberbegriff des Patentanspruchs 1.

Es ist bereits eine Flugzeugsitzvorrichtung mit einer Aufständereinheit, die zur Montage auf einem Kabinenboden vorgesehen ist und zumindest einen Querträger aufweist, mit zwei Sitzstrukturelementen, die jeweils auf einer Seite eines Sitzbereichs angeordnet sind und jeweils eine Lagerstelle aufweisen, mit einer Rückenlehne, die über die Lagerstellen der Sitzstrukturelemente angebunden ist, und mit einer Lagervorrichtung, die dazu vorgesehen ist, die Rückenlehne verschwenkbar zwischen einer aufrechten Sitzstellung und einer Komfortstellung zu lagern, wobei die Rückenlehne ein schwenkbares Rückenlehnenelement umfasst, vorgeschlagen worden.

Die Druckschrift DE 10 2004 002 169 A1 offenbart eine Flugzeugsitzvorrichtung mit einer Aufständereinheit, die zur Montage auf einem Kabinenboden vorgesehen ist und zumindest einen Querträger aufweist, mit zwei Sitzstrukturelementen, die jeweils auf einer Seite eines Sitzbereichs angeordnet sind und jeweils eine Lagerstelle aufweisen, mit einer Rückenlehne, die über die Lagerstellen der Sitzstrukturelemente angebunden ist, mit einer Lagervorrichtung, die dazu vorgesehen ist, die Rückenlehne verschwenkbar zwischen einer aufrechten Sitzstellung und einer Komfortstellung zu lagern, wobei die Rückenlehne ein schwenkbares Rückenlehnenelement umfasst, und mit wenigstens einem Rückstellmodul, das zumindest zur Bereitstellung einer Rückstellkraft zur Rückstellung der Rückenlehne aus der Komfortstellung in die aufrechte Sitzstellung vorgesehen ist und dazu in einem Bereich oberhalb der Sitzstrukturelemente angeordnet ist.

Die Druckschrift EP 1 598 270 A2 offenbart eine Flugzeugsitzvorrichtung mit einer Aufständereinheit, die zur Montage auf einem Kabinenboden vorgesehen ist und zumindest einen Querträger aufweist, mit zwei Sitzstrukturelementen, die jeweils auf einer Seite eines Sitzbereichs angeordnet sind und jeweils eine Lagerstelle aufweisen, mit einer Rückenlehne, die über die Lagerstellen der Sitzstrukturelemente angebunden ist, mit einer Lagervorrichtung, die dazu vorgesehen ist, die Rückenlehne verschwenkbar zwischen einer aufrechten Sitzstellung und einer Komfortstellung zu lagern, wobei die Rückenlehne ein schwenkbares Rückenlehnenelement umfasst, und mit wenigstens einem Rückstellmodul, das zumindest zur Bereitstellung einer Rückstellkraft zur Rückstellung der Rückenlehne aus der Komfortstellung in die aufrechte Sitzstellung vorgesehen ist und dazu teilweise in einem Bereich oberhalb der Sitzstrukturelemente angeordnet ist.

Die Aufgabe der Erfindung besteht insbesondere darin, eine gattungsgemäße Vorrichtung mit verbesserten Eigenschaften hinsichtlich einer Kompaktheit und einer vorteilhaft großen Beinfreiheit für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung mit einer Aufständereinheit, die zur Montage auf einem Kabinenboden vorgesehen ist und zumindest einen Querträger aufweist, mit zwei Sitzstrukturelementen, die jeweils auf einer Seite eines Sitzbereichs angeordnet sind und jeweils eine Lagerstelle aufweisen, mit einer Rückenlehne, die über die Lagerstellen der Sitzstrukturelemente angebunden ist, mit einer Lagervorrichtung, die dazu vorgesehen ist, die Rückenlehne verschwenkbar zwischen einer aufrechten Sitzstellung und einer Komfortstellung zu lagern, wobei die Rückenlehne ein schwenkbares Rückenlehnenelement umfasst und mit wenigstens einem Rückstellmodul, das zumindest zur Bereitstellung einer Rückstellkraft zur Rückstellung der Rückenlehne aus der Komfortstellung in die aufrechte Sitzstellung vorgesehen ist und dazu zumindest zu einem großen Teil in einem Bereich oberhalb der Lagerstellen der Sitzstrukturelemente angeordnet ist.

Es wird vorgeschlagen, dass die Lagerstellen zur Lagerung des schwenkbaren Rückenlehnenelements eine Drehachse definieren, die oberhalb eines Kniebereichs der Rückenlehne angeordnet ist. Unter einer "Flugzeugsitzvorrichtung" soll vorzugsweise zumindest ein Teil, beispielsweise eine Unterbaugruppe, eines Flugzeugsitzes, insbesondere eines Flugzeugpassagiersitzes, verstanden werden. Grundsätzlich wäre es auch denkbar, dass die Flugzeugsitzvorrichtung den Flugzeugsitz im Wesentlichen oder komplett ausbildet. Unter einem "Flugzeugsitz" soll ein Sitz für einen Passagier verstanden werden, der dazu vorgesehen ist, auf einem Kabinenboden eines Flugzeugs aufgeständert zu werden. Der Flugzeugsitz ist vorzugsweise als Teil einer Flugzeugsitzreihe von mehreren nebeneinander angeordneten Flugzeugsitzen ausgebildet. Der Flugzeugsitz umfasst vorzugsweise wenigstens einen Sitzboden, der einen Sitzbereich für einen Passagier ausbildet, und eine Rückenlehne, die eine Rückenlehnenauflagefläche bereitstellt, an der sich ein auf dem Flugzeugsitz sitzender Passagier mit seinem Rücken abstützen kann. Ferner weist der Flugzeugsitz eine Aufständereinheit auf, über die der Flugzeugsitz auf einem Kabinenboden aufgeständert ist und an die die weiteren Bauteile, wie der Sitzboden und die Rückenlehne, angebunden sind. Unter einer "Aufständereinheit" soll vorzugsweise eine Grundstruktur des Flugzeugsitzes verstanden werden, die eine tragende Struktur des Flugzeugsitzes ausbildet. Über die Aufständereinheit ist der Flugzeugsitz auf einer Aufständerebene, also insbesondere dem Kabinenboden angebunden. Die Aufständereinheit weist vorzugsweise zumindest zwei Sitzfüße und zumindest ein Querelement auf, das mit den Sitzfüßen gekoppelt ist. Das Querelement bildet ein Tragrohr aus. Vorzugsweise weist die Aufständereinheit zwei Querelemente auf, ein vorderes Querelement und ein hinteres Querelement. Die Aufständereinheit ist vorzugsweise über mehrere Fittings mit dem Kabinenboden, vorzugsweise mit entsprechenden Befestigungsschienen im Kabinenboden, gekoppelt. Die Aufständereinheit bildet ein tragendes Gestell des Flugzeugsitzes, vorzugsweise der Flugzeugsitzreihe aus.

Unter einem "Sitzstrukturelement" soll vorzugsweise ein Teil einer tragenden Struktur des Flugzeugsitzes verstanden werden, an dem weitere Bauteile des Flugzeugsitzes, wie beispielsweise eine Rückenlehne, ein Rückenlehnenelement oder eine Armlehne, befestigbar sind. Ein Sitzstrukturelement ist vorzugsweise als ein Sitzteiler ausgebildet. Das als Sitzteiler ausgebildete Sitzstrukturelement ist vorzugsweise mit dem zumindest einen, vorzugsweise mit den zwei Querelementen der Aufständereinheit starr verbunden.

Das als Sitzteiler ausgebildete Sitzstrukturelement erstreckt sich vorzugsweise von dem vorderen Querelement im Wesentlichen horizontal bis in einen Bereich hinter dem hinteren Querelement. In einem Bereich hinter dem hinteren Querelement erstreckt sich das als Sitzteiler ausgebildete Sitzstrukturelement von der Aufständerebene in im Wesentlichen vertikaler Richtung weg, vorzugsweise bis in eine Armlehnenhöhe. Grundsätzlich ist es auch denkbar, dass die Sitzstrukturelemente einstückig mit einem Teil einer Sitzschale ausgebildet sind, beispielsweise mit einem unteren Rückenlehnenelement. Die einstückig ausgebildeten Sitzstrukturelemente könnten dabei beispielsweise von Seitenbereichen einer Sitzschale ausgebildet sein.

Unter einer "Lagerstelle" soll vorzugsweise ein Anbindungspunkt verstanden werden, über den ein Bauteil, wie beispielsweise ein Rückenlehnenelement, fest angebunden werden kann. Über eine Lagerstelle kann ein Bauteil vorzugsweise sowohl starr als auch beweglich angebunden werden. Vorzugsweise ist die Lagerstelle dazu vorgesehen, ein weiteres Bauteil wie insbesondere ein Rückenlehnenelement beweglich, vorzugsweise schwenkbar an das die Lagerstelle ausbildende Bauteil anzubinden. Unter einer "Lagervorrichtung" soll ein Modul verstanden werden, mittels dessen die Rückenlehne, insbesondere das schwenkbare Rückenlehnenelement, verschwenkbar an einer Einheit, wie insbesondere der Aufständereinheit, gelagert ist. Die Lagervorrichtung kann vorzugsweise von einem Lagerbolzen gebildet sein. Grundsätzlich ist es ebenso denkbar, dass die Lagervorrichtung von einem Scharnier oder einer anderen Lagermechanik gebildet ist, mittels der die Rückenlehne, insbesondere das schwenkbare Rückenlehnenelement, verschwenkbar gelagert ist. Die Lagervorrichtung bildet eine Drehachse aus, um die die Rückenlehne, insbesondere das schwenkbare Rückenlehnenelement, verschwenkbar ist. Darunter, dass die Rückenlehne verschwenkbar ist, soll verstanden werden, dass zumindest ein schwenkbares Rückenlehnenelement der Rückenlehne relativ zu einer Montagestruktur, also der Aufständereinheit, verschwenkbar ist. Unter einem "schwenkbaren Rückenlehnenelement" soll vorzugsweise ein Rückenlehnenelement verstanden werden, das zumindest einen Teil, vorzugsweise einen Großteil der Rückenlehnenfläche der Rückenlehne ausbildet. Das schwenkbare Rückenlehnenelement ist zur Ausbildung der Komfortstellung und der aufrechten Sitzstellung relativ zu der Aufständereinheit, insbesondere zu den Lagerstellen der Sitzstrukturelemente, verschwenkbar gelagert. Das schwenkbare Rückenlehnenelement weist eine tragende Grundstruktur auf und bildet in seinem Innenbereich die Rückenlehnenfläche aus. Vorzugsweise weist das schwenkbare Rückenlehnenelement einen Rückenlehnenrahmen und eine mit dem Rückenlehnenrahmen verbundene Bespannung oder ein Schalenelement auf, das die Rückenlehnenfläche ausbildet. Grundsätzlich wäre es auch denkbar, dass das schwenkbare Rückenlehnenelement von einem Sandwichbauteil gebildet ist. Dabei wäre es denkbar, dass das schwenkbare Rückenlehnenelement keinen Rückenlehnenrahmen aufweist.

Unter einer "aufrechten Sitzstellung" soll eine maximal aufrechte Sitzstellung des Flugzeugsitzes verstanden werden, die aus Sicherheitsgründen, insbesondere in einer Startphase, in einer Landephase und während Turbulenzen, eingenommen werden muss. Die aufrechte Sitzstellung ist dabei als eine sogenannte **TTL-** Stellung (Taxi, Takeoff, Landing) ausgebildet. Dabei stehen in der aufrechten Sitzstellung die Rückenlehne, insbesondere das schwenkbare Rückenlehnenelement und der Sitzboden des Flugzeugsitzes, im Wesentlichen senkrecht aufeinander, vorzugsweise in einem Winkel von zwischen 95 Grad und 115 Grad. Unter einer "Komfortstellung" soll insbesondere eine nach hinten geneigte Sitzstellung des Flugzeugsitzes verstanden werden, in der zumindest die Rückenlehne, insbesondere ein schwenkbares Rückenlehnenelement, entgegen einer Sitzrichtung des Flugzeugsitzes nach hinten geneigt ist, wodurch einem auf dem Flugzeugsitz sitzenden Passagier eine komfortable, nach hinten geneigte Sitzposition ermöglicht wird. Grundsätzlich ist es auch denkbar, dass in der Komfortstellung zusätzlich zu dem schwenkbaren Rückenlehnenelement auch der Sitzboden im Gegensatz zu der aufrechten Sitzstellung des Flugzeugsitzes geneigt ist. In der Komfortstellung können die Rückenlehne, insbesondere ein schwenkbares Rückenlehnenelement, und der Sitzboden insbesondere einen anderen, insbesondere vorteilhaft einen größeren Winkel zueinander aufweisen als in der aufrechten Sitzstellung (TTL-Stellung). In der Komfortstellung ist die Rückenlehne, insbesondere das schwenkbare Rückenlehnenelement, aus einer maximal aufrechten Sitzstellung um wenigstens 3 Grad, vorzugsweise zumindest 5 Grad, besonders bevorzugt um mehr als 8 Grad nach hinten verschwenkt.

Unter einem "Rückstellmodul" soll vorzugsweise ein Modul verstanden werden, das dazu vorgesehen ist, eine Rückstellkraft zur Rückstellung der Rückenlehne, insbesondere eines beweglich gelagerten Rückenlehnenelements, auszuüben, um dieses von einer Stellung, insbesondere einer Komfortstellung, in eine aufrechte Sitzstellung zu bewegen. Das Rückstellmodul weist dazu vorzugsweise ein Element auf, das eine Kraft zur Verstellung der Rückenlehne, insbesondere des schwenkbaren Rückenlehnenelements, bereitstellt. Das Element zur Bereitstellung einer Rückstellkraft ist vorzugsweise als ein Federelement ausgebildet.

Das Rückstellmodul weist eine Verriegeleinheit auf, die dazu vorgesehen ist, das Rückstellmodul selbst und/oder das schwenkbare Rückenlehnenelement zu verriegeln bzw. zu entriegeln. Die Verriegeleinheit weist einen Verriegelzustand und einen Entriegelzustand auf. In ihrem Verriegelzustand verriegelt die Verriegeleinheit das Rückstellmodul und/oder das schwenkbare Rückenlehnenelement und das Rückstellmodul kann keine Rückstellkraft auf das schwenkbare Rückenlehnenelement ausüben. In ihrem Entriegelzustand ist das Rückstellmodul durch die Verriegeleinheit entriegelt und kann eine Rückstellkraft auf die Rückenlehne, insbesondere das schwenkbare Rückenlehnenelement, ausüben um die Rückenlehne in ihre aufrechte Sitzstellung zu verstellen. Die Verriegeleinheit weist vorzugsweise zumindest ein Verriegelelement auf, das das Rückstellmodul selbst und/oder das schwenkbare Rückenlehnenelement mechanisch verriegelt. Das Verriegelelement ist vorzugsweise als ein Form- und/oder Kraftschlusselement ausgebildet. Das Verriegelelement ist zwischen einer Verriegelstellung und einer Entriegelstellung verstellbar. Vorzugsweise ist das Verriegelelement mittels eines mechanischen Verstellelements, wie beispielsweise einem Bowdenzug zwischen seiner Verriegelstellung und seiner Entriegelstellung verstellbar. Grundsätzlich ist es auch denkbar, dass das Verriegelelement mittels eines elektrischen, beispielsweise einem elektromagnetischen Aktuator zwischen seiner Verriegelstellung und seiner Entriegelstellung verstellbar ist. Beispielsweise wäre es auch denkbar, dass das Verriegelelement als ein Teil eines elektronischen, insbesondere eines elektromechanischen Aktuators ausgebildet ist. Es ist also denkbar, dass das Rückstellmodul und/oder das schwenkbare Rückenlehnenelement mittels der Verriegeleinheit elektrisch oder elektronisch ver- bzw. entriegelbar ist/sind. Unter einem "Bereich im Wesentlichen oberhalb der Lagerstellen" soll vorzugsweise ein Bereich verstanden werden, der sich zumindest teilweise, vorzugsweise zu einem großen Teil oberhalb der Lagerstellen befindet. Der Bereich kann sich dabei allerdings ebenso zumindest teilweise bis unterhalb der Lagerstellen erstrecken. Vorzugsweise befinden sich zumindest die Verriegelungseinheit des Rückstellmoduls und ein Teil des Elements zur Bereitstellung der Rückstellkraft oberhalb der Lagerstellen der Rückenlehne. Besonders bevorzugt ist ebenfalls zumindest ein Drittel, vorzugsweise zumindest die Hälfte und besonders bevorzugt zumindest zwei Drittel des Elements zur Erzeugung der Rückstellkraft, also des Federelements, ebenfalls oberhalb der Lagerstellen der Sitzstrukturelemente angeordnet. Unter "oberhalb der Lagerstellen" soll auf einer der Aufständerebene, also dem Kabinenboden, gegenüberliegenden Seite verstanden werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Der Flugzeugsitz ist als ein Sitz mit einer rein mechanischen Verstellung vorgesehen. Insbesondere eine Verstellung der Rückenlehne, insbesondere des schwenkbaren Rückenlehnenelements erfolgt lediglich durch eine, durch einen Passagier aufgebrachte Verstellkraft und/oder die Kraft eines Federelements. Der Flugzeugsitz weist vorzugsweise keine elektromechanischen Aktuatoren auf, durch die eine elektrische Verstellung des Flugzeugsitzes, insbesondere eine elektrische Verstellung des Flugzeugsitzes, insbesondere einer Rückenlehne und/oder eines Sitzbodens zwischen einer aufrechten Sitzstellung und einer Komfortstellung möglich ist. Der Flugzeugsitz ist vorzugsweise nicht als ein Businessclass- oder First-Class-Sitz ausgebildet, der eine elektronische Flugzeugsitzverstellung aufweist.

Durch eine erfindungsgemäße Ausgestaltung kann vorteilhaft eine besonders kompakte Flugzeugsitzvorrichtung bereitgestellt werden, bei der ein Rückstellmodul besonders vorteilhaft angeordnet ist. Besonders vorteilhaft kann durch die erfindungsgemäße Ausgestaltung ein Flugzeugsitz bereitgestellt werden, der eine besonders vorteilhafte Beinfreiheit für einen Passagier, insbesondere einen hinter dem Flugzeugsitz sitzenden Passagier, bereitstellt. Durch eine erfindungsgemäße Ausgestaltung kann die Rückenlehne in einem Bereich unterhalb der Lagerstelle besonders schmal ausgebildet werden. Dadurch kann ein Flugzeugsitz, insbesondere in einem Kniebereich, besonders schmal ausgebildet werden und eine besonders vorteilhaft große Beinfreiheit aufweisen.

Weiter wird vorgeschlagen, dass sich die Sitzstrukturelemente in ihrem hinteren Bereich nach oben, von der Aufständereinheit weg, bis zumindest im Wesentlichen auf eine Armlehnenhöhe erstrecken, wobei die Sitzstrukturelemente an ihrem hinteren, oberen Ende jeweils die Lagerstelle zur Lagerung des schwenkbaren Rückenlehnenelements aufweisen. Unter einem "hinteren Bereich der Sitzstrukturelemente" soll ein in Bezug auf die Sitzrichtung des Flugzeugsitzes gesehen hinterer Bereich, der einem vorderen Ende gegenüberliegt, verstanden werden. Unter einer "Armlehnenhöhe" soll vorzugsweise eine Höhe verstanden werden, in der eine Armlehne der Flugzeugsitzvorrichtung, insbesondere des Flugzeugsitzes angeordnet ist und eine Armabstützfläche für einen Passagier bereitstellt. Die Armlehnenhöhe beträgt relativ zu einem Kabinenboden vorzugsweise 550 mm bis 700 mm. Unter einer Armlehnenhöhe soll vorzugsweise die Höhe verstanden werden, in der die Armlehne an die Aufständereinheit des Flugzeugsitzes angebracht ist. Dadurch kann ein besonders vorteilhaft hoher Drehpunkt für die Rückenlehne, insbesondere das schwenkbare Rückenlehnenelement, bereitgestellt werden, wodurch insbesondere eine besonders vorteilhaft große Beinfreiheit für einen dahinter sitzenden Passagier geschaffen werden kann

Ferner wird vorgeschlagen, dass das Rückstellmodul wenigstens ein Federelement aufweist, das zur Bereitstellung der Rückstellkraft vorgesehen ist. Unter einem "Federelement" soll vorzugsweise ein Element verstanden werden, das zumindest in eine Richtung eine Federkraft bereitstellt. Vorzugsweise ist das Federelement als eine Druckfeder ausgebildet. Das Federelement ist dazu vorgesehen, eine Druckkraft in eine Richtung auszuüben. Grundsätzlich ist es denkbar, dass das Federelement als eine mechanische Feder ausgebildet ist, wie beispielsweise eine Spiralfeder. Grundsätzlich ist es auch denkbar, dass das Federelement als eine Gasdruckfeder ausgebildet ist. Es ist ebenso denkbar, dass das Federelement als ein Element ausgebildet ist, das sich von einer Gasdruckfeder oder einer Spiralfeder unterscheidet. Vorzugsweise ist es denkbar, dass das Federelement als ein Blattfederelement ausgebildet ist. Das Federelement weist vorzugsweise einen betätigten und einen unbetätigten Zustand auf. In dem betätigten Zustand ist das Federelement dazu vorgesehen, seine Federkraft als Rückstellkraft bereitzustellen. Ein betätigter Zustand ist vorzugsweise als ein entriegelter Zustand der Verriegeleinheit ausgebildet. Ein unbetätigter Zustand des Federelements ist als ein verriegelter Zustand des Federelements ausgebildet. In dem unbetätigten Zustand ist das Federelement dazu vorgesehen, keine Federkraft als Rückstellkraft bereitzustellen. Der unbetätigte Zustand ist vorzugsweise als ein verriegelter Zustand der Verriegeleinheit ausgebildet. Dadurch kann das Rückstellmodul zur Erzeugung einer Rückstellkraft besonders einfach ausgebildet werden.

Es wird weiterhin vorgeschlagen, dass die Rückenlehne ein unteres Rückenlehnenelement aufweist, das einen unteren Bereich der Rückenlehne ausbildet und an den Sitzstrukturelementen befestigt ist. Unter einem "unteren Rückenlehnenelement " soll vorzugsweise ein Element verstanden werden, das einen unteren, einem Sitzboden zugewandten Teil der Rückenlehne starr ausbildet. Das untere Rückenlehnenelement ist vorzugsweise von einem Schalenelement gebildet. Das untere Rückenlehnenelement ist vorzugsweise von einem Schalenelement aus einem faserverstärkten Kunststoff gebildet. Grundsätzlich wäre es auch denkbar, dass das untere Schalenelement aus einer Aluminiumschale oder Metallschale aus einem anderen Metall, insbesondere einem Leichtmetall, ausgebildet ist. Das untere Rückenlehnenelement ist vorzugsweise als ein separates Element ausgebildet. Das untere Rückenlehnenelement ist vorzugsweise starr, also unbeweglich, an den Sitzstrukturelementen befestigt. Grundsätzlich ist es ebenso denkbar, dass das untere Rückenlehnenelement einstückig mit einer Sitzschale des Sitzbodens ausgebildet ist. Dadurch kann die Rückenlehne besonders vorteilhaft und leicht ausgebildet werden.

Des Weiteren wird vorgeschlagen, dass sich das untere Rückenlehnenelement von einer Höhe des zumindest einen Querträgers bis auf eine Höhe von 450 mm - 700 mm von einer Aufständerebene gemessen erstreckt. Die Höhe des unteren Rückenlehnenelements wird dabei in einer orthogonal auf der Aufständerebene stehenden Vertikalachse gemessen. Vorzugsweise erstreckt sich das Rückenlehnenelement bis auf eine Höhe von 500 mm - 650 mm. Dadurch kann das Rückenlehnenelement besonders vorteilhaft ausgebildet werden.

Weiterhin wird vorgeschlagen, dass das Federelement als ein Blattfederelement ausgebildet und dazu vorgesehen ist, an das untere Rückenlehnenelement oder an die Aufständereinheit angebunden zu werden. Vorzugsweise ist das als Blattfederelement ausgebildete Federelement in einem oberen Bereich des unteren Rückenlehnenelements angeordnet. Das als Blattfederelement ausgebildete Federelement ist vorzugsweise in einer oberen Hälfte, vorzugsweise in einem oberen Drittel des unteren Rückenlehnenelements, angebunden. Unter "angebunden" soll vorzugsweise fest verbunden, oder anliegen verstanden werden. Das als Blattfederelement ausgebildete Federelement ist mit einem ersten Ende an das untere Rückenlehnenelement angebunden. Mit einem zweiten Ende ist das als Blattfederelement ausgebildete Federelement vorzugsweise an das schwenkbare Rückenlehnenelement angebunden. Das als Blattfederelement ausgebildete Federelement kann vorzugsweise direkt oder indirekt mit dem schwenkbaren Rückenlehnenelement bzw. dem unteren Rückenlehnenelement verbunden sein. Vorzugsweise weist das Rückstellmodul zur Anbindung des als Blattfederelement ausgebildeten Federelements an das schwenkbare Rückenlehnenelement eine erste Befestigungseinheit auf. Vorzugsweise weist das Rückstellmodul zur Anbindung des Blattfederelements an das untere Rückenlehnenelement eine zweite Befestigungseinheit auf. Vorzugsweise ist wahlweise die erste Befestigungseinheit oder die zweite Befestigungseinheit als ein Loslager ausgebildet, über das das Blattfederelement zumindest in einer Richtung eine Relativbewegung zu dem schwenkbaren Rückenlehnenelement bzw. der dem unteren Rückenlehnenelement ausführen kann. Grundsätzlich ist es auch denkbar, dass beide Befestigungseinheiten als ein Loslager ausgebildet sind. Grundsätzlich wäre es auch denkbar, dass das als Blattfederelement ausgebildete Federelement an die Aufständereinheit, beispielsweise an ein Querelement oder ein Sitzstrukturelement, angebunden ist. Unter einem "Blattfederelement" soll vorzugsweise ein längliches Federelement verstanden werden, das dazu vorgesehen ist, in einem gespannten Zustand eine Federkraft bereitzustellen, die im Wesentlichen orthogonal zu einer Haupterstreckungsrichtung des Blattfederelements vorgesehen ist. Dadurch kann das Federelement des Rückstellmoduls besonders einfach und platzsparend ausgebildet werden.

Außerdem wird vorgeschlagen, dass die Rückenlehne in einem Bereich oberhalb der Lagerstellen einen Querträger aufweist, an dem das als Blattfederelement ausgebildete Federelement zur Übertragung einer Rückstellkraft an das schwenkbare Rückenlehnenelement angebunden ist. Das als Blattfederelement ausgebildete Federelement kann entweder starr mit dem Querträger verbunden oder integral mit diesem ausgebildet sein. Grundsätzlich ist es auch denkbar, dass das als Blattfederelement ausgebildete Federelement beweglich, beispielsweise gleitend, an dem Querträger angebunden ist. Vorzugsweise weist eine Verbindung zwischen dem als Blattfederelement ausgebildeten Federelement und dem Querträger zumindest einen Freiheitsgrad auf. Dadurch kann eine Krafteinleitung der Rückstellkraft in die Rückenlehne, insbesondere das schwenkbare Rückenlehnenelement, besonders vorteilhaft erfolgen.

Es wird weiter vorgeschlagen, dass das untere Rückenlehnenelement an seinem oberen Ende eine obere Lippe aufweist, die sich bis in einen Bereich oberhalb der Lagerstellen zur Lagerung der Rückenlehne erstreckt. Unter einer "Lippe" soll vorzugsweise ein sich von einem Bereich, insbesondere von dem oberen Rand des Rückenlehnenelements, zumindest in einem Teilbereich weg erstreckender Bereich verstanden werden. Die Lippe erstreckt sich vorzugsweise zumindest über einen Teilbereich der oberen Kante des Rückenlehnenelements. Die Lippe ist vorzugsweise mittig an der oberen Kante des Rückenlehnenelements angeordnet. Grundsätzlich wäre es auch denkbar, dass sich die Lippe über eine gesamte Breite der oberen Kante des Rückenlehnenelements erstreckt. Die Lippe ist vorzugsweise einstückig mit einem Rest des unteren Rückenlehnenelements ausgebildet. Die Lippe ist einstückig mit dem von einem Schalenelement gebildeten Rückenlehnenelement ausgebildet. Die Lippe weist eine höhere Flexibilität auf als ein Rest des Rückenlehnenelements. Vorzugsweise ist die Lippe von weniger Lagen gebildet als ein Rest des als Schalenelement ausgebildeten Rückenlehnenelements. Dadurch kann ein besonders vorteilhafter Übergang zwischen dem unteren Rückenlehnenelement und einer Bespannung oder eines Schalenelements des oberen, schwenkbaren Rückenlehnenelements geschaffen werden.

Zudem wird vorgeschlagen, dass das schwenkbare Rückenlehnenelement einen Rückenlehnenrahmen und eine Bespannung, die auf den Rückenlehnenrahmen aufgespannt ist, oder ein Schalenelement aufweist, das mit dem Rückenlehnenrahmen verbunden ist. Unter einem "Rückenlehnenrahmen" soll vorzugsweise ein zumindest in drei Richtungen umlaufender, steifer Rahmen verstanden werden, in dessen Mitte eine Bespannung vorgesehen ist, die eine Rückenlehnenfläche ausbildet. Unter einer "Bespannung" soll ein Textil verstanden werden, das in einem von dem Rückenlehnenrahmen aufgespannten Mittelbereich gespannt wird und in einem gespannten Zustand eine Rückenlehnenfläche ausbildet. Der Rückenlehnenrahmen mit der Bespannung bildet das obere, schwenkbar gelagerte Rückenlehnenelement aus. Dadurch kann die Rückenlehne besonders einfach und leicht ausgebildet werden.

Weiter wird vorgeschlagen, dass das Rückstellmodul ein als Gasdruckfeder ausgebildetes Federelement aufweist, das in einem Bereich oberhalb der Lagerstellen angeordnet ist. Dadurch kann ein besonders einfach betätigbares Federelement für das Rückstellmodul bereitgestellt werden.

Ferner wird vorgeschlagen, dass das Rückstellmodul wenigstens ein Hebelgetriebe aufweist, das dazu vorgesehen ist, eine Rückstellkraft auf das schwenkbare Rückenlehnenelement zu übertragen. Dadurch kann eine Kraftübertragung für die Rückstellkraft besonders vorteilhaft ausgebildet werden und ein vorteilhaft kleines Federelement verwendet werden.

Es wird weiterhin vorgeschlagen, dass das Rückstellmodul ein Torsionsrohr aufweist, das eine Rückstellkraft von einer Seite der Rückenlehne auf eine gegenüberliegende Seite überträgt. Vorzugsweise wird die Rückstellkraft des Rückstellmoduls direkt auf das Torsionsrohr übertragen. Das Torsionsrohr ist dazu vorgesehen, zur Verstellung der Rückenlehne, insbesondere des schwenkbaren Rückenlehnenelements, verdreht zu werden. Dadurch kann eine Rückstellung der Rückenlehne besonders vorteilhaft gleichmäßig erfolgen.

Unter einem "Kniebereich" soll vorzugsweise ein Bereich der Rückenlehne verstanden werden, in dem die Knie eines hinter dem Flugzeugsitz sitzenden Passagiers angeordnet sind. Der Kniebereich ist vorzugsweise als ein Bereich ausgebildet, der sich von einem unteren Ende der Rückenlehne bis in einen Bereich von zumindest 650 mm, besonders bevorzugt von 700 mm über der Aufständerebene erstreckt. Der Kniebereich ist vorzugsweise als ein Bereich der Rückenlehne zwischen 400 mm und 700mm, besonders bevorzugt als ein Bereich der Rückenlehne zwischen 450 mm und 650 mm, gemessen von der Aufständerebene, ausgebildet. Dadurch kann ein besonders vorteilhafter Kniebereich für einen hinter dem Flugzeugsitz sitzenden Passagier bereitgestellt werden.

Weiterhin wird vorgeschlagen, dass das als Blattfederelement ausgebildete Federelement zur Bereitstellung einer Rückstellkraft einstückig mit einem unteren Rückenlehnenelement ausgebildet ist. Dadurch kann das als Blattfederelement ausgebildete Federelement besonders einfach ausgebildet werden.

Außerdem wird vorgeschlagen, dass das Federelement zur Erzeugung der Rückstellkraft zumindest teilweise einstückig mit dem schwenkbaren Rückenlehnenelement ausgebildet ist. Unter "einstückig" soll insbesondere zumindest stoffschlüssig verbunden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Darunter, dass das als Blattfederelement ausgebildete Federelement zumindest teilweise einstückig mit dem schwenkbaren Rückenlehnenelement ausgebildet ist, soll vorzugsweise verstanden werden, dass zumindest ein Teilbereich des als Blattfederelement ausgebildeten Federelements von dem schwenkbaren Rückenlehnenelement ausgebildet ist. Dadurch kann die Rückenlehne im Bereich des unteren Rückenlehnenelements besonders schmal ausgebildet werden.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind elf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Ansicht einer Flugzeugsitzreihe mit einer Flugzeugsitzvorrichtung in einem ersten Ausführungsbeispiel mit einer Rückenlehne mit einem oberen Rückenlehnendrehpunkt und einem Rückstellmodul mit einem als Blattfederelement ausgebildeten Federelement,
- Fig. 2: eine schematische Rückansicht der Flugzeugsitzreihe mit dem Rückstellmodul und dem als Blattfederelement ausgebildeten Federelement,
- Fig. 3: eine schematische Seitenansicht mit zwei Flugzeugsitzreihen und einem schwenkbaren Rückenlehnenelement in einer aufrechten Sitzstellung und einer Komfortstellung,
- Fig. 4: eine Detailansicht einer Anbindung des als Blattfederelement ausgebildeten Federelements mittels einer Befestigungseinheit,
- Fig. 5: eine schematische Ansicht einer Flugzeugsitzreihe mit einer Flugzeugsitzvorrichtung in einem zweiten Ausführungsbeispiel mit einer Rückenlehne mit einem oberen Rückenlehnendrehpunkt, die eine Bespannung aufweist, und einem Rückstellmodul mit einem als Blattfederelement ausgebildeten Federelement,
- Fig. 6: eine schematische Rückansicht des Flugzeugsitzes mit dem bespannten Rückenlehnenelement, das eine Bespannung aufweist, und dem Rückstellmodul mit dem als Blattfederelement ausgebildeten Federelement,
- Fig. 7: eine schematische Darstellung eines schwenkbaren Rückenlehnenelements, welches ein als Blattfederelement ausgebildeten Federelement ausbildet, in einem dritten Ausführungsbeispiel der Flugzeugsitzvorrichtung,
- Fig. 8: eine schematische Darstellung einer Flugzeugsitzvorrichtung in einem vierten Ausführungsbeispiel mit Rückstellmodul mit einem als Blattfederelement ausgebildeten Federelement, das von einem unteren Rückenlehnenelement gebildet ist
- Fig. 9: eine schematische Darstellung einer Flugzeugsitzvorrichtung in einem fünften Ausführungsbeispiel, mit einem Rückstellmodul, das ein als Gasdruckfeder ausgebildetes Federelement und ein Hebelgetriebe aufweist,
- Fig. 10: eine schematische Detaildarstellung eines schwenkbaren Rückenlehnenelements mit dem als Gasdruckfeder ausgebildeten Federelement und dem Hebelgetriebe,
- Fig. 11: eine schematische Detaildarstellung des Rückstellmoduls mit dem als Gasdruckfeder ausgebildeten Federelement und dem Hebelgetriebe,
- Fig. 12: eine schematische Darstellung einer Flugzeugsitzvorrichtung in einem sechsten Ausführungsbeispiel, mit einem Rückstellmodul, das ein als Gasdruckfeder ausgebildetes Federelement und ein Hebelgetriebe mit einem Torsionsrohr aufweist,
- Fig. 13: eine schematische Detaildarstellung eines schwenkbaren Rückenlehnenelements in einer aufrechten Sitzstellung,
- Fig. 14: eine schematische Detaildarstellung eines schwenkbaren Rückenlehnenelements in einer Komfortstellung,
- Fig. 15: eine schematische Darstellung einer Flugzeugsitzvorrichtung in einem siebten Ausführungsbeispiel, mit einer schwenkbaren Rückenlehne mit einem untern Rückenlehnendrehpunkt, und mit einem Rückstellmodul das ein als Blattfederelement ausgebildeten Federelement aufweist, und
- Fig. 16: eine schematische Darstellung einer Flugzeugsitzvorrichtung in einem achten Ausführungsbeispiel, mit einem Sitzschalenelement, das einen Sitzboden und ein unteres Rückenlehnenelement ausbildet und mit einem Rückstellmodul das ein als Blattfederelement ausgebildeten Federelement aufweist,
- Fig. 17: eine schematische Ansicht einer Flugzeugsitzreihe mit einer Flugzeugsitzvorrichtung in einem neunten Ausführungsbeispiel mit einer Rückenlehne mit einem oberen Rückenlehnendrehpunkt und einem Rückstellmodul,
- Fig. 18: eine schematische Rückansicht eines Flugzeugsitzes in dem neunten Ausführungsbeispiel,
- Fig. 19: eine schematische Seitenansicht des Flugzeugsitzes in dem neunten Ausführungsbeispiel,
- Fig. 20: eine schematische Ansicht eines oberen Rückenlehnenelements mit einem Rückstellmodul, das zwei als Spiralfedern ausgebildete Federelemente aufweist,
- Fig. 21: eine schematische Ansicht eines oberen Rückenlehnenelements einer Flugzeugsitzvorrichtung in einem zehnten Ausführungsbeispiel, mit einem Rückstellmodul, das zwei als Stabfedern ausgebildete Federelemente aufweist und
- Fig. 22: eine stark schematisierte Ansicht eines unteren Rückenlehnenelements einer Flugzeugsitzvorrichtung in einem elften Ausführungsbeispiel.

### Beschreibung der Ausführungsbeispiele

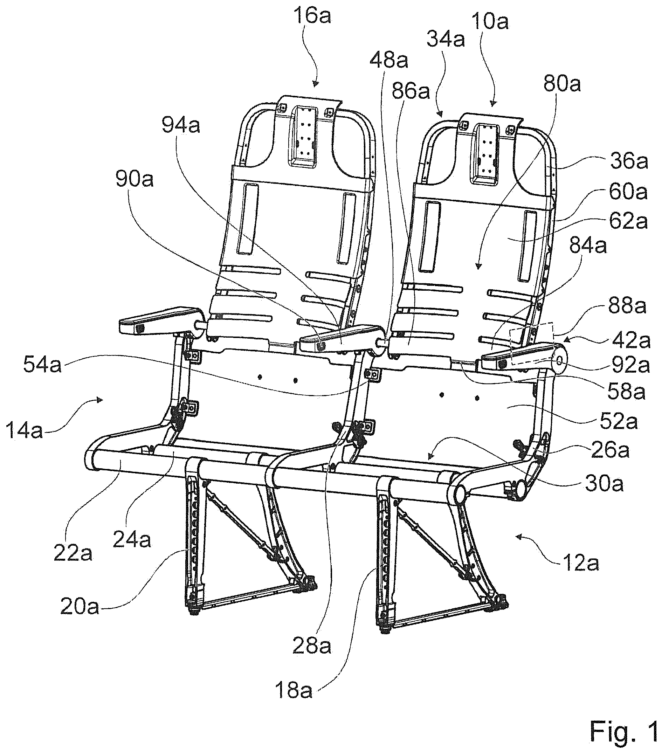

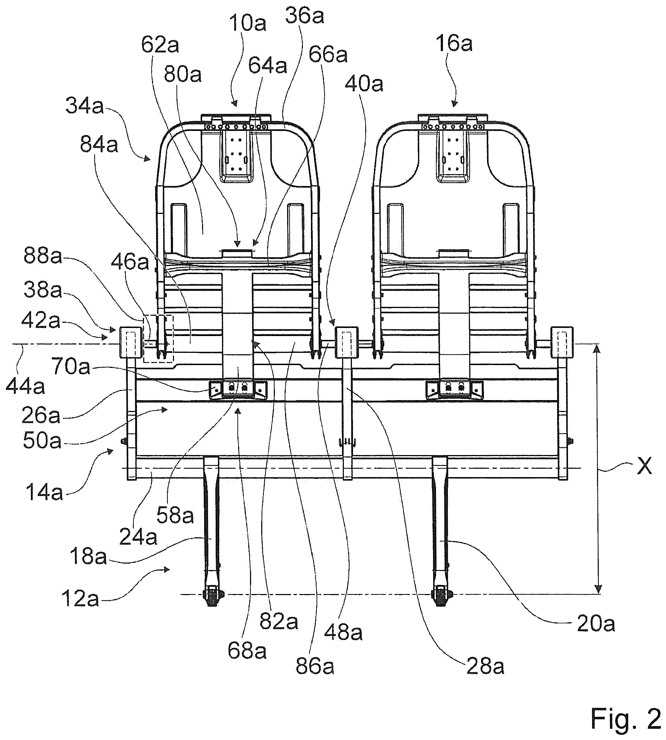

Die Figuren 1 bis 4 zeigen eine Flugzeugsitzvorrichtung in einem ersten Ausführungsbeispiel. Die Flugzeugsitzvorrichtung ist dabei Teil eines Flugzeugsitzes 10a. Der Flugzeugsitz 10a ist in einem montierten Zustand in einer Flugzeugkabine eines Flugzeugs aufgeständert. Der Flugzeugsitz 10a ist dazu vorgesehen, in einem montierten Zustand fest auf einem Kabinenboden der Flugzeugkabine montiert zu werden. Die Flugzeugsitzvorrichtung weist eine Aufständereinheit 12a auf. Mittels der Aufständereinheit 12a ist der Flugzeugsitz 10a auf dem Kabinenboden der Flugzeugkabine aufständerbar. Der Kabinenboden bildet eine Aufständerebene aus. Der Flugzeugsitz 10a ist als ein Teil einer Flugzeugsitzreihe 14a ausgebildet. Der Flugzeugsitz 10a ist vorzugsweise als ein Teil einer Flugzeugsitzreihe 14a ausgebildet, die mehr als einen Flugzeugsitz 10a umfasst. Beispielhaft ist in den Figuren die Flugzeugsitzreihe 14a mit zwei Flugzeugsitzen 10a, 16a gezeigt. Die beispielhaft gezeigte Flugzeugsitzreihe 14a weist einen zweiten Flugzeugsitz 16a auf. Der weitere Flugzeugsitz 16a ist benachbart zu dem ersten Flugzeugsitz 10a angeordnet. Der zweite Flugzeugsitz 16a ist vorzugsweise identisch zu dem ersten Flugzeugsitz 10a ausgebildet, weswegen im Folgenden lediglich der eine Flugzeugsitz 10a näher beschrieben wird. Grundsätzlich ist es auch denkbar, dass die Flugzeugsitzreihe 14a drei oder mehr Flugzeugsitze 10a, 16a aufweist. Die Aufständereinheit 12a ist dabei als eine gemeinsame Aufständereinheit 12a der Flugzeugsitze 10a, 16a einer Flugzeugsitzreihe 14a ausgebildet. Die Aufständereinheit 12a umfasst zwei Sitzfüße 18a, 20a. Die Sitzfüße 18a, 20a sind jeweils über nicht näher dargestellte Fittings mit Befestigungsschienen gekoppelt, die fest mit dem Kabinenboden verbunden sind. Die Fittings sind fest in den Befestigungsschienen arretierbar.

Die Aufständereinheit 12a weist zwei Querträger 22a, 24a auf. Die Querträger 22a, 24a sind als Tragrohre ausgebildet. Ein vorderer Querträger 22a ist in einem vorderen Bereich des Flugzeugsitzes 10a angeordnet. Ein hinterer Querträger 24a ist in einem hinteren Bereich des Flugzeugsitzes 10a angeordnet. Die Querträger 22a, 24a verlaufen in einer Querrichtung des Flugzeugsitzes 10a. Die Querträger 22a, 24a erstrecken sich zumindest im Wesentlichen über eine gesamte Quererstreckung aller Flugzeugsitze 10a der Flugzeugsitzreihe 14a. Die Flugzeugsitzvorrichtung weist zwei Sitzstrukturelemente 26a, 28a auf. Die zwei Sitzstrukturelemente 26a, 28a sind jeweils auf einer Seite eines Sitzbereichs 30a der Flugzeugsitzvorrichtung angeordnet. Die zwei Sitzstrukturelemente 26a, 28a sind jeweils seitlich eines Sitzbereichs 30a, den der Flugzeugsitz 10a ausbildet, angeordnet. Die Sitzstrukturelemente 26a, 28a sind als Sitzteiler ausgebildet. Die Sitzstrukturelemente 26a, 28a sind an den Querträgern 22a, 24a angeordnet. Die Sitzstrukturelemente 26a, 28a sind in Querrichtung beabstandet zueinander an den Querträgern 22a, 24a befestigt. Die Sitzstrukturelemente 26a, 28a sind positionsfest mit den Querträgern 22a, 24a verbunden. Die Sitzstrukturelemente 26a, 28a sind an ihrem vorderen Ende jeweils mit dem vorderen Querträger 22a verbunden. Die Sitzstrukturelemente 26a, 28a sind dabei vorzugsweise kraft- und/oder formschlüssig mit dem vorderen Querträger 22a verbunden. Die Sitzstrukturelemente 26a, 28a sind im wesentlichen L-förmig ausgebildet. Die Sitzstrukturelemente 26a, 28a weisen jeweils einen ersten Teilbereich auf, der in einem montierten Zustand im Wesentlichen horizontal ausgerichtet ist. Die Sitzstrukturelemente 26a, 28a weisen jeweils einen zweiten Teilbereich auf, der im montierten Zustand im Wesentlichen vertikal ausgerichtet ist. Der zweite Teilbereich der Sitzstrukturelemente 26a, 28a ist in einem hinteren Bereich des Flugzeugsitzes 10a angeordnet. Der zweite Teilbereich der Sitzstrukturelemente 26a, 28a erstreckt sich bis an ein hinteres Ende der Sitzstrukturelemente 26a, 28a. Der zweite Teilbereich der Sitzstrukturelemente 26a, 28a bildet einen hinteren Bereich der Sitzstrukturelemente 26a, 28a aus. Die Sitzstrukturelemente 26a, 28a erstrecken sich also in ihrem hinteren Bereich nach oben, von der Aufständereinheit 12a, insbesondere der Aufständerebene, weg. Die Sitzstrukturelemente 26a, 28a erstrecken sich in ihrem hinteren Bereich nach oben bis im Wesentlichen auf eine Armlehnenhöhe X. Die Sitzstrukturelemente 26a, 28a erstrecken sich bis auf eine Armlehnenhöhe X des Flugzeugsitzes 10a. Die Armlehnenhöhe X beträgt 650 mm. Grundsätzlich ist es vorzugsweise denkbar, dass die Armlehnenhöhe X in einem Bereich zwischen 500 mm - 700 mm liegt.

Die als Sitzteiler ausgebildeten Sitzstrukturelemente 26a, 28a sind dazu vorgesehen, dass verschiedene Bauteile des entsprechenden Flugzeugsitzes 10a, 16a an diesen befestigt werden, wie im Folgenden zumindest teilweise näher beschrieben ist. Grundsätzlich ist es auch denkbar, dass die Aufständereinheit 12a keine oder anders ausgeführte Sitzstrukturelemente 26a, 28a aufweist und entsprechende Bauteile des Flugzeugsitzes 10a, 16a anders an die Aufständereinheit 12a angebunden sind.

Die Flugzeugsitzvorrichtung umfasst einen Sitzboden 32a. Der Sitzboden 32a bildet den Sitzbereich 30a aus. Der Sitzboden 32a bildet eine Sitzfläche des Flugzeugsitzes 10a aus. Der Sitzboden 32a weist einen Grundkörper und ein auf dem Grundkörper fest angebrachtes Polsterelement auf. Das Polsterelement bildet die Sitzfläche des Flugzeugsitzes 10a aus. Der Sitzboden 32a ist an die Aufständereinheit 12a angebunden. Der Sitzboden 32a ist insbesondere an die Querträger 22a, 24a angebunden. Der Sitzboden 32a ist mit der Rückenlehne 34a gekoppelt. Der Sitzboden 32a ist direkt mit der Rückenlehne 34a gekoppelt.

Die Flugzeugsitzvorrichtung umfasst eine Rückenlehne 34a. Die Rückenlehne 34a ist dabei dazu vorgesehen, dass eine Person, die auf dem Flugzeugsitz 10a sitzt, dessen Teil die Flugzeugsitzvorrichtung ist, ihren Rücken an der Rückenlehne 34a abstützen kann. Die Rückenlehne 34a weist vorzugsweise eine nicht näher dargestellte Polsterung auf. Die Rückenlehne 34a bildet eine Rückenlehnenabstützfläche aus. Die Rückenlehne 34a ist an einem hinteren Ende des Sitzbodens 32a angeordnet. Die Rückenlehne 34a ist schwenkbar zu der Aufständereinheit 12a angeordnet. Die Rückenlehne 34a ist an die Sitzstrukturelemente 26a, 28a angebunden. Der Flugzeugsitz 10a bildet dabei eine Sitzrichtung aus. Die Sitzrichtung ist als die Richtung definiert, in der ein Passagier auf dem Flugzeugsitz 10a sitzt. Der Sitzrichtung steht orthogonal auf einer Rückenlehnenfläche der Rückenlehne 34a und verläuft parallel zu der Aufständerebene in Richtung eines vorderen Endes des Sitzbodens 32a.

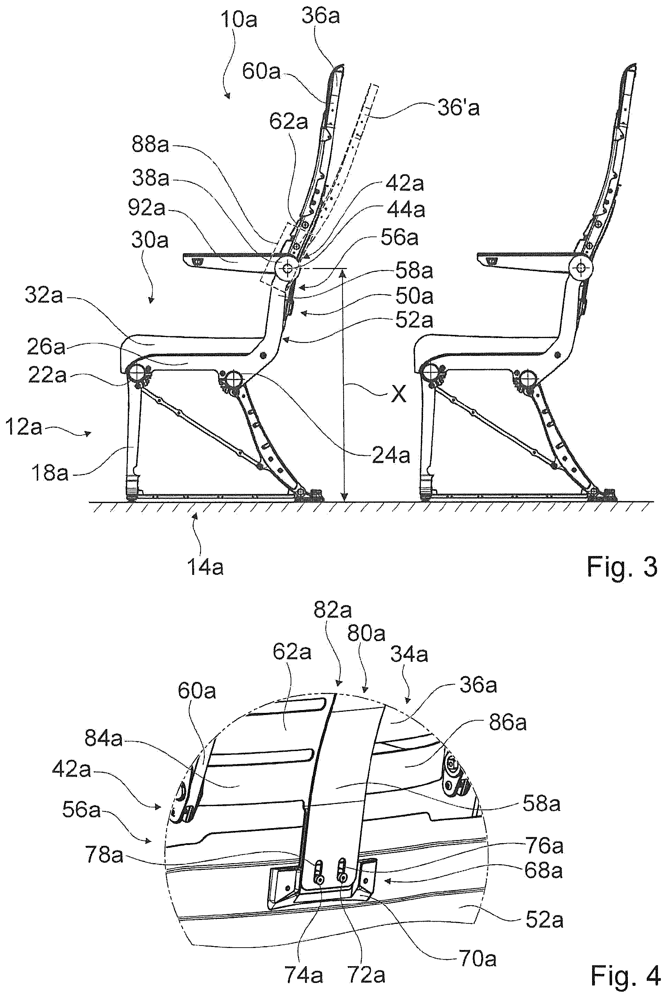

Die Rückenlehne 34a ist schwenkbar ausgebildet. Die Rückenlehne 34a ist dazu vorgesehen, zwischen einer aufrechten Sitzstellung und einer Komfortstellung verschwenkt zu werden. Die Rückenlehne 34a ist dazu vorgesehen relativ zu der Aufständereinheit 12a verschwenkt zu werden. Die Rückenlehne 34a ist relativ zu den Sitzstrukturelementen 26a, 28a verschwenkbar. Die Rückenlehne 34a weist ein schwenkbares Rückenlehnenelement 36a auf. Das schwenkbare Rückenlehnenelement 36a ist schwenkbar an der Aufständereinheit 12a gelagert. Das schwenkbare Rückenlehnenelement 36a ist schwenkbar an die Sitzstrukturelemente 26a, 28a angebunden. Die Sitzstrukturelemente 26a, 28a weisen jeweils eine Lagerstelle 38a, 40a zur Lagerung der Rückenlehne 34a auf. Die Lagerstellen 38a, 40a sind dazu vorgesehen, dass das schwenkbare Rückenlehnenelement 36a daran gelagert wird. Das schwenkbare Rückenlehnenelement 36a ist über die Lagerstellen 38a, 40a schwenkbar an die Sitzstrukturelemente 26a, 28a angebunden. Die Lagerstellen 38a, 40a sind als Lageraufnahmen ausgebildet. Die Lagerstellen 38a, 40a definieren eine Position, insbesondere eine Höhe einer Drehachse 44a, um die die Rückenlehne 34a, insbesondere das schwenkbare Rückenlehnenelement 36a, schwenkbar gelagert ist. In der Figur 3, die eine Seitenansicht des Flugzeugsitzes 10a darstellt, ist die Rückenlehne 34a schematisch in gestrichelter Form in der Komfortstellung dargestellt. Das schwenkbare Rückenlehnenelement 36a ist in der Figur 3 gestrichelt als schwenkbares Rückenlehnenelement 36a' in der Komfortstellung dargestellt. Das schwenkbare Rückenlehnenelement 36a' ist aus der aufrechten Sitzstellung um ca. 10 Grad entgegen der Sitzrichtung nach hinten in seine Komfortstellung verschwenkt. Grundsätzlich wäre es auch denkbar, dass das schwenkbare Rückenlehnenelement 36a' in der Komfortstellung lediglich um 5 Grad oder um 8 Grad aus der aufrechten Sitzstellung nach hinten verschwenkt ist.

Die Flugzeugsitzvorrichtung weist eine Lagervorrichtung 42a auf. Die Lagervorrichtung 42a ist dazu vorgesehen, die Rückenlehne 34a verschwenkbar zwischen der aufrechten Sitzstellung und der Komfortstellung zu lagern. Die Lagervorrichtung 42a ist dazu vorgesehen, das schwenkbare Rückenlehnenelement 36a verschwenkbar zwischen der aufrechten Sitzstellung und der Komfortstellung zu lagern. Die Lagervorrichtung 42a bildet die Drehachse 44a aus. Das schwenkbare Rückenlehnenelement 36a ist mittels der Lagervorrichtung 42a um die Drehachse 44a schwenkbar. Die Lagervorrichtung 42a weist zwei Lagerbolzen 46a, 48a auf. Die Lagerbolzen 46a, 48a bilden die Drehachse 44a aus. Die Lagerbolzen 46a, 48a sind jeweils mit einer der Lagerstellen 38a, 40a eines der Sitzstrukturelemente 26a, 28a verbunden. Die Lagerbolzen 46a, 48a sind vorzugsweise drehfest an der jeweiligen Lagerstelle 38a, 40a angebracht. Das schwenkbare Rückenlehnenelement 36a ist drehbar an den Lagerbolzen 46a, 48a gelagert. Vorzugsweise ist das schwenkbare Rückenlehnenelement 36a über eine Gleitlagerung schwenkbar an den Lagerbolzen 46a, 48a gelagert. Grundsätzlich wäre es auch denkbar, dass das schwenkbar Rückenlehnenelement 36a mittels eines Wälzlagers drehbar an den Lagerbolzen 46a, 48a gelagert ist. Grundsätzlich wäre es ebenso denkbar, dass die Lagerbolzen 46a, 48a über eine geeignete Lagerung drehbar an die jeweiligen Lagerstellen 38a, 40a der Sitzstrukturelemente 26a, 28a angebunden sind.

Das schwenkbare Rückenlehnenelement 36a weist einen Rückenlehnenrahmen 60a auf. Der Rückenlehnenrahmen 60a bildet eine tragende Struktur des schwenkbaren Rückenlehnenelements 36a aus. Der Rückenlehnenrahmen 60a ist als ein umlaufender Rahmen ausgebildet. Der Rückenlehnenrahmen 60a ist vorzugsweise im Wesentlichen U-förmig ausgebildet. Der Rückenlehnenrahmen 60a weist zwei seitliche Rahmenelemente und ein oberes Rahmenelement auf, das die beiden seitlichen Rahmenelemente an einem oberen Ende des Rückenlehnenrahmens 60a verbindet. An einem unteren Ende ist der Rückenlehnenrahmen 60a vorzugsweise offen. Das untere Ende des Rückenlehnenrahmens 60a bildet ein unteres Ende des schwenkbaren Rückenlehnenelements 36a aus. Die Lagerbolzen 46a, 48a sind jeweils an einem unteren Ende des Rückenlehnenrahmens 60a an dem zugewandten seitlichen Rahmenelement an den Rückenlehnenrahmen 60a des schwenkbaren Rückenlehnenelements 36a angebunden.

Das schwenkbare Rückenlehnenelement 36a weist ein Schalenelement 62a auf. Das Schalenelement 62a ist als ein plattenartiges Element ausgebildet. Das Schalenelement 62a ist aus einem faserverstärkten Kunststoff gebildet. Das Schalenelement 62a ist beispielsweise aus einem GFK oder einem CFK gebildet. Das Schalenelement 62a ist dazu vorgesehen, die Rückenlehnenabstützfläche des schwenkbaren Rückenlehnenelement 36a auszubilden. Das Schalenelement 62a ist in einem von dem Rückenlehnenrahmen 60a aufgespannten Innenbereich des schwenkbaren Rückenlehnenelements 36a angeordnet. Das Schalenelement 62a ist fest mit dem Rückenlehnenrahmen 60a des schwenkbaren Rückenlehnenelements 36a verbunden. Das Schalenelement 62a ist zumindest in Teilbereichen mit den seitlichen Rahmenelementen des Rückenlehnenrahmens 60a fest verbunden. Vorzugsweise ist das Schalenelement 62a mit einem oberen Ende an das obere Rahmenelement des Rückenlehnenrahmens 60a angebunden. Das Schalenelement 62a bildet vorzugsweise eine Rückenlehnenkontur des schwenkbaren Rückenlehnenelements 36a aus. Das Schalenelement 62a ist dazu vorgesehen, dass auf ihm ein Polsterelement der Rückenlehne 34a angebracht wird.

Das schwenkbare Rückenlehnenelement 36a weist einen Querträger 66a auf. Der Querträger 66a ist in einem Bereich oberhalb der Lagerstellen 38a, 40a angeordnet. Der Querträger 66a ist in Vertikalrichtung betrachtet in etwa in einer Mitte des schwenkbaren Rückenlehnenelements 36a angeordnet. Der Querträger 66a ist zwischen den seitlichen Rahmenelementen des Rückenlehnenrahmens 60a angebunden. Der Querträger 66a erstreckt sich zwischen den seitlichen Rahmenelementen des Rückenlehnenrahmens 60a. Der Querträger 66a ist jeweils fest mit dem jeweiligen seitlichen Rahmenelement des Rückenlehnenrahmens 60a verbunden. Der Querträger 66a ist vorzugsweise mit den seitlichen Rahmenelementen des Rückenlehnenrahmens 60a verschraubt. Grundsätzlich wäre es auch denkbar, dass der Querträger 66a mit den seitlichen Rahmenelementen des Rückenlehnenrahmens 60a verklebt, oder auf eine andere Weise form-, kraft- und/oder stoffschlüssig verbunden ist. Der Querträger 66a ist vorzugsweise zur Versteifung des Rückenlehnenrahmens 60a, insbesondere zur Versteifung des gesamten schwenkbaren Rückenlehnenelements 36a vorgesehen. Vorzugsweise kann der Querträger 66a dazu vorgesehen sein, dass an ihm weitere Anbauelemente der Rückenlehne 34a daran befestigt sind. Beispielsweise wäre es denkbar, dass an den Querträger 66a ein schwenkbares Tischelement, ein Cupholder, ein Tablethalter oder eine hohe Literaturtasche an die Rückenlehne 34a, insbesondere das schwenkbare Rückenlehnenelement 36a angebunden sind.

Die Rückenlehne 34a ist als eine Rückenlehne mit einem hohen Rückenlehnendrehpunkt ausgebildet. Der Rückenlehnendrehpunkt ist von der Drehachse 44a der Lagervorrichtung 42a gebildet. Der Rückenlehnendrehpunkt, also die Drehachse 44a der Lagervorrichtung 42a, ist oberhalb eines Kniebereichs 50a des Flugzeugsitzes 10a angeordnet. Der Kniebereich 50a des Flugzeugsitzes 10a erstreckt sich ausgehend von dem Kabinenboden bis auf eine Höhe von 650 mm. Der Kniebereich 50a ist als ein Bereich angeordnet, in dem ein hinter dem Flugzeugsitz 10a sitzender Passagier seine Knie anordnen kann.

Zur Ausbildung des hohen Rückenlehnendrehpunkts bilden die Sitzstrukturelemente 26a, 28a ihre Lagerstellen 38a, 40a zur Lagerung der Rückenlehne 34a in einem hohen Bereich aus. Die Sitzstrukturelemente 26a, 28a bilden ihre Lagerstellen 38a, 40a jeweils an einem oberen Ende aus. Die Sitzstrukturelemente 26a, 28a bilden ihre Lagerstellen 38a, 40a an ihrem der Aufständerebene abgewandten oberen Ende des hinteren, zweiten Teilbereichs aus. Die Lagerstellen 38a, 40a der Sitzstrukturelemente 26a, 28a sind oberhalb des Kniebereichs 50a angeordnet. Die Lagerstellen 38a, 40a der Sitzstrukturelemente 26a, 28a sind in der Armlehnenhöhe X angeordnet. Die Lagerstellen 38a, 40a zur Lagerung des schwenkbaren Rückenlehnenelements 36a definieren die Drehachse 44a, die oberhalb des Kniebereichs 50a der Rückenlehne 34a angeordnet ist.

Das schwenkbare Rückenlehnenelement 36a bildet die Rückenlehne 34a oberhalb der Lagerstellen 38a, 40a der Sitzstrukturelemente 26a, 28a aus. Das schwenkbare Rückenlehnenelement 36a bildet lediglich einen oberen Bereich der Rückenlehne 34a aus. Das schwenkbare Rückenlehnenelement 36a ist als ein oberes Rückenlehnenelement ausgebildet. Das schwenkbare Rückenlehnenelement 36a bildet in einem Bereich oberhalb der Armlehnenhöhe X die Rückenlehnenabstützfläche der Rückenlehne 34a aus. Das schwenkbare Rückenlehnenelement 36a ist vorzugsweise im Wesentlichen lediglich in einem Bereich oberhalb der Armlehnenhöhe X angeordnet. Lediglich Bereiche zur Anbindung des Rückenlehnenelements 36a an die Sitzstrukturelemente 26a, 28a erstreckt sich unterhalb der Armlehnenhöhe X.

Die Rückenlehne 34a weist ein unteres Rückenlehnenelement 52a auf. Das untere Rückenlehnenelement 52a ist starr ausgebildet. Das untere Rückenlehnenelement 52a bist vorzugsweise unbeweglich ausgebildet. Das untere Rückenlehnenelement 52a bildet einen unteren Bereich der Rückenlehne 34a aus. Das untere Rückenlehnenelement 52a bildet in dem unteren Bereich der Rückenlehne 34a die Rückenlehnenabstützfläche aus. Das untere Rückenlehnenelement 52a ist fest an den Sitzstrukturelemente 26a, 28a befestigt. Das untere Rückenlehnenelement 52a erstreckt sich im Wesentlichen zwischen einer Höhe der Querträger 22a, 24a der Aufständereinheit 12a und einem unteren Ende des schwenkbaren Rückenlehnenelements 36a. Das untere Rückenlehnenelement 52a erstreckt sich vorzugsweise bis knapp unterhalb der Armlehnenhöhe X. Das untere Rückenlehnenelement 52a erstreckt sich von einer Höhe der Querträger 22a, 24a bis auf eine Höhe von ca. 450 mm bis 700 mm von der Aufständerebene gemessen. Das untere Rückenlehnenelement 52a erstreckt sich vorzugsweise bis auf eine Höhe von 600 mm von der Aufständerebene gemessen.

Das untere Rückenlehnenelement 52a ist von einem Schalenelement gebildet. Das untere Rückenlehnenelement 52a ist von einer Schale aus einem faserverstärkten Kunststoff gebildet. Beispielsweise ist es denkbar, dass das untere Rückenlehnenelement 52a von einer GFK- oder einer CFK- Schale ausgebildet ist. Das untere Rückenlehnenelement 52a weist vorzugsweise eine leicht gekrümmte Form auf. Das untere Rückenlehnenelement 52a ist seitlich über jeweils zwei Befestigungselemente 54a mit einem der Sitzstrukturelemente 26a, 28a verbunden. Grundsätzlich wäre es auch denkbar, dass das untere Rückenlehnenelement 52a zumindest teilweise einstückig mit einem Sitzboden 32a, insbesondere einer Sitzschale ausgebildet ist. Grundsätzlich wäre es ebenso denkbar, dass das untere Rückenlehnenelement 52a zumindest teilweise oder ganz von einer Bespannung ausgebildet ist.

Die Flugzeugsitzvorrichtung weist ein Rückstellmodul 56a auf. Das Rückstellmodul 56a ist zu einer Rückstellung der Rückenlehne 34a aus der Komfortstellung in eine aufrechte Sitzstellung vorgesehen. Das Rückstellmodul 56a ist zu einer Rückstellung der Rückenlehne 34a aus ihrer verschwenkten Sitzstellung in die aufrechte Sitzstellung vorgesehen. Das Rückstellmodul 56a ist zur Rückstellung des schwenkbaren Rückenlehnenelements 36a vorgesehen. Das Rückstellmodul 56a ist zur Rückstellung der Rückenlehne 34a, insbesondere zur Rückstellung des schwenkbaren Rückenlehnenelements 36a, dazu vorgesehen, eine Rückstellkraft bereitzustellen. Das Rückstellmodul 56a ist zur Rückstellung der Rückenlehne 34a dazu vorgesehen, eine Rückstellkraft auf das schwenkbare Rückenlehnenelement 36a auszuüben. Das Rückstellmodul 56a ist zumindest im Wesentlichen in einem Bereich oberhalb der Lagerstellen 38a, 40a der Sitzstrukturelemente 26a, 28a angeordnet. Das Rückstellmodul 56a ist zumindest im Wesentlichen oberhalb, also auf einer der Aufständerebene abgewandten Seite, der Armlehnenhöhe X angeordnet. Das Rückstellmodul 56a ist zumindest zu einem Großteil oberhalb des Kniebereichs 50a der Rückenlehne 34a angeordnet. Durch diese Anordnung des Rückstellmoduls 56a kann der Kniebereich 50a der Rückenlehne 34a vorzugsweise im Wesentlichen frei von Bauteilen des Rückstellmoduls 56a bleiben. Insbesondere können größere Bauteile des Rückstellmoduls 56a vorteilhaft oberhalb der Armlehnenhöhe X und damit außerhalb des Kniebereichs 50a der Rückenlehne 34a angeordnet werden.

Das Rückstellmodul 56a weist zur Bereitstellung einer Rückstellkraft ein Federelement 58a auf. Grundsätzlich wäre es auch denkbar, dass das Rückstellmodul 56a zur Bereitstellung der Rückstellkraft mehrere Federelemente 58a aufweist. Das Federelement 58a ist dazu vorgesehen, eine Federkraft auf das schwenkbare Rückenlehnenelement 36a auszuüben, um dieses in Richtung seiner aufrechten Sitzstellung zu schwenken. Die Federkraft des Federelements 58a bildet die Rückstellkraft des Rückstellmoduls 56a. Das Federelement 58a ist funktionstechnisch zwischen dem schwenkbaren Rückenlehnenelement 36a und der Aufständereinheit 12a angeordnet. Das Federelement 58a ist dazu vorgesehen, sich an der Aufständereinheit 12a mit einer ersten Seite abzustützen. Das Federelement 58a ist dazu vorgesehen, sich mit einer zweiten Seite an der Rückenlehne 34a, insbesondere an dem schwenkbaren Rückenlehnenelement 36a, abzustützen. Dadurch kann das Federelement 58a eine Rückstellkraft von der feststehenden Aufständereinheit 12a auf das schwenkbare Rückenlehnenelement 36a übertragen.

Das Federelement 58a ist als ein Blattfederelement ausgebildet. Das als Blattfederelement ausgebildete Federelement 58a ist als ein längliches Bauteil ausgebildet. Das als Blattfederelement ausgebildete Federelement 58a ist funktionstechnisch zwischen dem unterem Rückenlehnenelement 52a und dem schwenkbaren Rückenlehnenelement 36a angeordnet. Das als Blattfederelement ausgebildete Federelement 58a ist mit seinem ersten, unteren Ende an dem unteren Rückenlehnenelement 52a angebunden. Das als Blattfederelement ausgebildete Federelement 58a stützt sich mit seinem unteren Ende an dem unteren Rückenlehnenelement 52a ab. Das als Blattfederelement ausgebildete Federelement 58a ist in einem oberen Bereich des unteren Rückenlehnenelements 52a angebunden. Das als Blattfederelement ausgebildete Federelement 58a erstreckt sich also teilweise in einen Bereich unterhalb der Drehachse 44a, also der Armlehnenhöhe X. Das als Blattfederelement ausgebildete Federelement 58a ist mit einem zweiten, oberen Ende an dem schwenkbaren Rückenlehnenelement 36a angebunden. Das als Blattfederelement ausgebildete Federelement 58a stützt sich mit seinem zweiten, oberen Ende an dem schwenkbaren Rückenlehnenelement 36a ab. Das als Blattfederelement ausgebildete Federelement 58a erstreckt sich vorzugsweise bis in einen mittleren Bereich des schwenkbaren Rückenlehnenelements 52a.

Zur Anbindung des als Blattfederelement ausgebildeten Federelements 58a an das schwenkbare Rückenlehnenelement 36a weist das Rückstellmodul 56a eine erste Befestigungseinheit 64a auf. Über die erste Befestigungseinheit 64a ist das als Blattfederelement ausgebildete Federelement 58a fest an das schwenkbare Rückenlehnenelement 36a angebunden. Über die erste Befestigungseinheit 64a ist das als Blattfederelement ausgebildete Federelement 58a starr und unbeweglich mit dem schwenkbaren Rückenlehnenelement 36a verbunden. Grundsätzlich wäre es auch denkbar, dass das als Blattfederelement ausgebildete Federelement 58a über die erste Befestigungseinheit 64a zumindest in einem Freiheitsgrad beweglich mit dem schwenkbaren Rückenlehnenelement 36a verbunden ist. Ferner wäre ebenso denkbar, dass das als Blattfederelement ausgebildete Federelement 58a mit seinem oberen Ende lediglich an dem schwenkbaren Rückenlehnenelement 36a anliegt. Dabei wäre denkbar, dass das als Blattfederelement ausgebildete Federelement 58a mit seinem oberen Ende auf dem schwenkbaren Rückenlehnenelement 36a, insbesondere auf einer Rückseite des Schalenelements 62a, gleitet. Das als Blattfederelement ausgebildete Federelement 58a ist zur Übertragung der Rückstellkraft an den Querträger 66a angebunden. Das als Blattfederelement ausgebildete Federelement 58a ist über die Befestigungseinheit 64a direkt an den Querträger 66a angebunden. Durch den Querträger 66a kann die von dem als Blattfederelement ausgebildeten Federelement 58a bereitgestellte Rückstellkraft gleichmäßig auf beide Seiten des schwenkbaren Rückenlehnenelements 36a übertragen werden.

Zur Anbindung des als Blattfederelement ausgebildeten Federelements 58a an das untere Rückenlehnenelement 52a weist das Rückstellmodul 56a eine zweite Befestigungseinheit 68a auf. Über die zweite Befestigungseinheit 68a ist das als Blattfederelement ausgebildete Federelement 58a verliersicher an das untere Rückenlehnenelement 52a angebunden. Über die zweite Befestigungseinheit 68a ist das als Blattfederelement ausgebildete Federelement 58a beweglich an das untere Rückenlehnenelement 52a angebunden. Die zweite Befestigungseinheit 68a weist einen Befestigungsgrundkörper 70a auf. Der Befestigungsgrundkörper 70a ist fest an eine Rückseite des unteren Rückenlehnenelements 52a angebunden. Der Befestigungsgrundkörper 70a der zweiten Befestigungseinheit 68a weist eine Aufnahme auf, die dazu vorgesehen ist, das als Blattfederelement ausgebildete Federelement 58a aufzunehmen. Das als Blattfederelement ausgebildete Federelement 58a ist in der Aufnahme des Befestigungsgrundkörpers 70a verschiebbar gelagert. Die Aufnahme des Befestigungsgrundkörpers 70a bildet eine Verschiebeachse aus, entlang der das als Blattfederelement ausgebildete Federelement 58a verschiebbar gelagert ist. Die Verschiebeachse ist in einem montierten Zustand vertikal ausgerichtet. Die Befestigungseinheit 68a weist zwei Befestigungselemente 72a, 74a auf, die das als Blattfederelement ausgebildete Federelement 58a an den Befestigungsgrundkörper 70a anbinden. Die Befestigungselemente 72a, 74a sind als Befestigungsschrauben ausgebildet. Grundsätzlich wäre es auch denkbar, dass die Befestigungselemente 72a, 74a auf eine andere Weise ausgebildet sind. Zur Anbindung an den Befestigungsgrundkörper 70a weist das als Blattfederelement ausgebildete Federelement 58a zwei Durchgangsnuten 76a, 78a auf. Die Befestigungselemente 72a, 74a sind zur Anbindung des als Blattfederelement ausgebildeten Federelements 58a durch die Durchgangsnuten 76a, 78a geführt.

Das als Blattfederelement ausgebildete Federelement 58a ist zumindest teilweise in das schwenkbare Rückenlehnenelement 36a integriert. Das als Blattfederelement ausgebildete Federelement 58a ist in das Schalenelement 62a des schwenkbaren Rückenlehnenelements 36a teilweise integriert. Das als Blattfederelement ausgebildete Federelement 58a ist dazu vorgesehen, in das Schalenelement 62a des schwenkbaren Rückenlehnenelements 36a aufgenommen zu werden. Das Schalenelement 62a des schwenkbaren Rückenlehnenelements 36a weist einen Mittelbereich 80a auf. Der Mittelbereich 80a ist in Bezug auf eine Querrichtung mittig zwischen den seitlichen Rahmenelementen des Rückenlehnenrahmens 60a angeordnet. Das als Blattfederelement ausgebildete Federelement 58a ist zumindest teilweise in den Mittelbereich 80a des Schalenelements 62a integriert. Das Schalenelement 62a weist auf seiner Rückseite in dem Mittelbereich 80a einen Aufnahmebereich 82a für das als Blattfederelement ausgebildete Federelement 58a auf. Der Aufnahmebereich 82a erstreckt sich in dem Mittelbereich 80a, von einem unteren Ende des Schalenelements 62a bis in einen Bereich unterhalb des Querträgers 66a. Grundsätzlich ist es ebenso denkbar, dass das als Blattfederelement ausgebildete Federelement 58a in dem Mittelbereich 80a lediglich auf der Rückseite des Schalenelements 62a aufliegt. Ebenso wäre denkbar, dass das als Blattfederelement ausgebildete Federelement 58a das Schalenelement 62a in dem Mittelbereich 80a nicht kontaktiert.

Das schwenkbare Rückenlehnenelement 36a weist in einem unteren Bereich sich von dem Mittelbereich 80a jeweils seitlich nach außen erstreckende elastische Rippen 84a, 86a auf. Beispielhaft sind in dem Ausführungsbeispiel je Seite jeweils drei elastische Rippen 84a, 86a dargestellt. Die elastischen Rippen 84a, 86a erstrecken sich von dem Mittelbereich 80a jeweils bis an die seitlichen Rahmenelemente des Rückenlehnenrahmens 60a. Die auf einer Seite des Mittelbereichs 80a benachbart angeordneten Rippen 84a, 86a sind in Vertikalrichtung jeweils voneinander beabstandet.

Die elastischen Rippen 84a, 86a sind jeweils unabhängig voneinander elastisch verformbar. Die elastischen Rippen 84a, 86a weisen jeweils eine in Sitzrichtung nach vorne gekrümmte Form auf. Die elastischen Rippen 84a, 86a sind vorzugsweise einstückig mit dem Schalenelement 62a, insbesondere mit dem Mittelbereich 80a, ausgebildet. Grundsätzlich wäre es ebenso denkbar, dass die elastischen Rippen 84a, 86a zumindest teilweise getrennt von dem Schalenelement 62a ausgebildet sind. Dabei wäre es insbesondere denkbar, dass die Rippen 84a, 86a teilweise als separate Elemente ausgebildet sind, die mit dem Schalenelement 62a, insbesondere dem Mittelbereich 80a des Schalenelements 62a, verbunden sind. Dabei ist insbesondere denkbar, dass die getrennt ausgebildeten Rippen 84a, 86a demontierbar an dem Schalenelement 62a anbindbar sind. Dadurch könnten die Rippen 84a, 86a vorteilhaft einfach ausgetauscht werden, wenn diese beschädigt sind. Vorzugsweise können durch die demontierbar ausgebildeten Rippen 84a, 86a an unterschiedlichen Stellen des schwenkbaren Rückenlehnenelements 36a besonders einfach Rippen 84a, 86a mit unterschiedlichen Steifigkeiten angebracht werden. Dadurch kann das schwenkbare Rückenlehnenelement 36a in unterschiedlichen Teilbereichen besonders einfach und unterschiedlich steif ausgebildet werden. Vorzugsweise können durch die demontierbar ausgebildeten Rippen 84a, 86a an unterschiedlichen Stellen des schwenkbaren Rückenlehnenelements 36a einfach unterschiedlich ausgeformte Rippen 84a, 86a angeordnet werden. Dadurch kann das schwenkbare Rückenlehnenelement 36a besonders einfach mit unterschiedlichen bzw. anpassbaren Ergonomien ausgebildet werden.

Das Rückstellmodul 56a weist eine Verriegeleinheit 88a auf. Die Verriegeleinheit 88a ist dazu vorgesehen, das Rückstellmodul 56a zu verriegeln, bzw. zu entriegeln. Die Verriegeleinheit 88a ist dazu vorgesehen, die Rückenlehne 34a, also das schwenkbare Rückenlehnenelement 36a, zumindest in der aufrechten Sitzstellung und in der Komfortstellung zu verriegeln. Vorzugsweise ist es ebenso denkbar, dass die Verriegeleinheit 88a dazu vorgesehen ist, das schwenkbare Rückenlehnenelement 36a in weiteren Stellungen zu verriegeln. Die weiteren Stellungen des schwenkbaren Rückenlehnenelements 36a sind dabei insbesondere als verschwenkte Stellungen ausgebildet, die zwischen der aufrechten Sitzstellung und der Komfortstellung liegen. Die Verriegeleinheit 88a weist einen Verriegelzustand und einen Entriegelzustand auf. In ihrem Verriegelzustand verriegelt die Verriegeleinheit 88a das Rückstellmodul 56a und das Rückstellmodul 56a kann keine Rückstellkraft auf das schwenkbare Rückenlehnenelement 36a ausüben. In ihrem Entriegelzustand entriegelt die Verriegeleinheit 88a das Rückstellmodul 56a und das Rückstellmodul 56a kann die Rückstellkraft auf das schwenkbare Rückenlehnenelement 36a ausüben. Die Verriegeleinheit 88a ist dazu vorgesehen, das schwenkbare Rückenlehnenelement 36a in seinem Verriegelzustand in seiner aktuellen Stellung zu verriegeln. In dem Verriegelzustand der Verriegeleinheit 88a ist das schwenkbare Rückenlehnenelement 36a in seiner aktuellen Stellung arretiert. In dem Verriegelzustand der Verriegeleinheit 88a ist das schwenkbare Rückenlehnenelement 36a nicht verschwenkbar. In dem Verriegelzustand der Verriegeleinheit 88a ist das schwenkbare Rückenlehnenelement 36a vorzugsweise relativ zu der Aufständereinheit 12a fixiert. Vorzugsweise ist das schwenkbare Rückenlehnenelement 36a in dem Verriegelzustand der Verriegeleinheit 88a relativ zu den Sitzstrukturelementen 26a, 28a fest fixiert.

Die Verriegeleinheit 88a ist funktionstechnisch vorzugsweise zwischen dem schwenkbaren Rückenlehnenelement 36a, insbesondere dem Rückenlehnenrahmen 60a, und einem der Sitzstrukturelemente 26a, 28a angeordnet. Grundsätzlich ist es ebenso denkbar, dass die Verriegeleinheit 88a funktionstechnisch zwischen dem Rückenlehnenrahmen 60a und den beiden Sitzstrukturelementen 26a, 28a angeordnet ist. Die Verriegeleinheit 88a weist vorzugsweise zumindest ein Verriegelelement auf. Das Verriegelelement der Verriegeleinheit 88a ist vorzugsweise dazu vorgesehen, das Rückstellmodul 56a in dem Verriegelzustand der Verriegeleinheit 88a zu verriegeln. Das Verriegelelement der Verriegeleinheit 88a ist vorzugsweise dazu vorgesehen, direkt das schwenkbare Rückenlehnenelement 36a zu verriegeln. Das Verriegelelement der Verriegeleinheit 88a ist zu einer formschlüssigen Verriegelung des schwenkbaren Rückenlehnenelements 36a vorgesehen. Das Verriegelelement der Verriegeleinheit 88a ist dazu vorgesehen, in dem Verriegelzustand der Verriegeleinheit 88a formschlüssig in ein korrespondierendes Formschlusselement der Verriegeleinheit 88a einzugreifen. Die Verriegeleinheit 88a weist für jede arretierbare Stellung, also für die aufrechten Sitzstellung und für die Komfortstellung des schwenkbaren Rückenlehnenelements 36a, ein korrespondierendes Formschlusselement auf. Grundsätzlich wäre es auch denkbar, dass die Verriegeleinheit 88a dazu vorgesehen ist, das schwenkbare Rückenlehnenelement 36a kraftschlüssig zu verriegeln und dazu zumindest ein Kraftschlusselement aufweist. Grundsätzlich wäre es ebenso denkbar, dass die Verriegeleinheit 88a zu einer kraft- und formschlüssigen Verriegelung des schwenkbaren Rückenlehnenelements 36a vorgesehen ist. Die Verriegeleinheit 88a weist ein Betätigungselement 90a auf, mittels dessen die Verriegeleinheit 88a von dem Verriegelzustand in den Entriegelzustand gebracht verstellt werden kann. Das Betätigungselement 90a ist dazu vorgesehen, von einem auf dem Flugzeugsitz 10a sitzenden Passagier betätigt zu werden. Das Betätigungselement 90a ist vorzugsweise als ein Druckknopf ausgebildet. Das Betätigungselement 90a ist über ein geeignetes Verbindungselement, wie insbesondere einen Bowdenzug, mit dem Verriegelelement der Verriegeleinheit 88a gekoppelt, um dieses zwischen seiner Verriegelstellung und Entriegelstellung zu verstellen.

Die Verriegeleinheit 88a ist oberhalb des Kniebereichs 50a der Rückenlehne 34a angeordnet. Die Verriegeleinheit 88a ist vorzugsweise in einem Bereich oberhalb der Lagerstellen 38a, 40a der Sitzstrukturelemente 26a, 28a angeordnet. Die Verriegeleinheit 88a ist vorzugsweise im Wesentlichen, also zu einem Großteil, oberhalb der Armlehnenhöhe X angeordnet. Die Verriegeleinheit 88a ist in einem Bereich des schwenkbaren Rückenlehnenelements 36a angeordnet. Die Verriegeleinheit 88a ist vorzugsweise außerhalb eines Bereichs des unteren Rückenlehnenelements 52a angeordnet. Insbesondere das Verriegelelement und die korrespondierend ausgebildeten Formschlusselemente der Verriegeleinheit 88a zur Verriegelung des schwenkbaren Rückenlehnenelements 36a sind oberhalb der Lagerstellen 38a, 40a und der Armlehnenhöhe X angeordnet. Einzelne Bestandtele der Verriegeleinheit 88a, wie insbesondere das Betätigungselement 90a, sowie ein Bowdenzug können auch teilweise unterhalb der Armlehnenhöhe X angeordnet sein.

Die Flugzeugsitzvorrichtung weist zwei Armlehnen 92a, 94a auf. Die Armlehnen 92a, 94a sind Teil des Flugzeugsitzes 10a der Flugzeugsitzreihe 14a. Die Armlehnen 92a, 94a sind jeweils seitlich des Sitzbereichs 30a des Flugzeugsitzes 10a angeordnet. Die Armlehnen 92a, 94a sind auf der Armlehnenhöhe X angebunden. Die Armlehnen 92a, 94a sind mit einem hinteren Ende in der Armlehnenhöhe X an die Aufständereinheit 12a angebunden. Die Armlehnen 92a, 94a sind über die Sitzstrukturelemente 26a, 28a angebunden. Die Armlehnen 92a, 94a sind über die Lagerstellen 38a, 40a der als Sitzteiler ausgebildeten Sitzstrukturelemente 26a, 28a an den Flugzeugsitz 10a angebunden. Die Armlehnen 92a, 94a sind über die Lagerbolzen 46a, 48a der Lagervorrichtung 42a der Rückenlehne 34a an die Sitzstrukturelemente 26a, 28a angebunden. Die Armlehnen 92a, 94a sind über die gleichen Lagerbolzen 46a, 48a an die Sitzstrukturelemente 26a, 28a angebunden wie das schwenkbare Rückenlehnenelement 36a. Die Armlehnen 92a, 94a sind vorzugsweise schwenkbar an die Sitzstrukturelemente 26a, 28a angebunden. Die Armlehnen 92a, 94a sind über die gleiche Drehachse 44a schwenkbar wie das schwenkbare Rückenlehnenelement 36a. Grundsätzlich wäre es auch denkbar, dass die Armlehnen 92a, 94a drehfest an die Sitzstrukturelemente 26a, 28a angebunden sind. Das Betätigungselement 90a der Verriegeleinheit 88a ist vorzugsweise in eine der Armlehnen 92a, 94a eingebracht.

Alternativ wäre es auch denkbar, dass das als Blattfederelement ausgebildete Federelement 58a direkt an die Aufständereinheit 12a angebunden ist. Dabei wäre es denkbar, dass das als Blattfederelement ausgebildete Federelement 58a anstatt an das untere Rückenlehnenelement 52a direkt an den hinteren Querträger 24a der Aufständereinheit 12a angebunden ist. Dabei wäre es denkbar, dass das als Blattfederelement ausgebildete Federelement 58a in einem seitlichen Bereich, direkt im Bereich eines der seitlich angeordneten Sitzstrukturelemente 26a, 28a, angeordnet ist. Dadurch könnte ein Mittelbereich des Kniebereichs 50a der Rückenlehne 34a vorteilhaft frei von dem Federelement 58a ausgebildet werden.

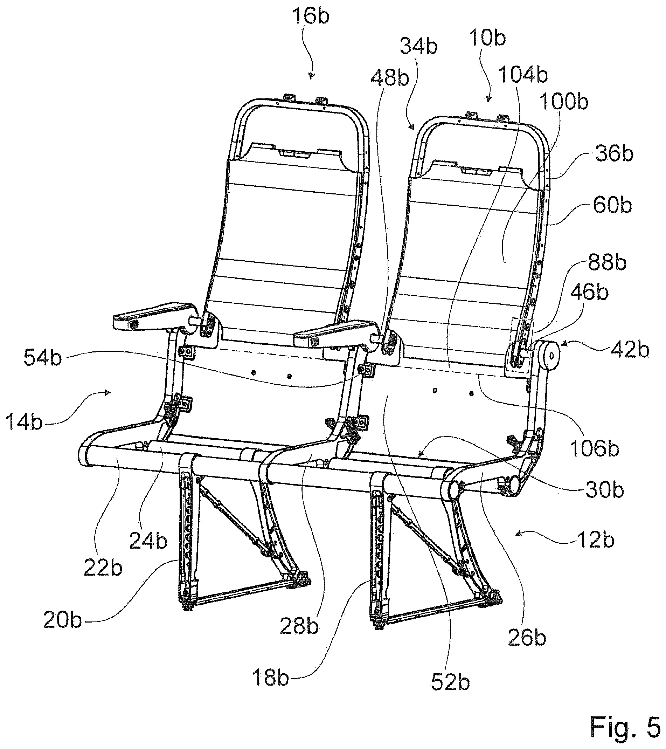

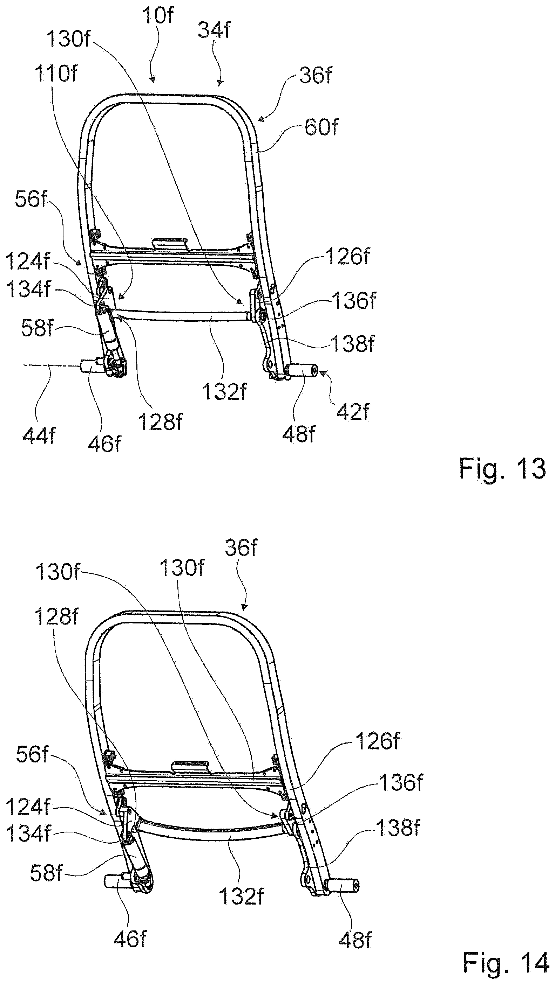

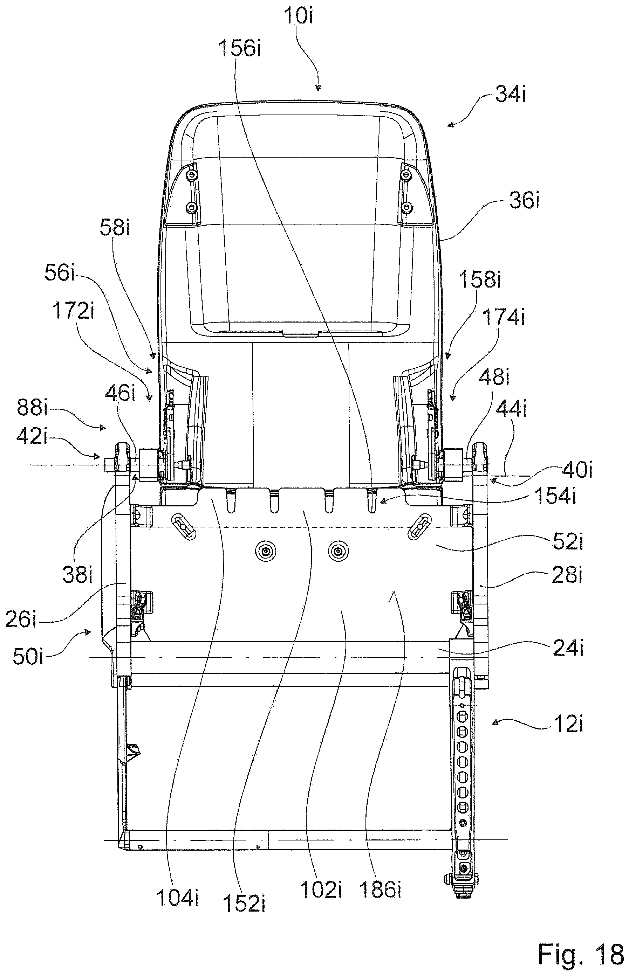

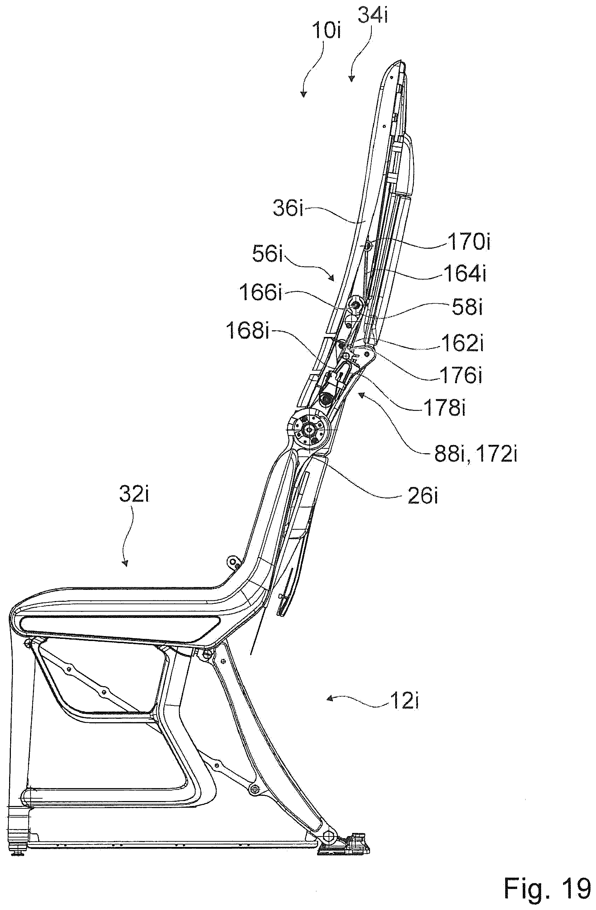

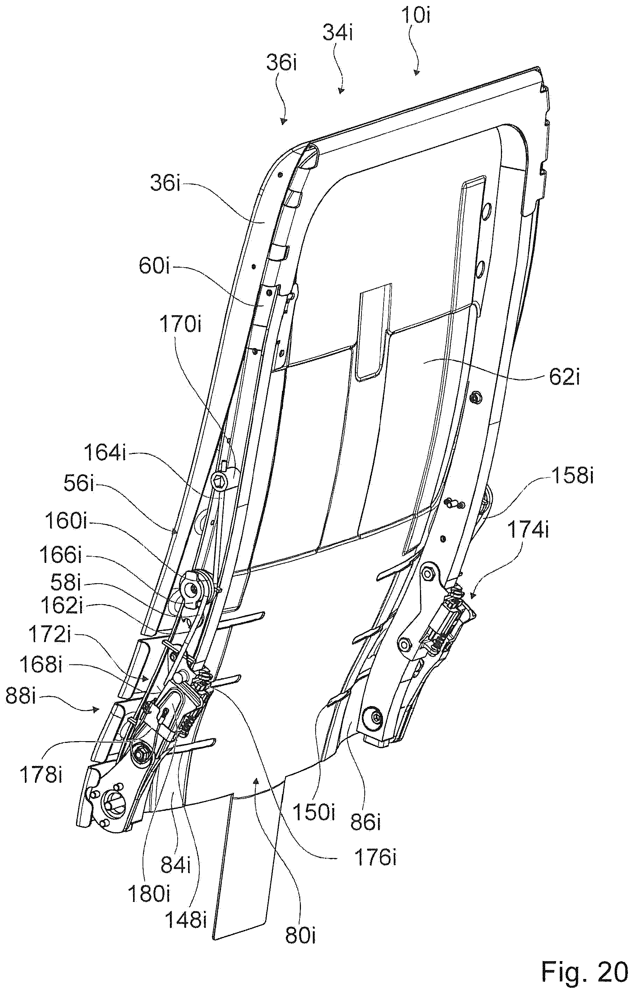

In den Figuren 5 bis 22 sind zehn weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 4, verwiesen werden kann. Zur Unterscheidung der Ausführungsbeispiele ist der Buchstabe a den Bezugszeichen des Ausführungsbeispiels in Fig. 1 bis 4 nachgestellt. In den Ausführungsbeispielen der Fig. 5 bis 22 ist der Buchstabe a durch die Buchstaben b bis k ersetzt.

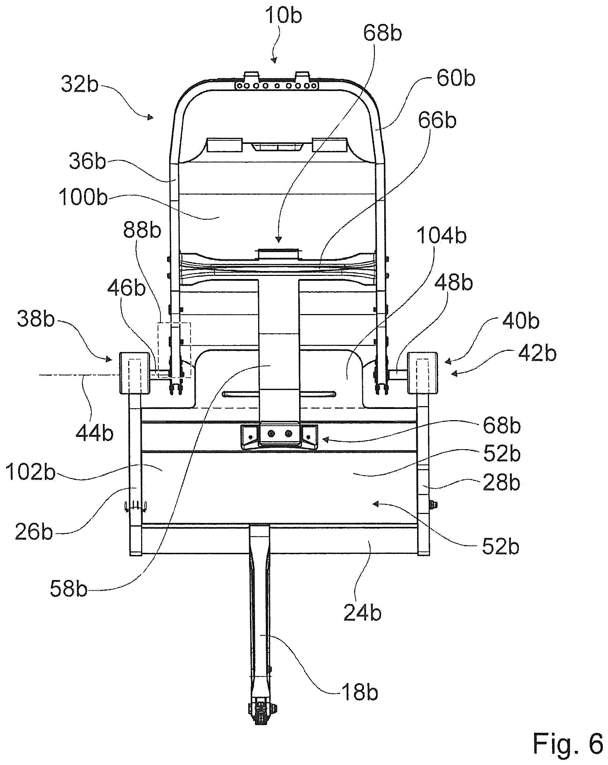

Die Figuren 5 und 6 zeigen ein zweites Ausführungsbeispiel einer erfindungsgemäßen Flugzeugsitzvorrichtung. Die Flugzeugsitzvorrichtung ist dabei Teil eines Flugzeugsitzes 10b. Der Flugzeugsitz 10b ist in einem montierten Zustand in einer Flugzeugkabine eines Flugzeugs aufgeständert. Die Flugzeugsitzvorrichtung weist eine Aufständereinheit 12b auf. Mittels der Aufständereinheit 12b ist der Flugzeugsitz 10b auf dem Kabinenboden der Flugzeugkabine aufständerbar. Der Flugzeugsitz 10b ist als ein Teil einer Flugzeugsitzreihe 14b ausgebildet. Die beispielhaft gezeigte Flugzeugsitzreihe 14b weist einen zweiten Flugzeugsitz 16b auf. Die Aufständereinheit 12b ist dabei als eine gemeinsame Aufständereinheit der Flugzeugsitze 10b, 16b einer Flugzeugsitzreihe 14b ausgebildet. Die Aufständereinheit 12b umfasst zwei Sitzfüße 18b, 20b. Die Aufständereinheit 12b weist zwei Querträger 22b, 24b auf.

Die Flugzeugsitzvorrichtung weist zwei Sitzstrukturelemente 26b, 28b auf. Die zwei Sitzstrukturelemente 26b, 28b sind jeweils auf einer Seite eines Sitzbereichs 30b der Flugzeugsitzvorrichtung angeordnet. Die zwei Sitzstrukturelemente 26b, 28b sind jeweils seitlich eines Sitzbereichs 30b, den der Flugzeugsitz 10b ausbildet, angeordnet. Die Sitzstrukturelemente 26b, 28b sind als Sitzteiler ausgebildet. Die Sitzstrukturelemente 26b, 28b sind an den Querträgern 22b, 24b angeordnet. Die Sitzstrukturelemente 26b, 28b sind im Wesentlichen L-förmig ausgebildet. Die Sitzstrukturelemente 26b, 28b erstrecken sich also in ihrem hinteren Bereich nach oben, von der Aufständereinheit 12b, insbesondere der Aufständerebene, weg. Die Sitzstrukturelemente 26b, 28b erstrecken sich in ihrem hinteren Bereich nach oben bis im Wesentlichen auf eine Armlehnenhöhe X. Die Sitzstrukturelemente 26b, 28b erstrecken sich bis auf eine Armlehnenhöhe X des Flugzeugsitzes 10b.

Die Flugzeugsitzvorrichtung umfasst eine Rückenlehne 34b. Die Rückenlehne 34b ist dazu vorgesehen, dass eine Person, die auf dem Flugzeugsitz 10b sitzt, dessen Teil die Flugzeugsitzvorrichtung ist, ihren Rücken an der Rückenlehne 34b abstützen kann. Die Rückenlehne 34b ist schwenkbar zu der Aufständereinheit 12b angeordnet. Die Rückenlehne 34b ist an die Sitzstrukturelemente 26b, 28b angebunden. Die Rückenlehne 34b ist dazu vorgesehen, zwischen einer aufrechten Sitzstellung und einer Komfortstellung verschwenkt zu werden. Die Rückenlehne 34b weist ein schwenkbares Rückenlehnenelement 36b auf. Das schwenkbare Rückenlehnenelement 36b ist schwenkbar an der Aufständereinheit 12b gelagert. Das schwenkbare Rückenlehnenelement 36b ist schwenkbar an den Sitzstrukturelementen 26b, 28b angebunden. Die Sitzstrukturelementen 26b, 28b weisen jeweils eine Lagerstelle 38b, 40b zur Lagerung der Rückenlehne 34b auf. Die Lagerstellen 38b, 40b sind dazu vorgesehen, dass das schwenkbare Rückenlehnenelement 36b daran gelagert wird.

Die Flugzeugsitzvorrichtung weist eine Lagervorrichtung 42b auf. Die Lagervorrichtung 42b ist dazu vorgesehen, die Rückenlehne 34b verschwenkbar zwischen der aufrechten Sitzstellung und der Komfortstellung zu lagern. Die Lagervorrichtung 42b ist dazu vorgesehen, das schwenkbare Rückenlehnenelement 36b verschwenkbar zwischen der aufrechten Sitzstellung und der Komfortstellung zu lagern. Die Lagervorrichtung 42b bildet die Drehachse 44b aus. Das schwenkbare Rückenlehnenelement 36b ist mittels der Lagervorrichtung 42b um die Drehachse 44b schwenkbar. Die Lagervorrichtung 42b weist zwei Lagerbolzen 46b, 48b auf. Die Lagerbolzen 46b, 48b bilden die Drehachse 44b aus. Die Lagerbolzen 46b, 48b sind jeweils mit einer der Lagerstellen 38b, 40b eines der Sitzstrukturelemente 26b, 28b verbunden.

Das schwenkbare Rückenlehnenelement 36b weist einen Rückenlehnenrahmen 60b auf. Der Rückenlehnenrahmen 60b bildet eine tragende Struktur des schwenkbaren Rückenlehnenelements 36b aus. Der Rückenlehnenrahmen 60b ist als ein umlaufender Rahmen ausgebildet. Der Rückenlehnenrahmen 60b ist vorzugsweise im Wesentlichen U-förmig ausgebildet. Der Rückenlehnenrahmen 60b weist zwei seitliche Rahmenelemente und ein oberes Rahmenelement auf, das die beiden seitlichen Rahmenelemente an einem oberen Ende des Rückenlehnenrahmens 60b verbindet. An einem unteren Ende ist der Rückenlehnenrahmen 60b vorzugsweise offen. Das untere Ende des Rückenlehnenrahmens 60b bildet ein unteres Ende des schwenkbaren Rückenlehnenelements 36b aus. Die Lagerbolzen 46b, 48b sind jeweils an einem unteren Ende des Rückenlehnenrahmens 60b an dem zugewandten seitlichen Rahmenelement an den Rückenlehnenrahmen 60b des schwenkbaren Rückenlehnenelements 36b angebunden.

Die Rückenlehne 34b ist als eine Rückenlehne mit einem hohen Rückenlehnendrehpunkt ausgebildet. Der Rückenlehnendrehpunkt, also die Drehachse 44b der Lagervorrichtung 42b, ist oberhalb eines Kniebereichs 50b des Flugzeugsitzes 10b angeordnet. Zur Ausbildung des hohen Rückenlehnendrehpunkts bilden die Sitzstrukturelemente 26b, 28b ihre Lagerstellen 38b, 40b zur Lagerung der Rückenlehne 34b in einem hohen Bereich aus. Die Lagerstellen 38b, 40b der Sitzstrukturelemente 26b, 28b sind oberhalb des Kniebereichs 50b angeordnet. Die Lagerstellen 38b, 40b der Sitzstrukturelemente 26b, 28b sind in der Armlehnenhöhe X angeordnet.

Im Unterschied zu dem ersten Ausführungsbeispiel weist das schwenkbare Rückenlehnenelement 36b eine Bespannung 100b auf. Die Bespannung 100b ist auf den Rückenlehnenrahmen 60b aufgespannt. Die Bespannung 100b ist von einem Textil gebildet, das zwischen den seitlichen Rahmenelementen des Rückenlehnenrahmens 60b aufgespannt ist. Grundsätzlich ist es denkbar, dass die Bespannung 100b auch an einem oberen Rahmenelement des Rückenlehnenrahmens 60b angebunden ist. Die Bespannung 100b erstreckt sich von einem unteren Ende des Rückenlehnenrahmens 60b bis in einen oberen Endbereich des Rückenlehnenrahmens 60b.

Die Rückenlehne 34b weist ein unteres Rückenlehnenelement 52b auf. Das untere Rückenlehnenelement 52b ist starr ausgebildet. Das untere Rückenlehnenelement 52b ist vorzugsweise unbeweglich ausgebildet. Das untere Rückenlehnenelement 52b bildet einen unteren Bereich der Rückenlehne 34b aus. Das untere Rückenlehnenelement 52b bildet in dem unteren Bereich der Rückenlehne 34b die Rückenlehnenabstützfläche aus. Das untere Rückenlehnenelement 52b ist fest an den Sitzstrukturelementen 26b, 28b befestigt. Das untere Rückenlehnenelement 52b ist von einem Schalenelement gebildet. Das untere Rückenlehnenelement 52b ist aus einem faserverstärkten Kunststoff ausgebildet. Das untere Rückenlehnenelement 52b ist vorzugsweise aus mehreren Lagen eines faserverstärkten Kunststoffs gebildet. Beispielsweise ist es denkbar, dass das untere Rückenlehnenelement 52b von einer oder mehreren GFK-Schichten oder von einer oder mehreren CFK-Schichten ausgebildet ist. Das untere Rückenlehnenelement 52b weist einen Hauptbereich 102b auf. Der Hauptbereich 102b bildet im Wesentlichen die Rückenlehnenabstützfläche des unteren Rückenlehnenelements 52b aus und ist im Wesentlichen so ausgebildet wie bei dem unteren Rückenlehnenelement des ersten Ausführungsbeispiels.

Im Unterschied zu dem ersten Ausführungsbeispiel weist das untere Rückenlehnenelement 52b an seinem oberen Ende eine Lippe 104b auf. Die Lippe 104b schließt direkt an ein oberes Ende des Hauptbereichs 102b des unteren Rückenlehnenelements 52b an. Die Lippe 104b bildet einen oberen Endbereich des unteren Rückenlehnenelements 52b aus. Die Lippe 104b ist einstückig mit dem Rest des unteren Rückenlehnenelements 52b ausgebildet. Die Lippe 104b ist in Querrichtung mittig an dem oberen Ende des unteren Rückenlehnenelements 52b angeordnet. Grundsätzlich wäre es auch denkbar, dass das untere Rückenlehnenelement 52b auch zwei oder mehr außermittig angeordnete Lippen 104b aufweist, die an seinem oberen Ende angeordnet sind. Weist das untere Rückenlehnenelement 52b an seinem oberen Ende mehrere Lippen 104b auf, so sind diese vorzugsweise zu einer Mittelachse des unteren Rückenlehnenelements 52b symmetrisch angeordnet. Die Lippe 104b des unteren Rückenlehnenelements 52b erstreckt sich bis oberhalb der Lagerstellen 38b, 40b zur Lagerung des schwenkbaren Rückenlehnenelements 36b. Die Lippe 104b des unteren Rückenlehnenelements 52b erstreckt sich bis hinter einen Bereich des schwenkbaren Rückenlehnenelements 36b, insbesondere bis hinter die Bespannung 100b des schwenkbaren Rückenlehnenelements 36b. Die Lippe 104b ist dazu vorgesehen, dass die Bespannung 100b des schwenkbaren Rückenlehnenelements 36b mit ihrem unteren Ende daran angebunden werden kann. Die Bespannung 100b ist mit ihrem unteren Ende an eine Vorderseite 106b der Lippe 104b des unteren Rückenlehnenelements 52b angebunden. Die Bespannung 100b ist vorzugsweise mittels eines Flausch- und Hakenbands abnehmbar an die Vorderseite 106b der Lippe 104b angebunden. Grundsätzlich ist es auch denkbar, dass die Bespannung 100b auf eine andere Weise mit der Lippe 104b des unteren Rückenlehnenelements 52b verbunden ist, beispielsweise geklebt ist.

Die Flugzeugsitzvorrichtung weist ein Rückstellmodul 56b auf. Das Rückstellmodul 56b ist zu einer Rückstellung der Rückenlehne 34b aus der Komfortstellung in eine aufrechte Sitzstellung vorgesehen. Das Rückstellmodul 56b ist zu einer Rückstellung der Rückenlehne 34b aus der verschwenkten Sitzstellung in die aufrechte Sitzstellung vorgesehen. Das Rückstellmodul 56b ist zumindest im Wesentlichen in einem Bereich oberhalb der Lagerstellen 38b, 40b der Sitzstrukturelemente 26b, 28b angeordnet. Das Rückstellmodul 56b ist zumindest im Wesentlichen oberhalb, also auf einer der Aufständerebene abgewandten Seite, der Armlehnenhöhe X angeordnet. Das Rückstellmodul 56b ist zumindest zu einem Großteil oberhalb des Kniebereichs 50b der Rückenlehne 34b angeordnet.

Das Rückstellmodul 56b weist zur Bereitstellung einer Rückstellkraft ein Federelement 58b auf. Das Federelement 58b ist dazu vorgesehen, eine Federkraft auf das schwenkbare Rückenlehnenelement 36b auszuüben, um dieses in Richtung der aufrechten Sitzstellung zu schwenken. Das Federelement 58b ist als ein Blattfederelement ausgebildet. Das als Blattfederelement ausgebildete Federelement 58b ist mit seinem ersten, unteren Ende an dem unteren Rückenlehnenelement 52b angebunden. Das als Blattfederelement ausgebildete Federelement 58b ist in einem oberen Bereich des unteren Rückenlehnenelements 52b angebunden. Das als Blattfederelement ausgebildete Federelement 58b ist unterhalb der Lippe 104b in dem Hauptbereich 102b des unteren Rückenlehnenelements 52b angebunden.

Zur Anbindung des als Blattfederelement ausgebildeten Federelements 58b an das schwenkbare Rückenlehnenelement 36b weist das Rückstellmodul 56b eine erste Befestigungseinheit 64b auf. Über die erste Befestigungseinheit 64b ist das als Blattfederelement ausgebildete Federelement 58b fest an das schwenkbare Rückenlehnenelement 36b angebunden. Das schwenkbare Rückenlehnenelement 36b weist einen Querträger 66b auf. Der Querträger 66b ist in einem Bereich oberhalb der Lagerstellen 38b, 40b angeordnet. Der Querträger 66b ist hinter der Bespannung 100b angeordnet. Das als Blattfederelement ausgebildete Federelement 58b ist über die Befestigungseinheit 64b direkt an den Querträger 66b angebunden. Zur Anbindung des als Blattfederelement ausgebildeten Federelements 58b an das untere Rückenlehnenelement 52b weist das Rückstellmodul 56b eine zweite Befestigungseinheit 68b auf. Über die zweite Befestigungseinheit 68b ist das als Blattfederelement ausgebildete Federelement 58b verliersicher an das untere Rückenlehnenelement 52b angebunden. Über die zweite Befestigungseinheit 68b ist das als Blattfederelement ausgebildete Federelement 58b beweglich an das untere Rückenlehnenelement 52b angebunden.

Das Rückstellmodul 56b weist eine Verriegeleinheit 88b auf. Die Verriegeleinheit 88b ist dazu vorgesehen, das Rückstellmodul 56b zu verriegeln bzw. zu entriegeln. Die Verriegeleinheit 88b ist dazu vorgesehen, die Rückenlehne 34b, also das schwenkbare Rückenlehnenelement 36b, zumindest in der aufrechten Sitzstellung und in der Komfortstellung zu verriegeln. Die Verriegeleinheit 88b ist funktionstechnisch vorzugsweise zwischen dem schwenkbaren Rückenlehnenelement 36b, insbesondere dem Rückenlehnenrahmen 60b, und einem der Sitzstrukturelemente 26b, 28b, angeordnet. Die Verriegeleinheit 88b ist oberhalb des Kniebereichs 50b der Rückenlehne 34b angeordnet. Die Verriegeleinheit 88b ist vorzugsweise in einem Bereich oberhalb der Lagerstellen 38b, 40b der Sitzstrukturelemente 26b, 28b angeordnet. Die Verriegeleinheit

88b ist vorzugsweise im Wesentlichen, also zu einem Großteil, oberhalb der Armlehnenhöhe X angeordnet.

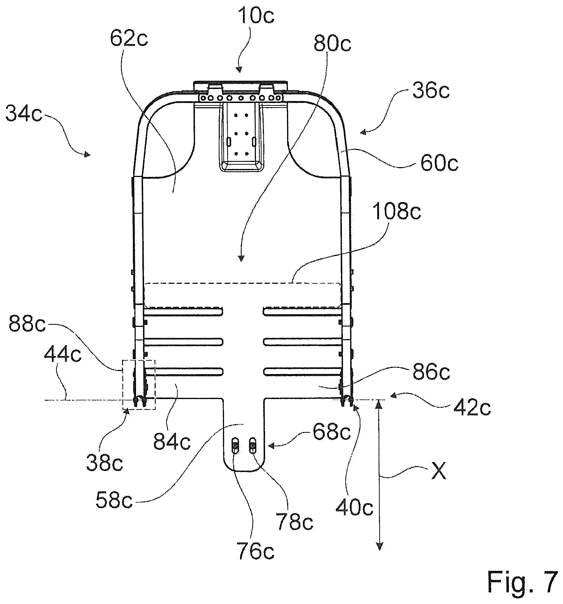

Die Figur 7 zeigt ein drittes Ausführungsbeispiel einer erfindungsgemäßen Flugzeugsitzvorrichtung. Die Flugzeugsitzvorrichtung ist Teil eines teilweise dargestellten Flugzeugsitzes 10c. Der Flugzeugsitz 10c ist im Wesentlichen gleich ausgebildet wie der Flugzeugsitz des ersten Ausführungsbeispiels aus den Figuren 1 - 4 und soll deshalb hier nicht näher beschrieben werden. Die Flugzeugsitzvorrichtung weist eine nicht näher dargestellte Aufständereinheit auf. Die Flugzeugsitzvorrichtung weist zwei nicht näher dargestellte, mit der Aufständereinheit verbundene Sitzstrukturelemente auf, die als Sitzteiler ausgebildet sind. Die Sitzstrukturelemente erstrecken sich bis auf eine Armlehnenhöhe X des Flugzeugsitzes 10c.

Die Flugzeugsitzvorrichtung umfasst eine Rückenlehne 34c. Die Rückenlehne 34c bildet eine Rückenlehnenabstützfläche aus. Die Rückenlehne 34c ist an die Sitzstrukturelemente angebunden. Die Rückenlehne 34c ist schwenkbar ausgebildet. Die Rückenlehne 34c ist dazu vorgesehen, zwischen einer aufrechten Sitzstellung und einer Komfortstellung verschwenkt zu werden. Die Rückenlehne 34c weist ein schwenkbares Rückenlehnenelement 36c auf. Die Rückenlehne 34c ist als eine Rückenlehne mit einem hohen Rückenlehnendrehpunkt ausgebildet. Der Rückenlehnendrehpunkt ist von einer Drehachse 44c einer Lagervorrichtung 42c gebildet. Das schwenkbare Rückenlehnenelement 36c ist schwenkbar an die Sitzstrukturelemente angebunden. Die Sitzstrukturelementen weisen jeweils eine Lagerstelle 38c, 40c zur Lagerung der Rückenlehne 34c auf. Das schwenkbare Rückenlehnenelement 36c weist einen Rückenlehnenrahmen 60c auf. Der Rückenlehnenrahmen 60c bildet eine tragende Struktur des schwenkbaren Rückenlehnenelements 36c aus. Das schwenkbare Rückenlehnenelement 36c weist ein Schalenelement 62c auf. Das Schalenelement 62c ist als ein plattenartiges Element ausgebildet. Das Schalenelement 62c ist aus einem faserverstärkten Kunststoff gebildet. Das Schalenelement 62c ist beispielsweise aus einem GFK oder einem CFK gebildet. Das Schalenelement 62c ist dazu vorgesehen, die Rückenlehnenabstützfläche des schwenkbaren Rückenlehnenelements 36c auszubilden. Das Schalenelement 62c ist fest mit dem Rückenlehnenrahmen 60c des schwenkbaren Rückenlehnenelements 36c verbunden. Das Schalenelement 62c bildet vorzugsweise eine Rückenlehnenkontur des schwenkbaren Rückenlehnenelements 36c aus. Die Rückenlehne 34c weist ein nicht näher dargestelltes unteres Rückenlehnenelement auf. Das untere Rückenlehnenelement ist ebenfalls von einem Schalenelement gebildet.

Die Flugzeugsitzvorrichtung weist ein Rückstellmodul 56c auf. Das Rückstellmodul 56c ist zu einer Rückstellung der Rückenlehne 34c aus der Komfortstellung in eine aufrechte Sitzstellung vorgesehen. Das Rückstellmodul 56c ist zur Rückstellung des schwenkbaren Rückenlehnenelements 36c vorgesehen. Das Rückstellmodul 56c ist zur Rückstellung der Rückenlehne 34c, insbesondere zur Rückstellung des schwenkbaren Rückenlehnenelements 36c, dazu vorgesehen, eine Rückstellkraft bereitzustellen. Das Rückstellmodul 56c weist zur Bereitstellung einer Rückstellkraft ein Federelement 58c auf. Das Federelement 58c ist als ein Blattfederelement ausgebildet. Im Unterschied zu dem ersten Ausführungsbeispiel ist das als Blattfederelement ausgebildete Federelement 58c zumindest teilweise einstückig mit dem schwenkbaren Rückenlehnenelement 36c ausgebildet. Das als Blattfederelement ausgebildete Federelement 58c ist einstückig mit dem Schalenelement 62c des schwenkbaren Rückenlehnenelements 36c ausgebildet. Das als Blattfederelement ausgebildete Federelement 58c ist von einem Mittelbereich 80c des Schalenelements 62c ausgebildet. Das als Blattfederelement ausgebildete Federelement 58c ist in den Mittelbereich 80c des Schalenelements 62c integriert. Das als Blattfederelement ausgebildete Federelement 58c ist in faserverstärkte Lagen des Schalenelements 62c eingebettet. Das als Blattfederelement ausgebildete Federelement 58c ist vorzugsweise als ein in einem Herstellverfahren in das Schalenelement 62c eingelegtes Blattfederelement gebildet. Grundsätzlich wäre es jedoch auch denkbar, dass das als Blattfederelement ausgebildete Federelement 58c von den Faserlagen des Schalenelements 62c in dem Mittelbereich 80c selbst gebildet ist.

An einem oberen Ende kann das einstückig mit dem Schalenelement 62c ausgebildete Federelement 58c ein Querversteifungselement 108c ausbilden. Das Querversteifungselement 108c ist einstückig mit dem Federelement 58c und damit dem Schalenelement 62c ausgebildet. Das Querversteifungselement 108c ist wie der Querträger des ersten Ausführungsbeispiels zur besseren Einleitung der Rückstellkraft in das schwenkbare Rückenlehnenelement 36c vorgesehen. Das schwenkbare Rückenlehnenelement 36c weist in diesem Ausführungsbeispiel vorzugsweise keinen separaten Querträger auf. Grundsätzlich wäre es auch denkbar, dass das als Blattfederelement ausgebildete Federelement 58c kein Querversteifungselement 108c aufweist. Das schwenkbare Rückenlehnenelement 36c weist in einem unteren Bereich sich von dem Mittelbereich 80c jeweils seitlich nach außen erstreckende elastische Rippen 84c, 86c auf. Die sich nach außen erstreckenden elastischen Rippen 84c, 86c können vorzugsweise ebenfalls einstückig mit dem als Blattfederelement ausgebildeten Federelement 58c ausgebildet sein. Zur Anbindung des als Blattfederelement ausgebildeten Federelements 58c an das untere Rückenlehnenelement weist das Rückstellmodul 56c eine Befestigungseinheit 68c auf, die gleich ausgebildet ist wie in dem ersten Ausführungsbeispiel. Die Befestigungseinheit 68c ist zumindest von als Langlöchern ausgebildeten Durchgangsnuten 76c, 78c in einem unteren Ende des Federelements 58c ausgebildet.

Das Rückstellmodul 56c weist eine hier nicht näher dargestellte Verriegeleinheit auf, die im Wesentlichen gleich ausgebildet ist wie in den vorhergehenden Ausführungsbeispielen. Die Verriegeleinheit ist funktionstechnisch vorzugsweise zwischen dem schwenkbaren Rückenlehnenelement 36c, insbesondere dem Rückenlehnenrahmen 60c, und einem der Sitzstrukturelemente angeordnet. Die Verriegeleinheit ist vorzugsweise in einem Bereich oberhalb der Lagerstellen der Sitzstrukturelemente angeordnet. Die Verriegeleinheit ist vorzugsweise im Wesentlichen, also zu einem Großteil, oberhalb der Armlehnenhöhe X angeordnet.

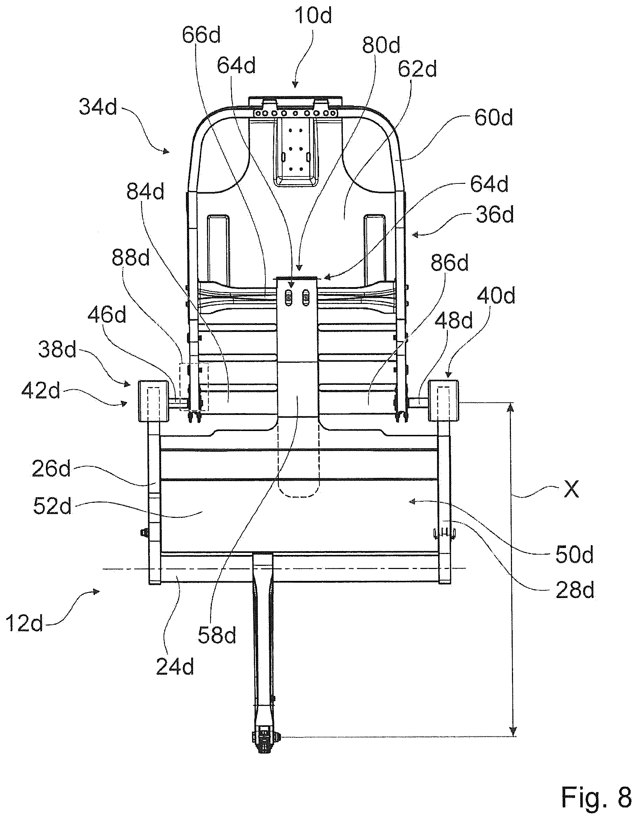

Die Figur 8 zeigt ein viertes Ausführungsbeispiel einer erfindungsgemäßen Flugzeugsitzvorrichtung. Die Flugzeugsitzvorrichtung ist Teil eines teilweise dargestellten Flugzeugsitzes 10d. Die Flugzeugsitzvorrichtung weist eine Aufständereinheit 12d auf. Mittels der Aufständereinheit 12d ist der Flugzeugsitz 10d auf dem Kabinenboden der Flugzeugkabine aufständerbar. Die Aufständereinheit 12d weist zwei Querträger 24d auf. Die Flugzeugsitzvorrichtung weist zwei Sitzstrukturelemente 26d, 28d auf. Die zwei Sitzstrukturelemente 26d, 28d sind jeweils auf einer Seite eines Sitzbereichs 30d der Flugzeugsitzvorrichtung angeordnet. Die zwei Sitzstrukturelemente 26d, 28d sind jeweils seitlich eines Sitzbereichs 30d, den der Flugzeugsitz 10d ausbildet, angeordnet. Die Sitzstrukturelemente 26d, 28d sind als Sitzteiler ausgebildet. Die Sitzstrukturelemente 26d, 28d sind an den Querträgern 24d angeordnet. Die Sitzstrukturelemente 26d, 28d sind im Wesentlichen L-förmig ausgebildet. Die Sitzstrukturelemente 26d, 28d erstrecken sich also in ihrem hinteren Bereich nach oben, von der Aufständereinheit 12d, insbesondere der Aufständerebene weg. Die Sitzstrukturelemente 26d, 28d erstrecken sich in ihrem hinteren Bereich nach oben bis im Wesentlichen auf eine Armlehnenhöhe X. Die Sitzstrukturelemente 26d, 28d erstrecken sich bis auf eine Armlehnenhöhe X des Flugzeugsitzes 10d.

Die Flugzeugsitzvorrichtung umfasst eine Rückenlehne 34d. Die Rückenlehne 34d ist schwenkbar zu der Aufständereinheit 12d angeordnet. Die Rückenlehne 34 ist an die Sitzstrukturelemente 26d, 28d angebunden. Die Rückenlehne 34d ist dazu vorgesehen, zwischen einer aufrechten Sitzstellung und einer Komfortstellung verschwenkt zu werden. Die Rückenlehne 34d weist ein schwenkbares Rückenlehnenelement 36d auf. Das schwenkbare Rückenlehnenelement 36d ist schwenkbar an der Aufständereinheit 12d gelagert. Die Sitzstrukturelemente 26d, 28d weisen jeweils eine Lagerstelle 38d, 40d zur Lagerung des schwenkbaren Rückenlehnenelements 36d auf. Die Flugzeugsitzvorrichtung weist eine Lagervorrichtung 42d auf. Die Lagervorrichtung 42d ist dazu vorgesehen, die Rückenlehne 34d verschwenkbar zwischen der aufrechten Sitzstellung und der Komfortstellung zu lagern. Die Lagervorrichtung 42d ist dazu vorgesehen, das schwenkbare Rückenlehnenelement 36d verschwenkbar zwischen der aufrechten Sitzstellung und der Komfortstellung zu lagern. Die Lagervorrichtung 42d bildet die Drehachse 44d aus. Die Lagervorrichtung 42d weist zwei Lagerbolzen 46d, 48d auf. Die Lagerbolzen 46d, 48d bilden die Drehachse 44d aus. Die Lagerbolzen 46d, 48d sind jeweils mit einer der Lagerstellen 38d, 40d eines der Sitzstrukturelemente 26d, 28d verbunden. Die Rückenlehne 34d ist als eine Rückenlehne mit einem hohen Rückenlehnendrehpunkt ausgebildet. Der Rückenlehnendrehpunkt, also die Drehachse 44d der Lagervorrichtung 42d, ist oberhalb eines Kniebereichs 50d des Flugzeugsitzes 10d angeordnet. Zur Ausbildung des hohen Rückenlehnendrehpunkts bilden die Sitzstrukturelemente 26d, 28d ihre Lagerstellen 38d, 40d zur Lagerung der Rückenlehne 34d in einem hohen Bereich aus. Die Lagerstellen 38d, 40d der Sitzstrukturelemente 26d, 28d sind oberhalb des Kniebereichs 50d angeordnet. Die Lagerstellen 38d, 40d der Sitzstrukturelemente 26d, 28d sind in der Armlehnenhöhe X angeordnet.

Das schwenkbare Rückenlehnenelement 36d weist einen Rückenlehnenrahmen 60d auf. Der Rückenlehnenrahmen 60d bildet eine tragende Struktur des schwenkbaren Rückenlehnenelements 36d aus. Das schwenkbare Rückenlehnenelement 36d weist ein Schalenelement 62d auf. Das Schalenelement 62d ist aus einem faserverstärkten Kunststoff gebildet. Das Schalenelement 62d ist fest mit dem Rückenlehnenrahmen 60d des schwenkbaren Rückenlehnenelements 36d verbunden. Das Schalenelement 62d des schwenkbaren Rückenlehnenelements 36d weist einen Mittelbereich 80d auf. Das schwenkbare Rückenlehnenelement 36d weist in einem unteren Bereich sich von dem Mittelbereich 80d jeweils seitlich nach außen erstreckende elastische Rippen 84d, 86d auf. Die elastischen Rippen 84d, 86d sind vorzugsweise einstückig mit dem Schalenelement 62d, insbesondere mit dem Mittelbereich 80d, ausgebildet.

Die Rückenlehne 34d weist ein unteres Rückenlehnenelement 52d auf. Das untere Rückenlehnenelement 52d bildet einen unteren Bereich der Rückenlehne 34d aus. Das untere Rückenlehnenelement 52d bildet in dem unteren Bereich der Rückenlehne 34d die Rückenlehnenabstützfläche aus. Das untere Rückenlehnenelement 52d ist fest an den Sitzstrukturelementen 26d, 28d befestigt. Das untere Rückenlehnenelement 52d erstreckt sich im Wesentlichen zwischen einer Höhe der Querträger 22d, 24d der Aufständereinheit 12d und einem unteren Ende des schwenkbaren Rückenlehnenelements 36d. Das untere Rückenlehnenelement 52d ist von einem Schalenelement gebildet. Das untere Rückenlehnenelement 52d ist von einer Schale aus einem faserverstärkten Kunststoff gebildet.

Die Flugzeugsitzvorrichtung weist ein Rückstellmodul 56d auf. Das Rückstellmodul 56d ist zu einer Rückstellung der Rückenlehne 34d aus der Komfortstellung in eine aufrechte Sitzstellung vorgesehen. Das Rückstellmodul 56d ist zur Rückstellung des schwenkbaren Rückenlehnenelements 36d vorgesehen. Das Rückstellmodul 56d ist zur Rückstellung der Rückenlehne 34d, insbesondere zur Rückstellung des schwenkbaren Rückenlehnenelements 36d, dazu vorgesehen, eine Rückstellkraft bereitzustellen. Das Rückstellmodul 56d weist zur Bereitstellung einer Rückstellkraft ein Federelement 58d auf. Das Federelement 58d ist als ein Blattfederelement ausgebildet. Im Unterschied zu den vorhergehenden Ausführungsbeispielen ist das als Blattfederelement ausgebildete Federelement 58d zumindest teilweise einstückig mit dem unteren Rückenlehnenelement 52d ausgebildet.

Das als Blattfederelement ausgebildete Federelement 58d ist einstückig mit dem als Schalenelement ausgebildeten unteren Rückenlehnenelement 52d ausgebildet. Das als Blattfederelement ausgebildete Federelement 58d ist von einem mittleren Bereich des unteren Rückenlehnenelements 52d ausgebildet. Das als Blattfederelement ausgebildete Federelement 58d ist teilweise in das untere Schalenelement integriert. Das als Blattfederelement ausgebildete Federelement 58d ist in faserverstärkte Lagen des als Schalenelement ausgebildeten unteren Rückenlehnenelements 52d eingebettet. Das als Blattfederelement ausgebildete Federelement 58d ist vorzugsweise als ein in einem Herstellverfahren in das untere Rückenlehnenelement 52d eingelegtes Blattfederelement gebildet. Das als Blattfederelement ausgebildete Federelement 58d erstreckt sich von dem unteren Rückenlehnenelement 52d aus bis in eine Mitte des schwenkbaren Rückenlehnenelements 36d.

Zur Anbindung des als Blattfederelement ausgebildeten Federelements 58d an das schwenkbare Rückenlehnenelement 36d weist das Rückstellmodul 56d eine erste Befestigungseinheit 64d auf. Das schwenkbare Rückenlehnenelement 36d weist einen Querträger 66d auf. Der Querträger 66d ist in einem Bereich oberhalb der Lagerstellen 38d, 40d angeordnet. Das als Blattfederelement ausgebildete Federelement 58d ist über die Befestigungseinheit 64d direkt an den Querträger 66d angebunden. Das als Blattfederelement ausgebildete Federelement 58d ist axial beweglich mit dem Querträger 66d verbunden. Das als Blattfederelement ausgebildete Federelement 58d weist zwei als Langlöcher ausgebildete Durchgangsnuten auf, über die das Federelement 58d über zwei Befestigungselemente, beispielsweise Schrauben, der Befestigungseinheit 64d verschiebbar mit dem Querträger 66d verbunden ist. Die erste Befestigungseinheit 64d zur Anbindung des als Blattfederelement ausgebildeten Federelements 58d kann vorzugsweise äquivalent zu der zweiten Befestigungseinheit des ersten Ausführungsbeispiels zur Anbindung des als Blattfederelement ausgebildeten Federelements an das untere Rückenlehnenelement ausgebildet sein.

Das Rückstellmodul 56d weist eine Verriegeleinheit 88d auf. Die Verriegeleinheit 88d ist dazu vorgesehen, das Rückstellmodul 56d zu verriegeln bzw. zu entriegeln. Die Verriegeleinheit 88d ist dazu vorgesehen, die Rückenlehne 34d, also das schwenkbare Rückenlehnenelement 36d, zumindest in der aufrechten Sitzstellung und in der Komfortstellung zu verriegeln. Die Verriegeleinheit 88d ist funktionstechnisch vorzugsweise zwischen dem schwenkbaren Rückenlehnenelement 36d, insbesondere dem Rückenlehnenrahmen 60d, und einem der Sitzstrukturelemente 26d, 28d angeordnet. Die Verriegeleinheit 88d ist oberhalb des Kniebereichs 50d der Rückenlehne 34d angeordnet. Die Verriegeleinheit 88d ist vorzugsweise in einem Bereich oberhalb der Lagerstellen 38d, 40d der Sitzstrukturelemente 26d, 28d angeordnet. Die Verriegeleinheit 88d ist vorzugsweise im Wesentlichen, also zu einem Großteil, oberhalb der Armlehnenhöhe X angeordnet.

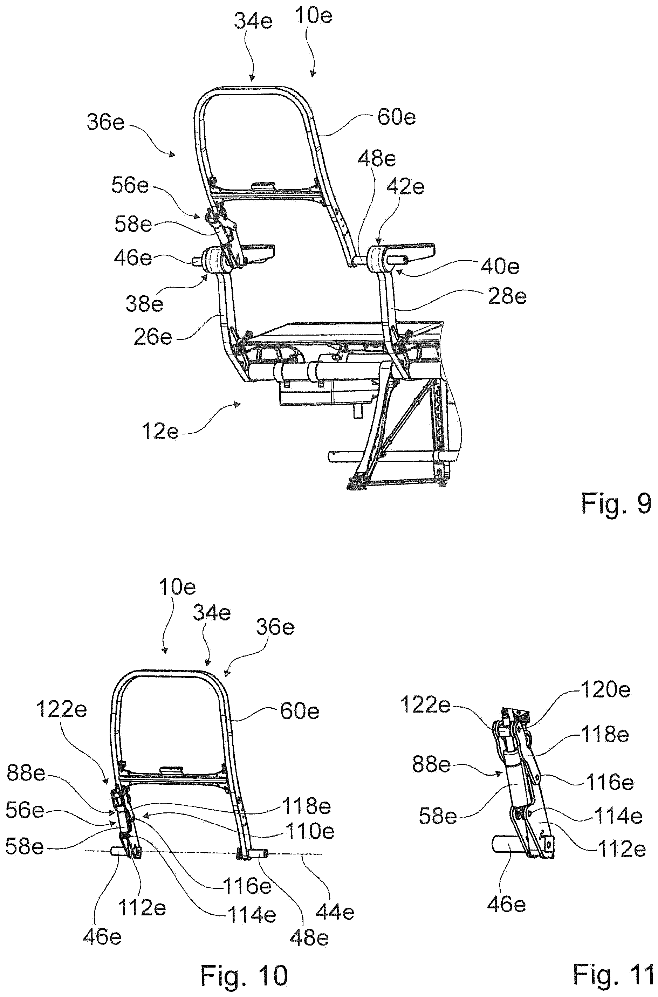

Die Figuren 9 bis 11 zeigen ein fünftes Ausführungsbeispiel einer erfindungsgemäßen Flugzeugsitzvorrichtung. Die Flugzeugsitzvorrichtung ist Teil eines teilweise dargestellten Flugzeugsitzes 10e. Die Flugzeugsitzvorrichtung weist eine Aufständereinheit 12e auf. Mittels der Aufständereinheit 12e ist der Flugzeugsitz 10e auf dem Kabinenboden der Flugzeugkabine aufständerbar. Die Aufständereinheit 12e weist zwei Querträger 24e auf. Die Flugzeugsitzvorrichtung weist zwei Sitzstrukturelemente 26e, 28e auf. Die zwei Sitzstrukturelemente 26e, 28e sind jeweils auf einer Seite eines Sitzbereichs 30e der Flugzeugsitzvorrichtung angeordnet. Die zwei Sitzstrukturelemente 26e, 28e sind jeweils seitlich eines Sitzbereichs 30e, den der Flugzeugsitz 10e ausbildet, angeordnet. Die Sitzstrukturelemente 26e, 28e sind als Sitzteiler ausgebildet. Die Sitzstrukturelemente 26e, 28e sind an den Querträgern 24e angeordnet. Die Sitzstrukturelemente 26e, 28e sind im Wesentlichen L-förmig ausgebildet. Die Sitzstrukturelemente 26e, 28e erstrecken sich also in ihrem hinteren Bereich nach oben, von der Aufständereinheit 12e, insbesondere der Aufständerebene, weg. Die Sitzstrukturelemente 26e, 28e erstrecken sich in ihrem hinteren Bereich nach oben bis im Wesentlichen auf eine Armlehnenhöhe X. Die Sitzstrukturelemente 26e, 28e erstrecken sich bis auf eine Armlehnenhöhe X des Flugzeugsitzes 10e.

Die Flugzeugsitzvorrichtung umfasst eine Rückenlehne 34e. Die Rückenlehne 34e ist schwenkbar zu der Aufständereinheit 12e angeordnet. Die Rückenlehne 34 ist an die Sitzstrukturelemente 26e, 28e angebunden. Die Rückenlehne 34e ist dazu vorgesehen, zwischen einer aufrechten Sitzstellung und einer Komfortstellung verschwenkt zu werden. Die Rückenlehne 34e weist ein schwenkbares Rückenlehnenelement 36e auf. Das schwenkbare Rückenlehnenelement 36e ist schwenkbar an der Aufständereinheit 12e gelagert. Die Sitzstrukturelemente 26e, 28e weisen jeweils eine Lagerstelle 38e, 40e zur Lagerung des schwenkbaren Rückenlehnenelements 36e auf.

Die Flugzeugsitzvorrichtung weist eine Lagervorrichtung 42e auf. Die Lagervorrichtung 42e ist dazu vorgesehen, die Rückenlehne 34e verschwenkbar zwischen der aufrechten Sitzstellung und der Komfortstellung zu lagern. Die Lagervorrichtung 42e ist dazu vorgesehen, dass schwenkbare Rückenlehnenelement 36e verschwenkbar zwischen der aufrechten Sitzstellung und der Komfortstellung zu lagern. Die Lagervorrichtung 42e bildet eine Drehachse 44e aus. Die Lagervorrichtung 42e weist zwei Lagerbolzen 46e, 48e auf. Die Lagerbolzen 46e, 48e bilden die Drehachse 44e aus. Die Lagerbolzen 46e, 48e sind jeweils mit einer der Lagerstellen 38e, 40e eines der Sitzstrukturelemente 26e, 28e verbunden. Die Rückenlehne 34e ist als eine Rückenlehne mit einem hohen Rückenlehnendrehpunkt ausgebildet. Der Rückenlehnendrehpunkt, also die Drehachse 44e der Lagervorrichtung 42e, ist oberhalb eines Kniebereichs 50e des Flugzeugsitzes 10e angeordnet. Zur Ausbildung des hohen Rückenlehnendrehpunkts bilden die Sitzstrukturelemente 26e, 28e ihre Lagerstellen 38e, 40e zur Lagerung der Rückenlehne 34e in einem hohen Bereich aus. Die Lagerstellen 38e, 40e der Sitzstrukturelemente 26e, 28e sind oberhalb des Kniebereichs 50e angeordnet. Die Lagerstellen 38e, 40e der Sitzstrukturelemente 26e, 28e sind in der Armlehnenhöhe X angeordnet.

Das schwenkbare Rückenlehnenelement 36e weist einen Rückenlehnenrahmen 60e auf. Der Rückenlehnenrahmen 60e bildet eine tragende Struktur des schwenkbaren Rückenlehnenelements 36e aus. Das schwenkbare Rückenlehnenelement 36e kann vorzugsweise ähnlich ausgebildet sein wie die der ersten beiden Ausführungsbeispiele und ein Schalenelement oder eine Bespannung aufweisen. Die Rückenlehne 34e weist zudem ein hier nicht näher dargestelltes unteres Rückenlehnenelement auf, das einen unteren Bereich der Rückenlehne 34e ausbildet.

Die Flugzeugsitzvorrichtung weist ein Rückstellmodul 56e auf. Das Rückstellmodul 56e ist zu einer Rückstellung der Rückenlehne 34e aus der Komfortstellung in eine aufrechte Sitzstellung vorgesehen. Das Rückstellmodul 56e ist zur Rückstellung des schwenkbaren Rückenlehnenelements 36e vorgesehen. Das Rückstellmodul 56e ist zur Rückstellung der Rückenlehne 34e, insbesondere zur Rückstellung des schwenkbaren Rückenlehnenelements 36e, dazu vorgesehen, eine Rückstellkraft bereitzustellen. Das Rückstellmodul 56e weist zur Bereitstellung einer Rückstellkraft ein Federelement 58e auf. Im Unterschied zu den vorhergehenden Ausführungsbeispielen ist das Federelement 58e als eine Gasdruckfeder ausgebildet. Das als Gasdruckfeder ausgebildete Federelement 58e ist dazu vorgesehen, die Rückstellkraft des Rückstellmoduls 56e bereitzustellen. Das als Gasdruckfeder ausgebildete Federelement 58e ist oberhalb der Lagerstellen 38e, 40e der Sitzstrukturelemente 26e, 28e angeordnet.

Das Rückstellmodul 56e weist ein Hebelgetriebe 110e auf. Das Hebelgetriebe 110e ist dazu vorgesehen, eine Federkraft des als Gasdruckfeder ausgebildeten Federelements 58e in eine Schwenkbewegung des schwenkbaren Rückenlehnenelements 36e umzuwandeln. Das Hebelgetriebe 110e weist ein Grundhalteelement 112e auf. Das Grundhalteelement 112e ist starr und drehfest mit der Aufständereinheit 12e verbunden. Das Grundhalteelement 112e ist vorzugsweise drehfest mit dem Sitzstrukturelement 26e verbunden. Das Grundhalteelement 112e ist insbesondere drehfest über einen Lagerbolzen 46e der Lagervorrichtung 42e drehfest zu dem Sitzstrukturelement 26e angebunden. Das Grundhalteelement 112e weist eine erste Befestigungsaufnahme 114e auf. An der ersten Befestigungsaufnahme 114e ist das als Gasdruckfeder ausgebildete Federelement 58e mit einem ersten Ende schwenkbar gelagert angebunden. Das Grundhalteelement 112e weist eine zweite Befestigungsaufnahme 116e auf. Das Hebelgetriebe 110e weist ein Hebelelement 118e auf. Das Hebelelement 118e ist schwenkbar über die zweite Befestigungsaufnahme 116e an das Grundhalteelement 112e angebunden. Das Hebelelement 118e des Hebelgetriebes 110e ist mit seinem ersten Ende über die zweite Befestigungsaufnahme 116e schwenkbar mit dem Grundhalteelement 112e verbunden. Das Hebelelement 118e erstreckt sich in montiertem Zustand, in der aufrechten Sitzstellung der Rückenlehne 34e nach oben, von der Aufständerebene weg (Siehe Figuren 9 und 10). Das als Gasdruckfeder ausgebildete Federelement 58e ist mit seinem zweiten Ende über eine Lagerstelle 120e drehbar mit dem zweiten Ende des Hebelelements 118e verbunden.

Das Hebelgetriebe 110e weist ein Koppelelement 122e auf, das das Hebelgetriebe 110e mit dem schwenkbaren Rückenlehnenelement 36e koppelt. Das Koppelelement 122e ist mit seinem ersten Ende an die Lagerstelle 120e angebunden. Das Koppelelement 122e ist mit seinem ersten Ende gemeinsam mit dem zweiten Ende des als Gasdruckfeder ausgebildeten Federelements 58e und dem zweiten Ende des Hebelelements 118e drehbar verbunden. Mit seinem zweiten Ende ist das Koppelelement 122e drehbar mit dem schwenkbaren Rückenlehnenelement 36e verbunden. Mit seinem zweiten Ende ist das Koppelelement 122e vorzugsweise über eine nicht näher dargestellte Lagerstelle drehbar mit dem Rückenlehnenrahmen 60e des schwenkbaren Rückenlehnenelements 36e verbunden.

Das Rückstellmodul 56e weist eine Verriegeleinheit 88e auf. Die Verriegeleinheit 88e ist dazu vorgesehen, das Rückstellmodul 56e zu verriegeln bzw. zu entriegeln. Die Verriegeleinheit 88e ist dazu vorgesehen, die Rückenlehne 34e, also das schwenkbare Rückenlehnenelement 36e, zumindest in der aufrechten Sitzstellung und in der Komfortstellung zu verriegeln. Die Verriegeleinheit 88e ist dazu vorgesehen, das als Gasdruckfeder ausgebildete Federelement 58e direkt zu verriegeln. In einem Verriegelzustand der Verriegeleinheit 88e ist das als Gasdruckfeder ausgebildete Federelement 58e verriegelt und kann keine Federkraft bereitstellen. In einem Entriegelzustand der Verriegeleinheit 88e ist das als Gasdruckfeder ausgebildete Federelement 58e entriegelt und kann seine Federkraft als Rückstellkraft bereitstellen. Die Verriegeleinheit 88e ist in dem als Gasdruckfeder ausgebildeten Federelement 58e angeordnet. Die Verriegeleinheit 88e ist intern in dem als Gasdruckfeder ausgebildeten Federelement 58e ausgebildet. Die Verriegeleinheit 88e ist einstückig mit dem als Gasdruckfeder ausgebildeten Federelement 58e ausgebildet.

Ist das schwenkbare Rückenlehnenelement 36e in seiner Komfortstellung nach hinten geschwenkt, so ist das als Gasdruckfeder ausgebildete Federelement 58e gestaucht. Das Hebelelement 118e und das als Gasdruckfeder ausgebildete Federelement 58e sind in der Komfortstellung des schwenkbaren Rückenlehnenelements 36e über die Befestigungsaufnahmen 114e, 116e des Grundhalteelements 112e ebenfalls nach hinten geschwenkt. Wird nun das als Gasdruckfeder ausgebildete Federelement 58e betätigt, also entriegelt, drückt das als Gasdruckfeder ausgebildete Federelement 58e das Hebelelement 118e und damit das über das Koppelelement 122e mit dem Hebelgetriebe 110e verbundene schwenkbare Rückenlehnenelement 36e nach oben und damit in seine aufrechte Sitzstellung.

Das gesamte Hebelgetriebe 110e, das als Gasdruckfeder ausgebildete Federelement 58e, sowie die integral mit dem Federelement 58e ausgebildete Verriegeleinheit 88e sind oberhalb der Armlehnenhöhe X angeordnet. Das gesamte Rückstellmodul 56e ist oberhalb der Lagerstellen 38e, 40e der Sitzstrukturelemente 26e, 28e für das schwenkbare Rückenlehnenelement 36e angeordnet. Das Rückstellmodul 56e ist komplett oberhalb des Kniebereichs 50e der Rückenlehne 34e angeordnet. Das gesamte Rückstellmodul 56e ist einseitig an dem schwenkbaren Rückenlehnenelement 36e angeordnet. Das Rückstellmodul 56e ist lediglich auf der dem linken Sitzstrukturelement 26e zugewandten Seite angeordnet. Das Rückstellmodul 56e kann dadurch besonders platzsparend angeordnet werden.

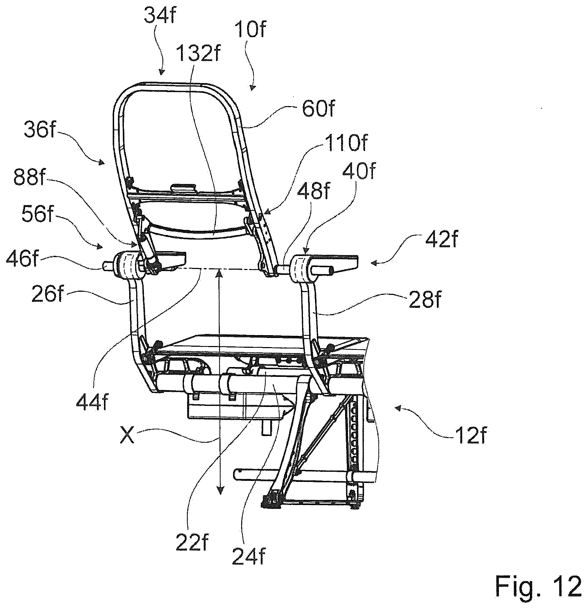

Die Figuren 12 bis 14 zeigen ein sechstes Ausführungsbeispiel einer erfindungsgemäßen Flugzeugsitzvorrichtung. Die Flugzeugsitzvorrichtung ist Teil eines teilweise dargestellten Flugzeugsitzes 10f. Die Flugzeugsitzvorrichtung weist eine Aufständereinheit 12f auf. Mittels der Aufständereinheit 12f ist der Flugzeugsitz 10f auf dem Kabinenboden einer Flugzeugkabine aufständerbar. Die Aufständereinheit 12f weist zwei Querträger 22f, 24f auf. Die Flugzeugsitzvorrichtung weist zwei Sitzstrukturelemente 26f, 28f auf. Die zwei Sitzstrukturelemente 26f, 28f sind jeweils auf einer Seite eines Sitzbereichs 30f der Flugzeugsitzvorrichtung angeordnet. Die zwei Sitzstrukturelemente 26f, 28f sind jeweils seitlich eines Sitzbereichs 30f, den der Flugzeugsitz 10f ausbildet, angeordnet. Die Sitzstrukturelemente 26f, 28f sind als Sitzteiler ausgebildet. Die Sitzstrukturelemente 26f, 28f sind an den Querträgern 24f angeordnet. Die Sitzstrukturelemente 26f, 28f sind im Wesentlichen L-förmig ausgebildet. Die Sitzstrukturelemente 26f, 28f erstrecken sich also in ihrem hinteren Bereich nach oben, von der Aufständereinheit 12f, insbesondere der Aufständerebene weg. Die Sitzstrukturelemente 26f, 28f erstrecken sich in ihrem hinteren Bereich nach oben bis im Wesentlichen auf eine Armlehnenhöhe X. Die Sitzstrukturelemente 26f, 28f erstrecken sich bis auf eine Armlehnenhöhe X des Flugzeugsitzes 10f.

Die Flugzeugsitzvorrichtung umfasst eine Rückenlehne 34f. Die Rückenlehne 34f ist schwenkbar zu der Aufständereinheit 12f angeordnet. Die Rückenlehne 34f ist an die Sitzstrukturelemente 26f, 28f angebunden. Die Rückenlehne 34f ist dazu vorgesehen, zwischen einer aufrechten Sitzstellung und einer Komfortstellung verschwenkt zu werden. Die Rückenlehne 34f weist ein schwenkbares Rückenlehnenelement 36f auf. Das schwenkbare Rückenlehnenelement 36f ist schwenkbar an der Aufständereinheit 12f gelagert. Die Sitzstrukturelemente 26f, 28f weisen jeweils eine Lagerstelle 38f, 40f zur Lagerung des schwenkbaren Rückenlehnenelements 36f auf. Die Flugzeugsitzvorrichtung weist eine Lagervorrichtung 42f auf. Die Lagervorrichtung 42f ist dazu vorgesehen, die Rückenlehne 34f verschwenkbar zwischen der aufrechten Sitzstellung und der Komfortstellung zu lagern. Die Lagervorrichtung 42f ist dazu vorgesehen, das schwenkbare Rückenlehnenelement 36f verschwenkbar zwischen der aufrechten Sitzstellung und der Komfortstellung zu lagern. Die Lagervorrichtung 42f bildet eine Drehachse 44f aus. Die Lagervorrichtung 42f weist zwei Lagerbolzen 46f, 48f auf. Die Lagerbolzen 46f, 48f bilden die Drehachse 44f aus. Die Lagerbolzen 46f, 48f sind jeweils mit einer der Lagerstellen 38f, 40f eines der Sitzstrukturelemente 26f, 28f verbunden. Die Rückenlehne 34f ist als eine Rückenlehne mit einem hohen Rückenlehnendrehpunkt ausgebildet. Der Rückenlehnendrehpunkt, also die Drehachse 44f der Lagervorrichtung 42f, ist oberhalb eines Kniebereichs 50f des Flugzeugsitzes 10f angeordnet. Zur Ausbildung des hohen Rückenlehnendrehpunkts bilden die Sitzstrukturelemente 26f, 28f ihre Lagerstellen 38f, 40f zur Lagerung der Rückenlehne 34f in einem hohen Bereich aus. Die Lagerstellen 38f, 40f der Sitzstrukturelemente 26f, 28f sind oberhalb des Kniebereichs 50f angeordnet. Die Lagerstellen 38f, 40f der Sitzstrukturelemente 26f, 28f sind in der Armlehnenhöhe X angeordnet.

Das schwenkbare Rückenlehnenelement 36f weist einen Rückenlehnenrahmen 60f auf. Der Rückenlehnenrahmen 60f bildet eine tragende Struktur des schwenkbaren Rückenlehnenelements 36f aus. Das schwenkbare Rückenlehnenelement 36f kann vorzugsweise ähnlich ausgebildet sein wie die der ersten beiden Ausführungsbeispiele und ein Schalenelement oder eine Bespannung aufweisen. Die Rückenlehne 34f weist zudem ein hier nicht näher dargestelltes unteres Rückenlehnenelement auf, das einen unteren Bereich der Rückenlehne 34f ausbildet.

Die Flugzeugsitzvorrichtung weist ein Rückstellmodul 56f auf. Das Rückstellmodul 56f ist zu einer Rückstellung der Rückenlehne 34f aus der Komfortstellung in eine aufrechte Sitzstellung vorgesehen. Das Rückstellmodul 56f ist zur Rückstellung des schwenkbaren Rückenlehnenelements 36f vorgesehen. Das Rückstellmodul 56f ist zur Rückstellung der Rückenlehne 34f, insbesondere zur Rückstellung des schwenkbaren Rückenlehnenelements 36f, dazu vorgesehen, eine Rückstellkraft bereitzustellen. Das Rückstellmodul 56f weist zur Bereitstellung einer Rückstellkraft ein Federelement 58f auf. Das Federelement 58f ist wie im fünften Ausführungsbeispiel der Figuren 9 bis 11 als eine Gasdruckfeder ausgebildet. Das als Gasdruckfeder ausgebildete Federelement 58f ist dazu vorgesehen, die Rückstellkraft des Rückstellmoduls 56f bereitzustellen. Das als Gasdruckfeder ausgebildete Federelement 58f ist oberhalb der Lagerstellen 38f, 40f der Sitzstrukturelemente 26f, 28f angeordnet.

Das Rückstellmodul 56f weist ein Hebelgetriebe 110f auf. Das Hebelgetriebe 110f ist dazu vorgesehen, eine Federkraft des als Gasdruckfeder ausgebildeten Federelements 58f in eine Schwenkbewegung des schwenkbaren Rückenlehnenelements 36f umzuwandeln. Im Unterschied zu dem fünften Ausführungsbeispiel ist das Hebelgetriebe 110f beidseitig des Rückenlehnenrahmens 60f angeordnet. Das Hebelgetriebe 110f ist an beiden seitlichen Rahmenelementen des Rückenlehnenrahmens 60f angeordnet. Das Hebelgetriebe 110f ist dabei an einer Innenseite der beiden seitlichen Rahmenelemente des Rückenlehnenrahmens 60f angeordnet. Das Hebelgetriebe 110f weist zwei Exzenterelemente 124f, 126f auf. Die Exzenterelemente 124f, 126f sind jeweils auf einer Innenseite eines seitlichen Rahmenelements des Rückenlehnenrahmens 60f verschwenkbar angebunden. Die Exzenterelemente 124f, 126f sind koaxial zueinander angeordnet. Die Exzenterelemente 124f, 126f weisen jeweils einen ersten Anbindungspunkt 128f, 130f auf.

Das Hebelgetriebe 110f weist ein Torsionsrohr 132f auf. Das Torsionsrohr 132f verbindet die beiden Exzenterelemente 124f, 126f miteinander. Das Torsionsrohr 132f ist jeweils an den ersten Anbindungspunkt 128f, 130f der Exzenterelemente 124f, 126f drehfest angebunden. Das Torsionsrohr 132f verbindet die Exzenterelemente 124f, 126f an ihren ersten Anbindungspunkten 128f, 130f. Das erste Exzenterelement 124f ist auf der linken Seite des schwenkbaren Rückenlehnenelements 36f, die dem linken Sitzstrukturelement 26f zugewandt ist, angeordnet. Das erste Exzenterelement 124f weist einen zweiten Anbindungspunkt 134f auf, über den das als Gasdruckfeder ausgebildete Federelement 58f an das erste Exzenterelement 124f angebunden ist. Das als Gasdruckfeder ausgebildete Federelement 58f ist mit seinem zweiten Ende an den zweiten Anbindungspunkt 134f des ersten Exzenterelements 124f angebunden. Mit einem ersten Ende ist das als Gasdruckfeder ausgebildete Federelement 58f drehbar an der Aufständereinheit 12f angebunden. Vorzugsweise ist das als Gasdruckfeder ausgebildete Federelement 58f mit seinem ersten Ende drehbar an einem Lagerbolzen 46f der Lagervorrichtung 42f angebunden. Das zweite Exzenterelement 126f ist auf der rechten Seite des schwenkbaren Rückenlehnenelements 36f, die dem rechten Sitzstrukturelement 28f zugewandt ist, angeordnet. Das zweite Exzenterelement 126f weist ebenfalls einen zweiten Anbindungspunkt 136f auf. Das Hebelgetriebe 110f weist ein Hebelelement 138f auf, das schwenkbar an dem zweiten Anbindungspunkt 136f des zweiten Exzenterelements 126f angebunden ist. Das Hebelelement 138f ist mit seinem zweiten Ende an den Anbindungspunkt 136f des zweiten Exzenterelements 126f schwenkbar angebunden. Das Hebelelement 138f ist mit seinem ersten Ende drehbar an die Aufständereinheit 12f angebunden. Vorzugsweise ist das Hebelelement 138f mit seinem ersten Ende drehbar an dem Lagerbolzen 48f der Lagervorrichtung 42f angebunden.

Durch eine Längung oder Verkürzung des als Gasdruckfeder ausgebildeten Federelements 58f verdrehen sich die Exzenterelemente 124f, 126f. Ist das schwenkbare Rückenlehnenelement 36f in seiner Komfortstellung nach hinten geschwenkt, so ist das als Gasdruckfeder ausgebildete Federelement 58f gestaucht. Dadurch sind die Exzenterelemente 124f, 126f verschwenkt. Wird nun das als Gasdruckfeder ausgebildete Federelement 58f betätigt, also entriegelt, drückt das als Gasdruckfeder ausgebildete Federelement 58f über den zweiten Anbindungspunkt 134f auf das erste Exzenterelement 124f und verdreht dieses und damit das schwenkbare Rückenlehnenelement 36f in seine aufrechte Sitzstellung. Durch das Torsionsrohr 132f wird die Rückstellkraft des als Gasdruckfeder ausgebildeten Federelements 58f auf die gegenüberliegende Seite des Rückenlehnenrahmens 60f übertragen. Dadurch wird das schwenkbare Rückenlehnenelement 36f auf beiden Seiten gleichmäßig in die aufrechte Sitzstellung gedrückt.

Das gesamte Hebelgetriebe 110f, das als Gasdruckfeder ausgebildete Federelement 58f, sowie eine integral mit dem Federelement 58f ausgebildete Verriegeleinheit 88f sind oberhalb der Armlehnenhöhe X angeordnet. Das gesamte Rückstellmodul 56f ist oberhalb der Lagerstellen 38f, 40f der Sitzstrukturelemente 26f, 28f für das schwenkbare Rückenlehnenelement 36f angeordnet. Das Rückstellmodul 56f ist komplett oberhalb des Kniebereichs 50f der Rückenlehne 34f angeordnet.

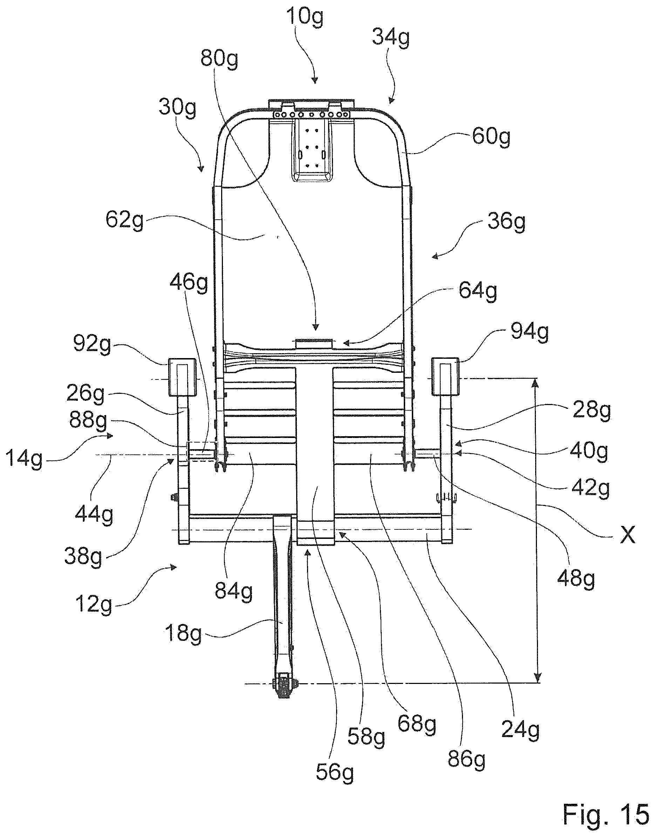

Die Figur 15 zeigt ein siebtes Ausführungsbeispiel einer erfindungsgemäßen Flugzeugsitzvorrichtung. Die Flugzeugsitzvorrichtung ist Teil eines teilweise dargestellten Flugzeugsitzes 10g. Die Flugzeugsitzvorrichtung weist eine Aufständereinheit 12g auf. Mittels der Aufständereinheit 12g ist der Flugzeugsitz 10g auf dem Kabinenboden der Flugzeugkabine aufständerbar. Die Aufständereinheit 12g weist zwei Querträger 24g auf. Die Flugzeugsitzvorrichtung weist zwei Sitzstrukturelemente 26g, 28g auf. Die zwei Sitzstrukturelemente 26g, 28g sind jeweils auf einer Seite eines Sitzbereichs 30g der Flugzeugsitzvorrichtung angeordnet. Die zwei Sitzstrukturelemente 26g, 28g sind jeweils seitlich eines Sitzbereichs 30g, den der Flugzeugsitz 10g ausbildet, angeordnet. Die Sitzstrukturelemente 26g, 28g sind als Sitzteiler ausgebildet. Die Sitzstrukturelemente 26g, 28g sind im wesentlichen L-förmig ausgebildet. Die Sitzstrukturelemente 26g, 28g weisen jeweils einen ersten Teilbereich auf, der in montiertem Zustand im Wesentlichen horizontal ausgerichtet ist. Die Sitzstrukturelemente 26g, 28g weisen jeweils einen zweiten Teilbereich auf, der in montiertem Zustand im Wesentlichen vertikal ausgerichtet ist. Der zweite Teilbereich der Sitzstrukturelemente 26g, 28g ist in einem hinteren Bereich des Flugzeugsitzes 10g angeordnet. Die Sitzstrukturelemente 26g, 28g sind an den Querträgern 24g angeordnet. Die Sitzstrukturelemente 26g, 28g erstrecken sich also in ihrem hinteren Bereich nach oben, von der Aufständereinheit 12g, insbesondere der Aufständerebene weg. Die Sitzstrukturelemente 26g, 28g erstrecken sich in ihrem hinteren Bereich nach oben bis im Wesentlichen auf eine Armlehnenhöhe X. Die Sitzstrukturelemente 26g, 28g erstrecken sich bis auf eine Armlehnenhöhe X des Flugzeugsitzes 10g.

Die Flugzeugsitzvorrichtung umfasst eine Rückenlehne 34g. Die Rückenlehne 34g ist schwenkbar zu der Aufständereinheit 12g angeordnet. Die Rückenlehne 34g ist an den Sitzstrukturelementen 26g, 28g angebunden. Die Rückenlehne 34g ist dazu vorgesehen, zwischen einer aufrechten Sitzstellung und einer Komfortstellung verschwenkt zu werden. Die Rückenlehne 34g weist ein schwenkbares Rückenlehnenelement 36g auf. Im Unterschied zu den vorhergehenden Ausführungsbeispielen ist die Rückenlehne 34g als eine Rückenlehne mit einem unteren Rückenlehnendrehpunkt ausgebildet. Die Rückenlehne 34g weist vorzugsweise kein mit den Sitzstrukturelementen 26g, 28g starr verbundenes unteres Rückenlehnenelement auf. Das schwenkbare Rückenlehnenelement 36g erstreckt sich bis in einen Bereich des Sitzbodens des Flugzeugsitzes 10g. Das schwenkbare Rückenlehnenelement 36g erstreckt sich bis in einen Bereich unterhalb einer von dem Sitzboden ausgebildeten Sitzfläche. Das schwenkbare Rückenlehnenelement 36g ist in einem Bereich unterhalb der Armlehenhöhe X schwenkbar gelagert.

Das schwenkbare Rückenlehnenelement 36g ist schwenkbar an die Sitzstrukturelemente 26g, 28g angebunden. Die Sitzstrukturelemente 26g, 28g weisen jeweils eine Lagerstelle 38g, 40g zur Lagerung des schwenkbaren Rückenlehnenelements 36g auf. Zur Ausbildung des unteren Rückenlehnendrehpunkts bilden die Sitzstrukturelemente 26g, 28g ihre Lagerstellen zur Lagerung des schwenkbaren Rückenlehnenelements 36g in einem unteren Bereich. Die Lagerstellen 38g, 40g der Sitzstrukturelemente 26g, 28g sind vorzugsweise in einem unteren Drittel der Sitzstrukturelemente 26g, 28g, insbesondere in einem unteren Drittel des zweiten Teilbereichs der Sitzstrukturelemente 26g, 28g angeordnet. Die Lagerstellen 38g, 40g der Sitzstrukturelemente 26g, 28g sind in einem Kniebereichs 50g der Rückenlehne 34g angeordnet. Die Lagerstellen 38g, 40g der Sitzstrukturelemente 26g, 28g sind unterhalb der Armlehnenhöhe X angeordnet.

Die Flugzeugsitzvorrichtung weist eine Lagervorrichtung 42g auf. Die Lagervorrichtung 42g ist dazu vorgesehen, das schwenkbare Rückenlehnenelement 36g verschwenkbar zwischen der aufrechten Sitzstellung der Komfortstellung zu lagern. Die Lagervorrichtung 42g bildet eine Drehachse 44g aus. Die Drehachse 44g zur Lagerung des schwenkbaren Rückenlehnenelements 36g ist unterhalb der Armlehnenhöhe X angeordnet. Die Lagervorrichtung 42g weist zwei Lagerbolzen 46g, 48g auf. Die Lagerbolzen 46g, 48g bilden die Drehachse 44g aus. Die Lagerbolzen 46g, 48g sind jeweils mit einer der Lagerstellen 38g, 40g eines der Sitzstrukturelemente 26g, 28g verbunden.

Das schwenkbare Rückenlehnenelement 36g weist einen Rückenlehnenrahmen 60g auf. Der Rückenlehnenrahmen 60g erstreckt sich bis in einen Bereich unterhalb der Lagerstellen 38g, 40g der Sitzstrukturelemente 26g, 28g. Das schwenkbare Rückenlehnenelement 36g weist ein Schalenelement 62g auf, das fest mit dem Rückenlehnenrahmen 60g des schwenkbaren Rückenlehnenelements 36g verbunden ist. Das Schalenelement 62g des schwenkbaren Rückenlehnenelements 36g weist einen Mittelbereich 80g und in einem unteren Bereich von dem Mittelbereich 80g jeweils sich seitlich nach außen erstreckende elastische Rippen 84g, 86g auf.

Die Flugzeugsitzvorrichtung weist ein Rückstellmodul 56g auf. Das Rückstellmodul 56g ist zu einer Rückstellung der Rückenlehne 34g aus der Komfortstellung in eine aufrechte Sitzstellung vorgesehen. Das Rückstellmodul 56g ist zur Rückstellung des schwenkbaren Rückenlehnenelements 36g vorgesehen. Das Rückstellmodul 56g weist zur Bereitstellung eine Rückstellkraft ein Federelement 58g auf. Das Federelement 58g ist als ein Blattfederelement ausgebildet. Das als Blattfederelement ausgebildete Federelement 58g ist funktionstechnisch zwischen dem schwenkbaren Rückenlehnenelement 36g und der Aufständereinheit 12g angeordnet.

Das als Blattfederelement ausgebildete Federelement 58g ist mit seinem ersten, unteren Ende, im Unterschied zu den anderen Ausführungsbeispielen direkt an die Aufständereinheit 12g, insbesondere an den hinteren Querträger 24g angebunden. Das als Blattfederelement ausgebildete Federelement 58g stützt sich mit seinem unteren Ende an dem hinteren Querträger 24g der Aufständereinheit ab. Zur Anbindung des als Blattfederelement ausgebildeten Federelements 58g an den hinteren Querträger 24g weist das Rückstellmodul 56g eine Befestigungseinheit 68g auf. Über die Befestigungseinheit 68g ist das als Blattfederelement ausgebildete Federelement 58g fest an die Aufständereinheit 12g angebunden. Die Befestigungseinheit 68g weist vorzugsweise ein Schellenelement auf, das den hinteren Querträger 24g umschließt und so fest an dem Querträger 24g angebunden ist. Über die Befestigungseinheit 68g ist das als Blattfederelement ausgebildete Federelement 58g vorzugsweise in zumindest eine Vertikalrichtung beweglich an den hinteren Querträger 24g angebunden. Das als Blattfederelement ausgebildete Federelement 58g ist mit einem zweiten, oberen Ende an dem schwenkbaren Rückenlehnenelement 36g angebunden. Zur Anbindung des als Blattfederelement ausgebildeten Federelements 58g an das schwenkbare Rückenlehnenelement 36g weist das Rückstellmodul 56g eine Befestigungseinheit 64g auf.

Das Rückstellmodul 56g weist eine Verriegeleinheit 88g auf. Die Verriegeleinheit 88g ist dazu vorgesehen, das Rückstellmodul 56g zu verriegeln, bzw. zu entriegeln. Die Verriegeleinheit 88g ist vorzugsweise in einem Bereich oberhalb der Lagerstellen 38g, 40g der Sitzstrukturelemente 26g, 28g angeordnet. Das gesamte Rückstellmodul 56g, bis auf den Teilbereich des als Blattfeder ausgebildeten Federelements 58g, der sich bis zu dem Querträger 24g der Aufständereinheit 12g erstreckt, ist oberhalb der Lagerstellen 38g, 40g der Sitzstrukturelemente 26g, 28g, also oberhalb der Drehachse 44g des schwenkbaren Rückenlehnenelements 36g angeordnet.

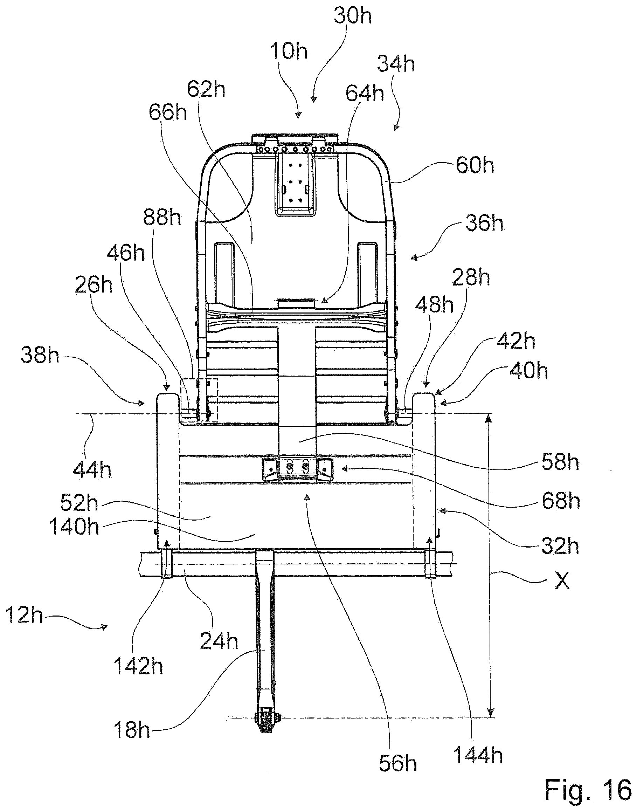

Die Figur 16 zeigt ein achtes Ausführungsbeispiel einer erfindungsgemäßen Flugzeugsitzvorrichtung. Die Flugzeugsitzvorrichtung ist Teil eines teilweise dargestellten Flugzeugsitzes 10h. Die Flugzeugsitzvorrichtung weist eine Aufständereinheit 12h auf. Mittels der Aufständereinheit 12h ist der Flugzeugsitz 10h auf dem Kabinenboden der Flugzeugkabine aufständerbar. Die Aufständereinheit 12h weist zwei Querträger 24h auf. Die Flugzeugsitzvorrichtung weist zwei Sitzstrukturelemente 26h, 28h auf. Die zwei Sitzstrukturelemente 26h, 28h sind jeweils auf einer Seite eines Sitzbereichs 30h der Flugzeugsitzvorrichtung angeordnet. Die zwei Sitzstrukturelemente 26h, 28h sind jeweils seitlich eines Sitzbereichs 30h, den der Flugzeugsitz 10h ausbildet, angeordnet. Das schwenkbare Rückenlehnenelement 36h ist schwenkbar an den Sitzstrukturelementen 26h, 28h angebunden. Die Sitzstrukturelemente 26h, 28h weisen jeweils eine Lagerstelle 38h, 40h zur Lagerung des schwenkbaren Rückenlehnenelements 36h auf.

Die Flugzeugsitzvorrichtung umfasst einen Sitzboden 32h. Der Sitzboden 32h weist einen tragenden Grundkörper auf. Der Sitzboden 32h weist zudem ein Polsterelement auf, das auf dem Grundköper angebunden ist. Der Sitzboden 32h ist an die Aufständereinheit 12h angebunden. Die Flugzeugsitzvorrichtung umfasst eine Rückenlehne 34h. Die Rückenlehne 34h ist schwenkbar zu der Aufständereinheit 12h angeordnet. Die Rückenlehne 34h ist an den Sitzstrukturelementen 26h, 28h angebunden. Die Rückenlehne 34h ist als eine Rückenlehne mit einem hohen Rückenlehnendrehpunkt ausgebildet. Die Rückenlehne 34h weist ein unteres Rückenlehnenelement 52h auf. Das untere Rückenlehnenelement 52h bildet einen unteren Bereich der Rückenlehne 34h aus. Das untere Rückenlehnenelement 52h bildet in dem unteren Bereich der Rückenlehne 34h die Rückenlehnenabstützfläche aus. Das untere Rückenlehnenelement 52h ist starr mit der Aufständereinheit 12h verbunden. Die Rückenlehne 34h ist dazu vorgesehen, zwischen einer aufrechten Sitzstellung und einer Komfortstellung verschwenkt zu werden. Die Rückenlehne 34h weist ein schwenkbares Rückenlehnenelement 36h auf. Das schwenkbare Rückenlehnenelement 36h weist einen Rückenlehnenrahmen 60h auf. Das schwenkbare Rückenlehnenelement 36h weist ein Schalenelement 62h auf. Das schwenkbare Rückenlehnenelement 36h ist im Wesentlichen gleich ausgebildet wie im ersten Ausführungsbeispiel und soll deshalb hier nicht im Detail beschrieben werden.

Im Unterschied zu den vorhergehenden Ausführungsbeispielen sind die Sitzstrukturelemente 26h, 28h nicht als Sitzteiler ausgebildet. Die Flugzeugsitzvorrichtung weist ein Sitzschalenelement 140h auf. Das Sitzschalenelement 140h bildet das untere Rückenlehnenelement 52h und den Grundkörper des Sitzbodens 32h einstückig aus. Das Sitzschalenelement 140h bildet in einem unteren, vorderen Bereich den Grundkörper des Sitzbodens 32h aus. In einem hinteren Bereich bildet das Sitzschalenelement 140h das untere Rückenlehnenelement 52h aus. Das Sitzschalenelement 140h ist von einem faserverstärkten Kunststoff gebildet. Das Sitzschalenelement 140h ist vorzugsweise aus einem CFK oder einem GFK gebildet. Grundsätzlich ist es auch denkbar, dass das Sitzschalenelement 140h von einem anderen geeigneten faserverstärkten Kunststoff gebildet ist. Das Sitzschalenelement 140h ist in einer Seitenansicht im Wesentlichen L-förmig ausgebildet. Die Sitzstrukturelemente 26h, 28h sind im Unterschied zu den vorhergehenden Ausführungsbeispielen einstückig mit dem Sitzschalenelement 140h ausgebildet. Die Sitzstrukturelemente 26h, 28h sind zumindest teilweise von dem unteren Rückenlehnenelement 52h und dem Grundkörper eines Sitzbodens 32h ausgebildet. Das Sitzschalenelement 140h weist Seitenbereiche 142h, 144h auf. Die Seitenbereiche 142h, 144h bilden in Querrichtung betrachtet jeweils ein seitliches Ende des Sitzschalenelements 140h aus. Die Sitzstrukturelemente 26h, 28h sind in den Seitenbereichen 142h, 144h des Sitzschalenelements 140h ausgebildet. Die Seitenbereiche 142h, 144h des Sitzschalenelements 140h bilden jeweils eines der Sitzstrukturelemente 26h, 28h aus. Vorzugsweise weist das Sitzschalenelement 140h in seinen Seitenbereichen 142h, 144h zur Ausbildung der Sitzstrukturelemente 26h, 28h jeweils zumindest ein Verstärkungselement auf. Die Verstärkungselemente können beispielsweise als Einleger ausgebildet sein, die in die Seitenbereiche 142h, 144h des Sitzschalenelements 140h eingelegt sind. Die als Einleger ausgebildeten Verstärkungselemente könnten beispielsweise aus einem Metall, wie einem Aluminium oder einem Magnesium ausgebildet sein. Grundsätzlich wäre es auch denkbar, dass die Verstärkungselemente von lokalen Verstärkungen aus einem CFK oder GFK gebildet sind.

Das Sitzschalenelement 140h erstreckt sich in seinen Seitenbereichen 142h, 144h, in denen es die Sitzstrukturelemente 26h, 28h ausbildet, bis über eine Oberkante des von ihm ausgebildeten unteren Rückenlehnenelements 52h. Das Sitzschalenelement 140h erstreckt sich in seinen Seitenbereichen 142h, 144h, in denen es die Sitzstrukturelemente 26h, 28h ausbildet, bis über eine Armlehnenhöhe X. Das Sitzschalenelement 140h bildet in seinen Seitenbereichen 142h, 144h jeweils in den oberen Endbereichen die Lagerstellen 38h, 40h der Sitzstrukturelemente 26h, 28h aus. Das Sitzschalenelement 140h bildet in den oberen Endbereichen seiner Seitenbereichen 142h, 144h jeweils die Lagerstellen 38h, 40h der Sitzstrukturelemente 26h, 28h aus, über die das schwenkbare Rückenlehnenelement 36h schwenkbar gelagert ist. Das schwenkbare Rückenlehnenelement 36h ist über die Lagerstellen 38h, 40h direkt schwenkbar mit dem Sitzschalenelement 140h verbunden.

Die Flugzeugsitzvorrichtung weist eine Lagervorrichtung 42h auf. Die Lagervorrichtung 42h ist dazu vorgesehen, das schwenkbare Rückenlehnenelement 36h verschwenkbar zwischen der aufrechten Sitzstellung der Komfortstellung zu lagern. Die Lagervorrichtung 42h bildet eine Drehachse 44h aus. Die Lagervorrichtung 42h weist zwei Lagerbolzen 46h, 48h auf. Die Lagerbolzen 46h, 48h sind jeweils mit einer der Lagerstellen 38h, 40h der von dem Sitzschalenelement 140h ausgebildeten Sitzstrukturelemente 26h, 28h verbunden. Die Lagerbolzen 46h, 48h sind mit dem Sitzschalenelement 140h fest verbunden. Über die Lagerbolzen 46h, 48h ist das schwenkbare Rückenlehnenelement 36h direkt schwenkbar an das Sitzschalenelement 140h angebunden.

Das Sitzschalenelement 140h ist breiter ausgebildet als das schwenkbare Rückenlehnenelement 36h. Das Sitzschalenelement 140h umgreift mit seinen oberen Enden der Seitenbereiche 142h, 144h, in denen die Lagerstellen 38h, 40h angeordnet sind, das schwenkbare Rückenlehnenelement 36h, insbesondere dessen Rückenlehnenrahmen 60h, an seinem unteren Ende. Die Lagerbolzen 46h, 48h erstrecken sich von den Seitenbereichen 142h, 144h des Sitzschalenelements 140h jeweils nach innen, in Richtung des Rückenlehnenrahmens 60h des schwenkbaren Rückenlehnenelements 36h. Das schwenkbare Rückenlehnenelement 36h ist schwenkbar an den Lagerbolzen 46h, 48h angebracht.

Die Flugzeugsitzvorrichtung weist ein Rückstellmodul 56h auf. Das Rückstellmodul 56h ist zu einer Rückstellung der Rückenlehne 34h aus der Komfortstellung in eine aufrechte Sitzstellung vorgesehen. Das Rückstellmodul 56h ist zur Rückstellung des schwenkbaren Rückenlehnenelements 36h vorgesehen. Das Rückstellmodul 56h ist zur Rückstellung der Rückenlehne 34h, insbesondere zur Rückstellung des schwenkbaren Rückenlehnenelements 36h dazu vorgesehen, eine Rückstellkraft bereitzustellen. Das Rückstellmodul 56h weist zur Bereitstellung einer Rückstellkraft ein Federelement 58h auf. Das Federelement 58h ist als ein Blattfederelement ausgebildet. Das Rückstellmodul 56h kann vorzugsweise so ausgebildet sein wie in einem der vorhergehenden Ausführungsbeispiele. Beispielhaft ist das Rückstellmodul 56h im Wesentlichen gleich ausgebildet wie in dem ersten Ausführungsbeispiel.

Das als Blattfederelement ausgebildete Federelement 58h ist funktionstechnisch zwischen dem Sitzschalenelement 140h und dem schwenkbaren Rückenlehnenelement 36h angeordnet. Das als Blattfederelement ausgebildete Federelement 58h ist mit seinem ersten, unteren Ende an dem Sitzschalenelement 140h, insbesondere an dem von dem Sitzschalenelement 140h ausgebildeten unteren Rückenlehnenelement 52h, angebunden.

Zur Anbindung des als Blattfederelement ausgebildeten Federelements 58h an das Sitzschalenelement 140h weist das Rückstellmodul 56h eine Befestigungseinheit 68h auf. Über die Befestigungseinheit 68h ist das als Blattfederelement ausgebildete Federelement 58h beweglich an das Sitzschalenelement 140h angebunden. Zur Anbindung des als Blattfederelement ausgebildeten Federelements 58h an das schwenkbare Rückenlehnenelement 36h weist das Rückstellmodul 56h eine Befestigungseinheit 64h auf. Das schwenkbare Rückenlehnenelement 36h weist einen Querträger 66h auf. Das als Blattfederelement ausgebildete Federelement 58h ist über die Befestigungseinheit 64h direkt an den Querträger 66h angebunden.

Das Rückstellmodul 56h weist eine Verriegeleinheit 88h auf. Die Verriegeleinheit 88h ist dazu vorgesehen, das Rückstellmodul 56h zu verriegeln, bzw. zu entriegeln. Die Verriegeleinheit 88h ist funktionstechnisch vorzugsweise zwischen dem schwenkbaren Rückenlehnenelement 36h, insbesondere dem Rückenlehnenrahmen 60h und einem dem Sitzschalenelement 140h angeordnet. Die Verriegeleinheit 88h ist oberhalb eines Kniebereichs 50h der Rückenlehne 34h angeordnet. Die Verriegeleinheit 88h ist vorzugsweise in einem Bereich oberhalb der Lagerstellen 38h, 40h der von dem Sitzschalenelement 140h ausgebildeten Sitzstrukturelemente 26h, 28h angeordnet. Die Verriegeleinheit 88h ist vorzugsweise im Wesentlichen, also zu einem Großteil oberhalb der Armlehnenhöhe X angeordnet.

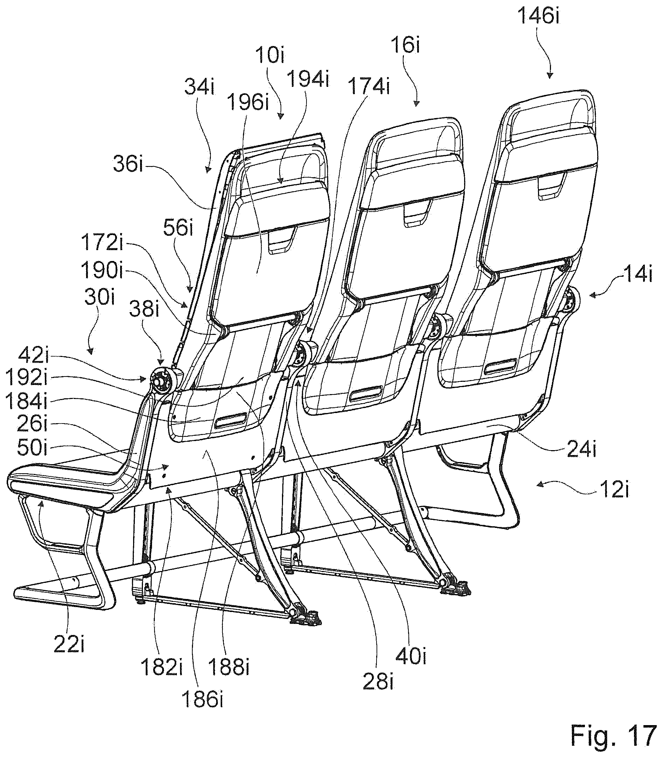

Die Figuren 17 bis 20 zeigen ein neuntes Ausführungsbeispiel einer erfindungsgemäßen Flugzeugsitzvorrichtung. Die Flugzeugsitzvorrichtung ist dabei Teil eines Flugzeugsitzes 10i. Der Flugzeugsitz 10i ist in einem montierten Zustand in einer Flugzeugkabine eines Flugzeugs aufgeständert. Die Flugzeugsitzvorrichtung weist eine Aufständereinheit 12i auf. Mittels der Aufständereinheit 12i ist der Flugzeugsitz 10i auf dem Kabinenboden der Flugzeugkabine aufständerbar. Der Flugzeugsitz 10i ist vorzugsweise als ein Teil einer Flugzeugsitzreihe 14i ausgebildet, die mehr als einen Flugzeugsitz 10i umfasst. Beispielhaft ist in den Figuren die Flugzeugsitzreihe 14i mit drei Flugzeugsitzen 10i, 16i, 146i gezeigt. Die beispielhaft gezeigte Flugzeugsitzreihe 14i weist einen zweiten Flugzeugsitz 16i und einen dritten Flugzeugsitz 146i auf. Der zweite Flugzeugsitz 16i ist als ein mittlerer Sitz der Flugzeugsitzreihe 14i ausgebildet und zwischen den beiden anderen Flugzeugsitzen 16i, 146i angeordnet. Die weiteren Flugzeugsitze 16i, 146i der Flugzeugsitzreihe 14i sind vorzugsweise im Wesentlichen identisch zu dem ersten Flugzeugsitz 10i ausgebildet, weswegen im Folgenden lediglich der eine Flugzeugsitz 10i näher beschrieben wird.

Die Aufständereinheit 12i weist zwei Querträger 22i, 24i auf. Die Querträger 22i, 24i sind als Tragrohre ausgebildet. Die Querträger 22i, 24i erstrecken sich zumindest im Wesentlichen über eine gesamte Quererstreckung aller Flugzeugsitze 10i der Flugzeugsitzreihe 14i. Die Flugzeugsitzvorrichtung weist zwei Sitzstrukturelemente 26i, 28i auf. Die zwei Sitzstrukturelemente 26i, 28i sind jeweils auf einer Seite eines Sitzbereichs 30i der Flugzeugsitzvorrichtung angeordnet. Die zwei Sitzstrukturelemente 26i, 28i sind jeweils seitlich eines Sitzbereichs 30i, den der Flugzeugsitz 10i ausbildet, angeordnet. Die Sitzstrukturelemente 26i, 28i sind als Sitzteiler ausgebildet. Die als Sitzteiler ausgebildeten Sitzstrukturelemente 26i, 28i sind dazu vorgesehen, dass verschiedene Bauteile des entsprechenden Flugzeugsitzes 10i, 16i, 146i an diesen befestigt werden. Die Sitzstrukturelemente 26i, 28i erstrecken sich also in ihrem hinteren Bereich nach oben, von der Aufständereinheit 12i, insbesondere der Aufständerebene, weg. Die Sitzstrukturelemente 26i, 28i erstrecken sich in ihrem hinteren Bereich nach oben bis im Wesentlichen auf eine Armlehnenhöhe X. Die Sitzstrukturelemente 26i, 28i erstrecken sich bis auf eine Armlehnenhöhe X des Flugzeugsitzes 10i.

Die Flugzeugsitzvorrichtung umfasst eine Rückenlehne 34i. Die Rückenlehne 34i ist dazu vorgesehen, dass eine Person, die auf dem Flugzeugsitz 10i sitzt, dessen Teil die Flugzeugsitzvorrichtung ist, ihren Rücken an der Rückenlehne 34i abstützen kann. Die Rückenlehne 34i ist schwenkbar zu der Aufständereinheit 12i angeordnet. Die Rückenlehne 34i ist an die Sitzstrukturelemente 26i, 28i angebunden. Die Rückenlehne 34i ist dazu vorgesehen, zwischen einer aufrechten Sitzstellung und einer Komfortstellung verschwenkt zu werden. Die Rückenlehne 34i weist ein schwenkbares Rückenlehnenelement 36i auf. Das schwenkbare Rückenlehnenelement 36i ist schwenkbar an der Aufständereinheit 12i gelagert. Das schwenkbare Rückenlehnenelement 36i ist schwenkbar an den Sitzstrukturelementen 26i, 28i angebunden. Die Sitzstrukturelemente 26i, 28i weisen jeweils eine Lagerstelle 38i, 40i zur Lagerung der Rückenlehne 34i auf. Die Lagerstellen 38i, 40i sind dazu vorgesehen, dass das schwenkbare Rückenlehnenelement 36i daran gelagert wird.

Die Flugzeugsitzvorrichtung weist eine Lagervorrichtung 42i auf. Die Lagervorrichtung 42i ist dazu vorgesehen, die Rückenlehne 34i verschwenkbar zwischen der aufrechten Sitzstellung und der Komfortstellung zu lagern. Die Lagervorrichtung 42i ist dazu vorgesehen, das schwenkbare Rückenlehnenelement 36i verschwenkbar zwischen der aufrechten Sitzstellung und der Komfortstellung zu lagern. Die Lagervorrichtung 42i bildet eine Drehachse 44i aus. Das schwenkbare Rückenlehnenelement 36i ist mittels der Lagervorrichtung 42i um die Drehachse 44i schwenkbar. Die Lagervorrichtung 42i weist zwei Lagerbolzen 46i, 48i auf. Die Lagerbolzen 46i, 48i bilden die Drehachse 44i aus. Die Lagerbolzen 46i, 48i sind jeweils mit einer der Lagerstellen 38i, 40i eines der Sitzstrukturelemente 26i, 28i verbunden.

Das schwenkbare Rückenlehnenelement 36i weist einen Rückenlehnenrahmen 60i auf. Der Rückenlehnenrahmen 60i bildet eine tragende Struktur des schwenkbaren Rückenlehnenelements 36i aus. Der Rückenlehnenrahmen 60i ist als ein umlaufender Rahmen ausgebildet. Der Rückenlehnenrahmen 60i weist zwei seitliche Rahmenelemente und ein oberes Rahmenelement auf, das die beiden seitlichen Rahmenelemente an einem oberen Ende des Rückenlehnenrahmens 60i verbindet. Das untere Ende des Rückenlehnenrahmens 60i bildet ein unteres Ende des schwenkbaren Rückenlehnenelements 36i aus. Die Lagerbolzen 46i, 48i sind jeweils an einem unteren Ende des Rückenlehnenrahmens 60i an dem zugewandten seitlichen Rahmenelement an den Rückenlehnenrahmen 60i des schwenkbaren Rückenlehnenelements 36i angebunden. Die Rückenlehne 34i ist als eine Rückenlehne mit einem hohen Rückenlehnendrehpunkt ausgebildet. Der Rückenlehnendrehpunkt, also die Drehachse 44i der Lagervorrichtung 42i, ist oberhalb eines Kniebereichs 50i des Flugzeugsitzes 10i angeordnet. Zur Ausbildung des hohen Rückenlehnendrehpunkts bilden die Sitzstrukturelemente 26i, 28i ihre Lagerstellen 38i, 40i zur Lagerung der Rückenlehne 34i in einem hohen Bereich aus. Die Lagerstellen 38i, 40i der Sitzstrukturelemente 26i, 28i sind oberhalb des Kniebereichs 50i angeordnet. Die Lagerstellen 38i, 40i der Sitzstrukturelemente 26i, 28i sind in der Armlehnenhöhe X angeordnet.

Das schwenkbare Rückenlehnenelement 36i weist ein Schalenelement 62i auf. Das Schalenelement 62i ist als ein plattenartiges Element ausgebildet. Das Schalenelement 62i ist aus einem faserverstärkten Kunststoff gebildet. Das Schalenelement 62i ist beispielsweise aus einem GFK oder einem CFK gebildet. Das Schalenelement 62i ist dazu vorgesehen, die Rückenlehnenabstützfläche des schwenkbaren Rückenlehnenelements 36i auszubilden. Das Schalenelement 62i ist in einem von dem Rückenlehnenrahmen 60i aufgespannten Innenbereich des schwenkbaren Rückenlehnenelements 36i angeordnet. Das Schalenelement 62i ist fest mit dem Rückenlehnenrahmen 60i des schwenkbaren Rückenlehnenelements 36i verbunden. Das Schalenelement 62i ist dazu vorgesehen, dass auf ihm ein Polsterelement der Rückenlehne 34i angebracht wird.

Das schwenkbare Rückenlehnenelement 36i weist in einem unteren Bereich sich von dem Mittelbereich 80i jeweils seitlich nach außen erstreckende elastische Rippen 84i, 86i auf. Beispielhaft sind in dem Ausführungsbeispiel je Seite jeweils drei elastische Rippen 84i, 86i dargestellt. Die elastischen Rippen 84i, 86i sind jeweils unabhängig voneinander elastisch verformbar. Die elastischen Rippen 84i, 86i sind vorzugsweise einstückig mit dem Schalenelement 62i, insbesondere mit dem Mittelbereich 80i, ausgebildet. Das Schalenelement 62i bildet in seinem unteren Bereich die elastischen Rippen 84i, 86i aus. Der untere Bereich ist vorzugsweise in etwa von einem unteren Drittel des Schalenelements 62i gebildet. Das Schalenelement 62i weist in seinem unteren Bereich zur Ausbildung der Rippen 84i, 86i mehrere Schlitze 148i, 150i auf. Die Schlitze 148i, 150i erstrecken sich jeweils von einer seitlichen Außenkante des Schalenelements 62i bis vor den Mittelbereich 80i. Die Schlitze 148i, 150i trennen die übereinander angeordneten elastischen Rippen 84i, 86i voneinander ab.

Die Rückenlehne 34i weist ein unteres Rückenlehnenelement 52i auf. Das untere Rückenlehnenelement 52i ist starr ausgebildet. Das untere Rückenlehnenelement 52i ist vorzugsweise unbeweglich ausgebildet. Das untere Rückenlehnenelement 52i bildet einen unteren Bereich der Rückenlehne 34i aus. Das untere Rückenlehnenelement 52i bildet in dem unteren Bereich der Rückenlehne 34i die Rückenlehnenabstützfläche aus. Das untere Rückenlehnenelement 52i ist fest an den Sitzstrukturelementen 26i, 28i befestigt. Das untere Rückenlehnenelement 52i erstreckt sich im Wesentlichen zwischen einer Höhe der Querträger 22i, 24i der Aufständereinheit 12i und einem unteren Ende des schwenkbaren Rückenlehnenelements 36i. Das untere Rückenlehnenelement 52i ist von einem Schalenelement gebildet. Das untere Rückenlehnenelement 52i ist von einer Schale aus einem faserverstärkten Kunststoff gebildet. Beispielsweise ist es denkbar, dass das untere Rückenlehnenelement 52i von einer GFK- oder einer CFK- Schale ausgebildet ist. Grundsätzlich wäre es auch denkbar, dass das untere Rückenlehnenelement 52i aus einem anderen Material, beispielsweise aus einem Blech, aus einer Folie, oder einem mehrschichtigen Aufbau mit einer Wabenstruktur ausgebildet ist. Das untere Rückenlehnenelement 52i weist einen oberen Bereich 152i auf. Der obere Bereich 152i bildet in etwa ein oberes Viertel des unteren Rückenlehnenelements 52i aus. Die obersten 5 - 10 cm des unteren Rückenlehnenelements 52i bilden den oberen Bereich 152i aus. Das Rückenlehnenelement 52i weist an seinem oberen Ende eine Lippe 104i auf. Die Lippe 104i bildet einen oberen Endbereich des unteren Rückenlehnenelements 52i aus. Die Lippe 104i ist in dem oberen Bereich 152i des unteren Rückenlehnenelements 52i ausgebildet. Die Lippe 104i bildet ein oberes Ende des oberen Bereichs 152i des unteren Rückenlehnenelements 52i aus. Die Lippe 104i ist einstückig mit dem Rest des unteren Rückenlehnenelements 52i ausgebildet. Die Lippe 104i ist in Querrichtung mittig an dem oberen Ende des unteren Rückenlehnenelements 52i angeordnet.

Das untere Rückenlehnenelement 52i ist in seinem oberen Bereich 152i flexibel ausgebildet. Das untere Rückenlehnenelement 52i ist in seinem oberen Bereich 152i flexibler ausgebildet als in seinem darunter angeordneten Hauptbereich 102i. Das untere Rückenlehnenelement 52i ist in seinem oberen Bereich 152i elastisch auslenkbar ausgebildet. Zur Ausbildung der Flexibilität in dem oberen Bereich 152i weist das untere Rückenlehnenelement 52i in dem oberen Bereich 152i ein Ausnehmungsmuster 154i auf. Das Ausnehmungsmuster 154i ist von wenigstens einer in das untere Rückenlehnenelement 52i eingebrachten Ausnehmungen 156i ausgebildet. Das Ausnehmungsmuster 154i ist lediglich in dem oberen Bereich 152i angeordnet. Grundsätzlich wäre es auch denkbar, dass das Ausnehmungsmuster 154i lediglich im Bereich der Lippe 104i angeordnet ist. Das Ausnehmungsmuster 154i ist in dem vorliegenden Ausführungsbeispiel von mehreren beabstandet zueinander angeordneten, als Schlitze ausgebildeten Ausnehmungen 156i gebildet. Die als Schlitze ausgebildeten Ausnehmungen 156i erstrecken sich von einer oberen Kante des unteren Rückenlehnenelements 52i bis unterhalb der Lippe 104i. Grundsätzlich wäre es auch denkbar, dass die Ausnehmungen 156i sich lediglich bis an eine untere Kante der Lippe 104i erstrecken. Die als Schlitze ausgebildeten Ausnehmungen 156i weisen eine Breite von 10 mm auf. Grundsätzlich wäre es auch denkbar, dass die als Schlitze ausgebildeten Ausnehmungen 156i eine Breite aufweisen, die in einem Bereich von 5 mm bis 30 mm liegt. In dem Ausführungsbeispiel sind beispielhaft vier als Schlitze ausgebildete Ausnehmungen 156i gezeigt. Grundsätzlich wäre es auch denkbar, dass das Ausnehmungsmuster 154i eine andere Anzahl an als Schlitzen ausgebildeten Ausnehmungen 156i aufweist. Grundsätzlich wäre es auch denkbar, dass die als Schlitze ausgebildeten Ausnehmungen 156i schmaler ausgebildet sind.

Grundsätzlich wäre es aber auch denkbar, dass das untere Rückenlehnenelement 52i aus einer Kombination aus verschiedenen Materialien gebildet ist. Beispielsweise wäre es denkbar, dass der obere Bereich 152i oder die Lippe 104i des unteren Rückenlehnenelements 52i aus einem anderen Material gebildet sind, als der Hauptbereich 102i. Beispielsweise wäre es denkbar, dass der Hauptbereich 102i aus einem biegesteifen Faserverbundmaterial oder einem Blech gebildet ist und der obere Bereich aus einem flexiblen Kunststoff oder Faserverbundmaterial, das fest an den Hauptbereich 102i angebunden ist. Ist das untere Rückenlehnenelement 52i aus einem Faserverbundwerkstoff gebildet, ist der obere flexible Bereich 152i vorzugsweise aus einer geringeren Anzahl an Lagen von Faserverbundschichten ausgebildet als der Hauptbereich 102i. Dadurch kann der obere Bereich 152i besonders einfach flexibler ausgebildet werden als der Hauptbereich 102i und das untere Rückenlehnenelement 52i vorteilhaft einstückig ausgebildet werden.

Die Flugzeugsitzvorrichtung weist ein Rückstellmodul 56i auf. Das Rückstellmodul 56i ist zu einer Rückstellung der Rückenlehne 34i aus der Komfortstellung in eine aufrechte Sitzstellung vorgesehen. Das Rückstellmodul 56i ist zu einer Rückstellung der Rückenlehne 34i aus ihrer verschwenkten Sitzstellung in die aufrechte Sitzstellung vorgesehen. Das Rückstellmodul 56i ist zur Rückstellung des schwenkbaren Rückenlehnenelements 36i vorgesehen. Das Rückstellmodul 56i ist zur Rückstellung der Rückenlehne 34i, insbesondere zur Rückstellung des schwenkbaren Rückenlehnenelements 36i, dazu vorgesehen, eine Rückstellkraft bereitzustellen. Das Rückstellmodul 56i ist zumindest im Wesentlichen in einem Bereich oberhalb der Lagerstellen 38i, 40i der Sitzstrukturelemente 26i, 28i angeordnet. Das Rückstellmodul 56i ist zumindest im Wesentlichen oberhalb, also auf einer der Aufständerebene abgewandten Seite, der Armlehnenhöhe X angeordnet. Das Rückstellmodul 56i ist zumindest zu einem Großteil oberhalb des Kniebereichs 50i der Rückenlehne 34i angeordnet.

Das Rückstellmodul 56i weist eine Verriegeleinheit 88i auf. Die Verriegeleinheit 88i ist dazu vorgesehen, das Rückstellmodul 56i zu verriegeln, bzw. zu entriegeln. Die Verriegeleinheit 88i ist dazu vorgesehen, die Rückenlehne 34i, also das schwenkbare Rückenlehnenelement 36i, zumindest in der aufrechten Sitzstellung und in der Komfortstellung zu verriegeln. Die Verriegeleinheit 88i ist dazu vorgesehen, die Rückenlehne 34i in ihrer aufrechten Sitzstellung zu verriegeln. Die Verriegeleinheit 88i ist dazu vorgesehen, das schwenkbare Rückenlehnenelement 36i in der aufrechten Sitzstellung zu verriegeln. Die Verriegeleinheit 88i kann das schwenkbare Rückenlehnenelement 36i in der Komfortstellung und in der aufrechten Sitzstellung verriegeln. Die Verriegeleinheit 88i weist einen Verriegelzustand und einen Entriegelzustand auf. In dem Verriegelzustand der Verriegeleinheit 88i ist die Rückenlehne 34i, insbesondere das schwenkbare Rückenlehnenelement 36i in der aktuellen Stellung, also entweder der aufrechten Sitzstellung oder der Komfortstellung verriegelt. In der Verriegelstellung der Verriegeleinheit 88i ist das schwenkbare Rückenlehnenelement 36i formschlüssig in einer Stellung, also der aufrechten Sitzstellung oder der Komfortstellung fixiert. In der Verriegelstellung der Verriegeleinheit 88i ist das schwenkbare Rückenlehnenelement 36i positionsfest relativ zu der Aufständereinheit 12i fixiert. Vorzugsweise ist die Verriegeleinheit 88i lediglich zur Verriegelung der Rückenlehne 34i, also des schwenkbaren Rückenlehnenelements 36i in der aufrechten Sitzstellung und in der Komfortstellung vorgesehen. Die Verriegeleinheit 88i ist vorzugsweise zum größten Teil oberhalb der Lagerstellen 38i, 40i angeordnet. Die Verriegeleinheit 88i ist zwischen den Sitzstrukturelementen 26i, 28i und dem schwenkbaren Rückenlehnenelement 36i angeordnet.

Die Verriegeleinheit 88i weist ein erstes Verriegelungsmodul 172i auf. Das erste Verriegelungsmodul 172i der Verriegeleinheit 88i ist auf einer linken Seite des schwenkbaren Rückenlehnenelements 36i angeordnet. Das erste Verriegelungsmodul 172i ist zwischen dem ersten, linken Sitzstrukturelement 26i und dem Rückenlehnenrahmen 60i angeordnet. Das erste Verriegelungsmodul 172i ist funktional zwischen dem linken Lagerbolzen 46i und dem linken seitlichen Rahmenelement des Rückenlehnenrahmens 38i angeordnet. Die Verriegeleinheit 88i weist ein zweites Verriegelungsmodul 174i auf. Das zweite Verriegelungsmodul 174i der Verriegeleinheit 88i ist auf einer rechten Seite des schwenkbaren Rückenlehnenelements 36i angeordnet. Das zweite Verriegelungsmodul 174i ist zwischen dem zweiten, rechten Sitzstrukturelement 28i und dem Rückenlehnenrahmen 38i angeordnet. Das zweite Verriegelungsmodul 174i ist funktional zwischen dem rechten Lagerbolzen 48i und dem rechten seitlichen Rahmenelement des Rückenlehnenrahmens 38i angeordnet. Die beiden Verriegelungsmodule 172i, 174i sind zusammen zur Verriegelung der Rückenlehne 34i, insbesondere des schwenkbaren Rückenlehnenelements 36i vorgesehen. Die beiden Verriegelungsmodule 172i, 174i der Verriegelungsvorrichtung 70i sind im Wesentlichen gleich ausgebildet. Die Verriegelungsmodule 172i, 174i sind im Wesentlichen spiegelbildlich zueinander ausgebildet. Vorzugsweise sind lediglich Betätigungsanbindungen oder Elemente zur Weiterleitung einer Betätigungskraft bei den Verriegelungsmodulen 172i, 174i unterschiedlich. Die Verriegelungsmodule 172i, 174i weisen einen im Wesentlichen gleichen, zueinander gespiegelten Aufbau auf.

Das Verriegelungsmodul 172i weist eine erste Verriegelungseinheit 176i auf. Die erste Verriegelungseinheit 176i ist dazu vorgesehen, an dem schwenkbaren Rückenlehnenelement 36i befestigt zu werden. Die erste Verriegelungseinheit 176i bildet einen dem schwenkbaren Rückenlehnenelement 36i zugewandten Teil des Verriegelungsmoduls 172i aus. Das Verriegelungsmodul 172i weist eine zweite Verriegelungseinheit 178i auf. Die zweite Verriegelungseinheit 178i ist dazu vorgesehen, an dem Lagerbolzen 46i verliersicher montiert zu werden. Die zweite Verriegelungseinheit 178i bildet einen der Aufständereinheit 12i zugewandten Teil des Verriegelungsmoduls 172i aus. Die erste Verriegelungseinheit 176i und die zweite Verriegelungseinheit 178i des Verriegelungsmoduls 172i sind beweglich zueinander gelagert. Die erste Verriegelungseinheit 176i und die zweite Verriegelungseinheit 178i sind durch die Anbindung an das schwenkbare Rückenlehnenelement 36i, bzw. an den Lagerbolzen 46i über die Lagerung des schwenkbaren Rückenlehnenelements 36i um die Drehachse 44i zueinander beweglich gelagert. Die erste Verriegelungseinheit 176i weist ein zwischen einer Verriegelstellung und einer Freigabestellung federbelastet verstellbares Sperrelement auf. Das Sperrelement ist zu einer formschlüssigen Verbindung mit der zweiten Verriegelungseinheit 178i vorgesehen.

Das Rückstellmodul 56i weist zur Bereitstellung einer Rückstellkraft ein erstes Federelement 58i auf. Das Rückstellmodul 56i weist zur Bereitstellung einer Rückstellkraft ein zweites Federelement 158i auf. Im Unterschied zu den vorhergehenden Ausführungsbeispielen weist das Rückstellmodul zwei Federelemente 58i, 158i auf. Die Federelemente 58i, 158i sind jeweils auf einer Seite des Rückenlehnenrahmens 60i angeordnet. Die Federelemente 58i, 158i sind jeweils an einem seitlichen Rahmenelement des Rückenlehnenrahmens 60i angebunden. Die Federelemente 58i, 158i sind in dem gezeigten Ausführungsbeispiel jeweils auf einer Außenseite eines seitlichen Rahmenelements des Rückenlehnenrahmens 60i angebunden. Die Federelemente 58i, 158i sind als Biegefedern ausgebildet. Die Federelemente 58i, 158i sind vorzugsweise als metallische Biegefedern ausgebildet. Die Federelemente 58i, 158i sind dazu vorgesehen, eine Federkraft bereitzustellen.

Die Federkraft der Federelemente 58i, 158i bildet die Rückstellkraft des Rückstellmoduls 56i. Die Federelemente 58i, 158i sind funktionstechnisch zwischen dem schwenkbaren Rückenlehnenelement 36i und der Aufständereinheit 12i angeordnet. Die Federelemente 58i, 158i sind dazu vorgesehen, sich an der Aufständereinheit 12i mit einer ersten Seite abzustützen. Die Federelemente 58i, 158i sind dazu vorgesehen, sich mit einer zweiten Seite jeweils an dem schwenkbaren Rückenlehnenelement 36i abzustützen. Die Federelemente 58i, 158i sind wirkungstechnisch jeweils zwischen einem der Sitzstrukturelemente 26i, 28i und einem seitlichen Rahmenelement des Rückenlehnenrahmens 60i angeordnet. Die Federelemente 58i, 158i sind jeweils gleich ausgebildet und äquivalent an dem Rückenlehnenrahmen 60i angebunden. Im Folgenden soll deshalb lediglich das eine Federelement 58i und dessen Anbindung beschrieben werden, wobei die Beschreibung zur Erläuterung des zweiten Federelements 158i herangezogen werden kann. Das Federelement 58i ist als eine Spiralfeder ausgebildet. Das Federelement 58i weist einen spiralförmigen Mittelbereich 160i und zwei von dem Mittelbereich 160i abstehende Federschenkel 162i, 164i auf. Das Rückstellmodul 65i weist ein Lagerelement 166i auf, über das das Federelement 58i an den Rückenlehnenrahmen 60i angebunden ist. Das Lagerelement 166i ist als ein Lagerzylinder ausgebildet. Das Lagerelement 166i weist eine Zylindermantelfläche auf, auf der das Federelement 58i mit seinem spiralförmigen Mittelbereich 160i aufliegt. Das Federelement 58i umgibt das Lagerelement 166i mit seinem spiralförmigen Mittelbereich 160i. Das Lagerelement 166i ist fest an der Außenseite des seitlichen Rahmenelements des Rückenlehnenrahmens 60i angebunden. Vorzugsweise ist das Lagerelement 166i über eine Schraubenverbindung positionsfest an die Außenseite des seitlichen Rahmenelements des Rückenlehnenrahmens 60i geschraubt.

Der erste Federschenkel 162i ist zur Abstützung an dem Lagerbolzen 46i vorgesehen. Der erste Federschenkel 162i ist zur Abstützung an der ersten Verriegelungseinheit 176i vorgesehen. Zur Abstützung des ersten Federschenkels 162i weist das Rückstellmodul 56i ein erstes Abstützelement 168i auf. Der erste Federschenkel 162i stützt sich an dem Abstützelement 168i ab, das von der ersten Verriegelungseinheit 176i gebildet ist. Das Abstützelement 168i ist vorzugsweise von einem Grundkörper 180i der ersten Verriegelungseinheit 176i gebildet. Der zweite Federschenkel 164i ist zur Abstützung an dem Rückenlehnenelement 36i vorgesehen. Der zweite Federschenkel 164i ist zur Abstützung an dem seitlichen Rahmenelement des Rückenlehnenrahmens 60i vorgesehen. Das Rückstellmodul 56i weist ein zweites Abstützelement 170i zur Abstützung des zweiten Federschenkels 164i auf. Das zweite Abstützelement 170i ist zur Abstützung des zweiten Federschenkels 164i an dem Rückenlehnenrahmen 60i vorgesehen. Das Abstützelement 170i ist als ein Abstützbolzen ausgebildet, der an einer Seitenfläche des seitlichen Rahmenelements des Rückenlehnenrahmens 60i fest angebunden ist. Vorzugswiese ist das Abstützelement 170i mittels einer Schraubenverbindung angebracht. Das Federelement 58i liegt zur Abstützung mit seinem Federschenkel 164i an dem Abstützelement 170i an.

Durch die zwei separaten Federelemente 58i, 158i, die jeweils auf einer Seite des Rückenlehnenrahmens 60i angeordnet sind, kann eine von dem Rückstellmodul bereitgestellte Rückstellkraft vorteilhaft gleichmäßig auf beiden Seiten des schwenkbaren Rückenlehnenelements 36i wirken. Dadurch kann vorteilhaft insbesondere auf eine weitere Versteifung des Rückenlehnenrahmens 60i zwischen den beiden seitlichen Rahmenelementen in einem Mittlebereich verzichtet werden. Dadurch kann das schwenkbare Rückenlehnenelement 36i vorteilhaft leicht ausgebildet werden.

Grundsätzlich wäre es auch denkbar, dass die Federelemente 58i, 158i und/oder die Verriegelungsmodule 172i, 174i der Verriegeleinheit 88i jeweils auf einer Innenseite des jeweiligen seitlichen Rahmenelements des Rückenlehnenrahmens 60i angebunden sind. Durch die Anbindung der Federelemente 58i, 158i und/oder die Verriegelungsmodule 172i, 174i der Verriegeleinheit 88i innerhalb des Rückenlehnenrahmens 60i könnte das schwenkbare Rückenlehnenelement 36i besonders vorteilhaft ausgebildet werden.

Die Flugzeugsitzvorrichtung weist ein unteres Abdeckmodul 182i auf. Das untere Abdeckmodul 182i ist zu einer zumindest teilweisen Abdeckung eines unteren Bereichs der Rückenlehne 34i zu einer Rückseite hin vorgesehen. Das untere Abdeckmodul 182i ist vorzugsweise zu einer Abdeckung zumindest eines Teilbereichs des unteren Rückenlehnenelements 52i vorgesehen. Das untere Abdeckmodul182i deckt das untere Rückenlehnenelement 52i in einem Teilbereich nach hinten ab. Das untere Abdeckmodul 182i weist ein Abdeckelement 184i auf. Das Abdeckelement 184i ist in einem oberen Bereich des unteren Rückenlehnenelements 52i angeordnet. Das Abdeckelement 184i ist mittig an dem unteren Rückenlehnenelement 52i an dessen Rückseite angeordnet. Das Abdeckelement 184i überdeckt zumindest die Lippe 104i und den oberen Bereich 152i des unteren Rückenlehnenelements 52i. Das Abdeckelement 184i ist dazu vorgesehen, den flexiblen oberen Bereich 152i des unteren Rückenlehnenelements 52i nach hinten abzudecken. Das Abdeckelement 184i ist mit dem unteren Rückenlehnenelement 52i verbunden. Vorzugsweise ist das Abdeckelement über Formschlusselemente, vorzugsweise insbesondere über Schraubenverbindungen lösbar mit dem unteren Rückenlehnenelement 52i verbunden. Das Abdeckelement 184i kann vorzugsweise eine Literaturtasche 188i oder andere Zusatzeinheiten ausbilden.

Das Abdeckelement 184i deckt einen unteren Bereich des unteren Rückenlehnenelements 52i nicht ab. Das untere Rückenlehnenelement 52i bildet in seinem unteren Bereich eine Sichtfläche 186i aus, die nach hinten nicht überdeckt ist. Die Sichtfläche des unteren Rückenlehnenelements 52i ist von keinem Abdeckelement 184i des Abdeckmoduls 182i überdeckt. Die Sichtfläche 186i des unteren Rückenlehnenelements 52i kann mit einer Beschichtung oder einer Folie überzogen sein. Grundsätzlich ist es auch denkbar, dass das Rückenlehnenelement 52i in seiner Sichtfläche 186i keinen Überzug aufweist. Das untere Rückenlehnenelement 52i bildet mit seiner Sichtfläche 186i ein Kickpanel der Rückenlehne 34i aus.

Die Flugzeugsitzvorrichtung weist ein oberes Abdeckmodul 190i auf. Das obere Abdeckmodul 190i ist dazu vorgesehen, den oberen Bereich der Rückenlehne 34i, insbesondere das schwenkbare Rückenlehnenelement 36i nach hinten abzudecken. Das obere Abdeckmodul 190i weist ein Abdeckelement 192i auf. Das Abdeckelement 192i erstreckt sich vorzugsweise über eine gesamte Rückseite des oberen, schwenkbaren Rückenlehnenelements 36i. Das obere Abdeckmodul 190i überdeckt vorzugsweise die seitlich angeordneten Verriegelungsmodule 172i, 174i der Verriegeleinheit 88i. Vorzugsweise ist es denkbar, dass das obere Abdeckmodul 190i in den Bereichen der Verriegelungsmodule 172i, 174i separat demontierbare Abdeckelemente aufweist, die einzeln von dem Rückenlehnenelement 36i getrennt werden können, um einfach an die Verriegelungsmodule 172i, 174i zu gelangen. Das Abdeckelement 192i bildet in seinem oberen Bereich eine Literaturtasche 194i aus. Die Literaturtasche 194i ist in einem Kopfbereich der Rückenlehne 34i angeordnet. Die Flugzeugsitzvorrichtung weist zudem einen schwenkbaren Tisch 196i auf. Der schwenkbare Tisch ist an dem Abdeckelement 192i des oberen Abdeckmoduls 190i anklappbar.

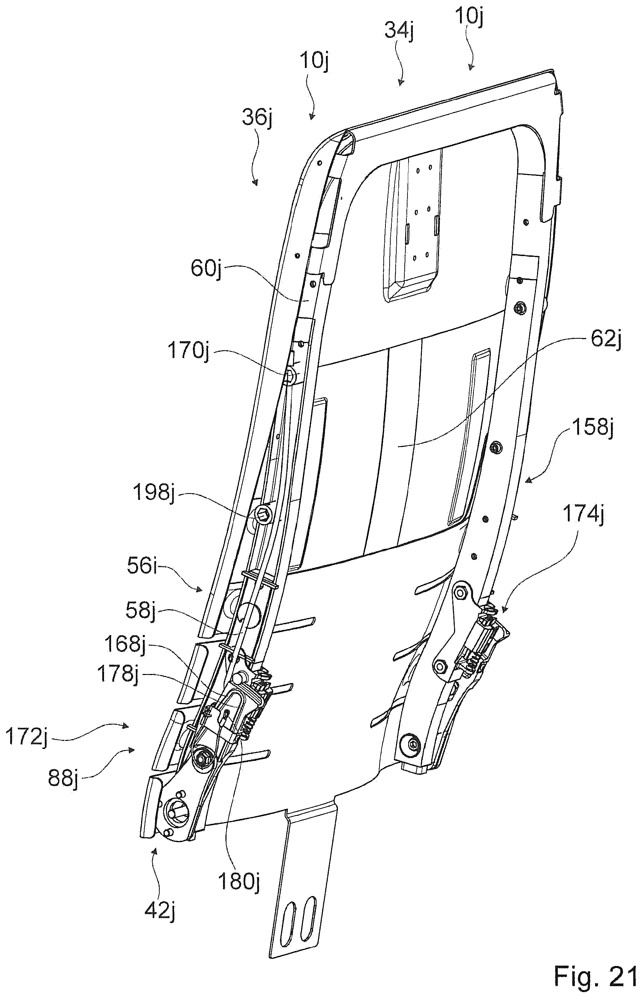

Die Figur 21 zeigt ein zehntes Ausführungsbeispiel einer erfindungsgemäßen Flugzeugsitzvorrichtung. Die Flugzeugsitzvorrichtung ist im Wesentlichen gleich ausgebildet wie die Flugzeugsitzvorrichtung des neunten Ausführungsbeispiels. Die Flugzeugsitzvorrichtung umfasst eine Rückenlehne 34j. Die Rückenlehne 34j ist dazu vorgesehen, dass eine Person, die auf dem Flugzeugsitz 10j sitzt, dessen Teil die Flugzeugsitzvorrichtung ist, ihren Rücken an der Rückenlehne 34j abstützen kann. Die Rückenlehne 34j weist ein schwenkbares Rückenlehnenelement 36j auf. Das schwenkbare Rückenlehnenelement 36j ist schwenkbar an einer Aufständereinheit 12j gelagert. Die Flugzeugsitzvorrichtung weist eine Lagervorrichtung 42j auf. Die Lagervorrichtung 42j ist dazu vorgesehen, die Rückenlehne 34j verschwenkbar zwischen der aufrechten Sitzstellung und der Komfortstellung zu lagern. Das schwenkbare Rückenlehnenelement 36j weist einen Rückenlehnenrahmen 60j auf. Die Flugzeugsitzvorrichtung weist ein Rückstellmodul 56j auf. Das Rückstellmodul 56j ist zu einer Rückstellung der Rückenlehne 34j aus der Komfortstellung in eine aufrechte Sitzstellung vorgesehen. Das Rückstellmodul 56j weist eine Verriegeleinheit 88j auf. Die Verriegeleinheit 88j ist dazu vorgesehen, das Rückstellmodul 56j zu verriegeln, bzw. zu entriegeln. Die Verriegeleinheit 88j ist dazu vorgesehen, die Rückenlehne 34j, also das schwenkbare Rückenlehnenelement 36j, zumindest in der aufrechten Sitzstellung und in der Komfortstellung zu verriegeln.

Das Rückstellmodul 56j weist zur Bereitstellung einer Rückstellkraft ein erstes Federelement 58j und ein zweites Federelement 158j auf. Im Unterschied zu dem vorhergehenden Ausführungsbeispiel sind die Federelemente 58j, 158j als Stabfederelemente ausgebildet. Die Stabfederelemente 58j, 158j sind jeweils zwischen einem an dem Rückenlehnenrahmen 60j angebrachten Abstützelement 170j und einem an einer Verriegelungseinheit 178j angebundenen Abstützelement 168j angeordnet. Das als Stabfederelement ausgebildete Federelement 58j stützt sich jeweils an einem Endbereich mit einer gleichen, ersten Seite an dem jeweiligen Abstützelement 168j, 170j ab. Das Rückstellmodul 56j weist ein Umlenkelement 198j auf, an dem sich das als Stabfederelement ausgebildete Federelement 58j mit einer gegenüberliegenden, zweiten Seite abstützen kann. Das Umlenkelement 198j ist zwischen den beiden Abstützelementen 168j, 180j angeordnet. Das Umlenkelement 198j ist im Wesentlichen mittig zwischen den beiden Abstützelementen 168j, 170j angeordnet. Das Umlenkelement 198j ist als ein Abstützbolzen ausgebildet, der an dem Rückenlehnenrahmen angebunden ist. Das Umlenkelement 198j ist an einer Außenseite des seitlichen Rahmenelements des Rückenlehnenrahmens 60j angeschraubt.

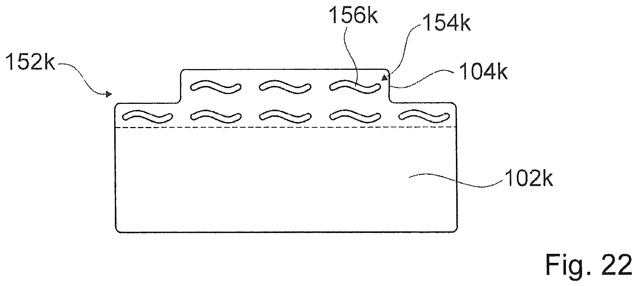

Figur 22 zeigt eine alternative Ausgestaltung eines unteren Rückenlehnenelements 52k in einem weiteren Ausführungsbeispiel. Die grundsätzliche Ausführung der Flugzeugsitzvorrichtung ist im Wesentlichen identisch zu der Ausgestaltung des neunten Ausführungsbeispiels. Das untere Rückenlehnenelement 52k ist in seinem oberen Bereich 152k flexibel ausgebildet. Das untere Rückenlehnenelement 52k ist in seinem oberen Bereich 152k flexibler ausgebildet als in seinem darunter angeordneten Hauptbereich 102k. Das untere Rückenlehnenelement 52k ist in seinem oberen Bereich 152k elastisch auslenkbar ausgebildet. Zur Ausbildung der Flexibilität in dem oberen Bereich 152k weist das untere Rückenlehnenelement 52k in dem oberen Bereich 152k ein Ausnehmungsmuster 154k auf. Das Ausnehmungsmuster 154k ist von wenigstens einer in das untere Rückenlehnenelement 52k eingebrachten Ausnehmung 156k ausgebildet. Das Ausnehmungsmuster 154k ist lediglich in dem oberen Bereich 152k angeordnet. Die Ausnehmungen 156k sind in dem vorliegenden Ausführungsbeispiel als wellenförmige Ausnehmungen 156k ausgebildet. Die wellenförmig ausgebildeten Ausnehmungen 156k verlaufen in einer Querrichtung. Mehrere wellenförmig ausgebildete Ausnehmungen 156k sind vorzugsweise in einer Querrichtung beabstandet zueinander in einer Reihe angeordnet. Grundsätzlich wäre es auch denkbar, dass die Ausnehmungen 156k eine andere Form aufweisen, oder unterschiedliche Formen ausbilden.

### Bezugszeichen

| | | | |
|---|---|---|---|
| 10 | Flugzeugsitz | 68 | Befestigungseinheit |
| 12 | Aufständereinheit | 70 | Befestigungsgrundkörper |
| 14 | Flugzeugsitzreihe | 72 | Befestigungselement |
| 16 | Flugzeugsitz | 74 | Befestigungselement |
| 18 | Sitzfuß | 76 | Durchgangsnut |
| 20 | Sitzfuß | 78 | Durchgangsnut |
| 22 | Querträger | 80 | Mittelbereich |
| 24 | Querträger | 82 | Aufnahmebereich |
| 26 | Sitzstrukturelement | 84 | Rippe |
| 28 | Sitzstrukturelement | 86 | Rippe |
| 30 | Sitzbereich | 88 | Verriegeleinheit |
| 32 | Sitzboden | 90 | Betätigungselement |
| 34 | Rückenlehne | 92 | Armlehne |
| 36 | schwenkbares Rückenlehnenelement | 94 | Armlehne |
| 38 | Lagerstelle | | |
| 40 | Lagerstelle | | |
| 42 | Lagervorrichtung | 100 | Bespannung |
| 44 | Drehachse | 102 | Hauptbereich |
| 46 | Lagerbolzen | 104 | Lippe |
| 48 | Lagerbolzen | 106 | Vorderseite |
| 50 | Kniebereich | 108 | Querversteifungselement |
| 52 | unteres Rückenlehnenelement | 110 | Hebelgetriebe |
| 54 | Befestigungselement | 112 | Grundhalteelement |
| 56 | Rückstellmodul | 114 | Befestigungsaufnahme |
| 58 | Federelement | 116 | Befestigungsaufnahme |
| 60 | Rückenlehnenrahmen | 118 | Hebelelement |
| 62 | Schalenelement | 120 | Lagerstelle |
| 64 | Befestigungseinheit | 122 | Koppelelement |
| 66 | Querträger | 124 | Exzenterelement |
| 126 | Exzenterelement | 178 | zweite Verriegelungseinheit |
| 128 | Anbindungspunkt | 180 | Grundkörper |
| 130 | Anbindungspunkt | 182 | unteres Abdeckmodul |
| 132 | Torsionsrohr | 184 | Abdeckelement |
| 134 | Anbindungspunkt | 186 | Sichtfläche |
| 136 | Anbindungspunkt | 188 | Literaturtasche |
| 138 | Hebelelement | 190 | Abdeckmodul |
| 140 | Sitzschalenelement | 192 | Abdeckelement |
| 142 | Seitenbereich | 194 | Literaturtasche |
| 144 | Seitenbereich | 196 | Tisch |
| 146 | Flugzeugsitz | 198 | Umlenkelement |
| 148 | Schlitz | | |
| 150 | Schlitz | | |
| 152 | Oberer Bereich | | |
| 154 | Ausnehmungsmuster | | |
| 156 | Ausnehmung | | |
| 158 | Federelement | | |
| 160 | Mittelbereich | | |
| 162 | Federschenkel | | |
| 164 | Federschenkel | | |
| 166 | Lagerelement | | |
| 168 | Abstützelement | | |
| 170 | Abstützelement | | |
| 172 | Verriegelungsmodul | | |
| 174 | Verriegelungsmodul | | |
| 176 | erste Verriegelungseinheit | | |

## Patentansprüche

1. Flugzeugsitzvorrichtung mit einer Aufständereinheit (12a; 12b; 12c; 12d; 12e; 12f; 12g; 12h), die zur Montage auf einem Kabinenboden vorgesehen ist und zumindest einen Querträger (22a, 24a; 22b, 24b; 22c, 24c; 22d, 24d; 22e, 24e; 22f, 24f; 22g, 24g; 22h, 24h) aufweist, mit zwei Sitzstrukturelementen (26a, 28a; 26b, 28b; 26c, 28c; 26d, 28d; 26e, 28e; 26f, 28f; 26g, 28g; 26h, 28h), die jeweils auf einer Seite eines Sitzbereichs (30a; 30b; 30c; 30d; 30e; 30f; 30g; 30h) angeordnet sind und jeweils eine Lagerstelle (38a, 40a; 38b, 40b; 38c, 40c; 38d, 40d; 38e, 40e; 38f, 40f; 38g, 40g; 38h, 40h) aufweisen, mit einer Rückenlehne (34a, 34b; 34c; 34d; 34e; 34f; 34g; 34h), die über die Lagerstellen (38a, 40a; 38b, 40b; 38c, 40c; 38d, 40d; 38e, 40e; 38f, 40f; 38g, 40g; 38h, 40h) der Sitzstrukturelemente (26a, 28a; 26b, 28b; 26c, 28c; 26d, 28d; 26e, 28e; 26f, 28f; 26g, 28g; 26h, 28h) angebunden ist, mit einer Lagervorrichtung (42a; 42b; 42c; 42d; 42e; 42f; 42g; 42h), die dazu vorgesehen ist, die Rückenlehne (34a; 34b; 34c; 34d; 34e; 34f; 34g; 34h) verschwenkbar zwischen einer aufrechten Sitzstellung und einer Komfortstellung zu lagern, wobei die Rückenlehne (34a; 34b; 34c; 34d; 34e; 34f; 34g; 34h) ein schwenkbares Rückenlehnenelement (36a; 36b; 36c; 36d; 36e; 36f; 36g; 36h) umfasst, und mit wenigstens einem Rückstellmodul (56a; 56b; 56c; 56d; 56e; 56f; 56g; 56h), das zumindest zur Bereitstellung einer Rückstellkraft zur Rückstellung der Rückenlehne (34a; 34b; 34c; 34d; 34e; 34f; 34g; 34h) aus der Komfortstellung in die aufrechte Sitzstellung vorgesehen ist und dazu zumindest zu einem großen Teil in einem Bereich oberhalb der Lagerstellen (38a, 40a; 38b, 40b; 38c, 40c; 38d, 40d; 38e, 40e; 38f, 40f; 38g, 40g; 38h, 40h) der Sitzstrukturelemente (26a, 28a; 26b, 28b; 26c, 28c; 26d, 28d; 26e, 28e; 26f, 28f; 26g, 28g; 26h, 28h) angeordnet ist, **dadurch gekennzeichnet, dass** die Lagerstellen (38a- 38h, 40a- 40h) zur Lagerung des schwenkbaren Rückenlehnenelements (36a- 36h) eine Drehachse (44a - 44h) definieren, die oberhalb eines Kniebereichs (50a - 50h) der Rückenlehne (34a- 34h) angeordnet ist.

2. Flugzeugsitzvorrichtung nach Anspruch 1, **dadurch gekennzeichnet, dass** sich die Sitzstrukturelemente (26a - 26h, 28a- 28h) in ihrem hinteren Bereich nach oben, von der Aufständereinheit (12a-12h) weg, bis zumindest im Wesentlichen auf eine Armlehnenhöhe (X) erstrecken, wobei die Sitzstrukturelemente (26a - 26h, 28a- 28h) an ihrem hinteren, oberen Ende jeweils die Lagerstelle (38a- 38h, 40a- 40h) zur Lagerung des schwenkbaren Rückenlehnenelements (36a- 36h) aufweisen.

3. Flugzeugsitzvorrichtung nach Anspruch 1 oder 2, **dadurch gekennzeichnet, dass** das Rückstellmodul (56a- 56h) wenigstens ein Federelement (58a -58h) aufweist, das zur Bereitstellung der Rückstellkraft vorgesehen ist.

4. Flugzeugsitzvorrichtung nach einem der vorhergehenden Ansprüche, **dadurch gekennzeichnet, dass** die Rückenlehne (34a- 34h) ein unteres Rückenlehnenelement (36a- 36h) aufweist, das einen unteren Bereich der Rückenlehne (34a- 34h) ausbildet und an den Sitzstrukturelemente (26a - 26h, 28a- 28h) befestigt ist.

5. Flugzeugsitzvorrichtung nach Anspruch 4, **dadurch gekennzeichnet, dass** sich das untere Rückenlehnenelement (36a- 36h) von einer Höhe des zumindest einen Querträgers (22a- 22h. 24a - 24h) bis auf eine Höhe von 450 mm - 700 mm von einer Aufständerebene gemessen erstreckt.

6. Flugzeugsitzvorrichtung nach Anspruch 3 und 4, **dadurch gekennzeichnet, dass** das Federelement (58a -58h) als ein Blattfederelement ausgebildet und dazu vorgesehen ist, an das untere Rückenlehnenelement (36a- 36h) oder an die Aufständereinheit (12a-12h) angebunden zu werden.

7. Flugzeugsitzvorrichtung zumindest nach Anspruch 3, **dadurch gekennzeichnet, dass** die Rückenlehne (34a- 34h) in einem Bereich oberhalb der Lagerstellen (38a- 38h, 40a- 40h) einen Querträger (66a - 66h) aufweist, an dem das als Blattfederelement ausgebildete Federelement (58a -58h) zur Übertragung einer Rückstellkraft an das schwenkbare Rückenlehnenelement (36a- 36h) angebunden ist.

8. Flugzeugsitzvorrichtung zumindest nach Anspruch 4, **dadurch gekennzeichnet, dass** das untere Rückenlehnenelement (36a- 36h) an seinem oberen Ende eine obere Lippe (104b) aufweist, die sich bis in einen Bereich oberhalb der Lagerstellen (38a- 38h, 40a- 40h) zur Lagerung der Rückenlehne (34a- 34h) erstreckt.

9. Flugzeugsitzvorrichtung nach einem der vorhergehenden Ansprüche, **dadurch gekennzeichnet, dass** das schwenkbare Rückenlehnenelement (36a- 36h) einen Rückenlehnenrahmen (60a- 60h) und eine Bespannung (100a - 100h), die auf den Rückenlehnenrahmen (60a- 60h) aufgespannt ist, oder ein Schalenelement (62a - 62h), das mit dem Rückenlehnenrahmen (60a- 60h) verbunden ist, aufweist.

10. Flugzeugsitzvorrichtung nach Anspruch 1, **dadurch gekennzeichnet, dass** das Rückstellmodul (56a- 56h) ein als Gasdruckfeder ausgebildetes Federelement (58e -58f) aufweist, die in einem Bereich oberhalb der Lagerstellen (38a- 38h, 40a-40h) angeordnet ist.

11. Flugzeugsitzvorrichtung nach einem der vorhergehenden Ansprüche, **dadurch gekennzeichnet, dass** das Rückstellmodul (56a- 56h) wenigstens ein Hebelgetriebe (110e - 110f) aufweist, das dazu vorgesehen ist, eine Rückstellkraft auf das schwenkbare Rückenlehnenelement (36a- 36h) zu übertragen.

12. Flugzeugsitzvorrichtung nach einem der vorhergehenden Ansprüche, **dadurch gekennzeichnet, dass** das Rückstellmodul (56a- 56h) ein Torsionsrohr (132f) aufweist, das eine Rückstellkraft von einer Seite des schwenkbaren Rückenlehnenelements (36a- 36h) auf eine gegenüberliegende Seite überträgt.

13. Flugzeugsitzvorrichtung nach Anspruch 6, **dadurch gekennzeichnet, dass** das als Blattfederelement ausgebildete Federelement (58a -58h) zur Bereitstellung einer Rückstellkraft einstückig mit dem unteren Rückenlehnenelement (36a- 36h) ausgebildet ist.

14. Flugzeugsitzvorrichtung zumindest nach Anspruch 3, **dadurch gekennzeichnet, dass** das Federelement (58a -58h) zur Erzeugung der Rückstellkraft zumindest teilweise einstückig mit dem schwenkbaren Rückenlehnenelement (36a- 36h) ausgebildet ist.

## Claims

1. Aircraft seat device
having a mounting unit (12a; 12b; 12c; 12d; 12e; 12f; 12g; 12h) which is configured for mounting on a cabin floor and has at least one transverse beam (22a, 24a; 22b, 24b; 22c, 24c; 22d, 24d; 22e, 24e; 22f, 24f; 22g, 24g; 22h, 24h), having two seat structure elements (26a, 28a; 26b, 28b; 26c, 28c; 26d, 28d; 26e, 28e; 26f, 28f; 26g, 28g; 26h, 28h) which are each arranged on one side of a seat region (30a; 30b; 30c; 30d; 30e; 30f; 30g; 30h) and each have a bearing point (38a, 40a; 38b, 40b; 38c, 40c; 38d, 40d; 38e, 40e; 38f, 40f; 38g, 40g; 38h, 40h), having a backrest (34a, 34b; 34c; 34d; 34e; 34f; 34g; 34h) which is attached via the bearing points (38a, 40a; 38b, 40b; 38c, 40c; 38d, 40d; 38e, 40e; 38f, 40f; 38g, 40g; 38h, 40h) of the seat structure elements (26a, 28a; 26b, 28b; 26c, 28c; 26d, 28d; 26e, 28e; 26f, 28f; 26g, 28g; 26h, 28h),
having a bearing device (42a; 42b; 42c; 42d; 42e; 42f; 42g; 42h) which is configured for supporting the backrest (34a; 34b; 34c; 34d; 34e; 34f; 34g; 34h) pivotably between an upright sitting position and a comfort position, wherein the backrest (34a; 34b; 34c; 34d; 34e; 34f; 34g; 34h) comprises a pivotable backrest element (36a; 36b; 36c; 36d; 36e; 36f; 36g; 36h),
the aircraft seat device further having at least one restoring module (56a; 56b; 56c; 56d; 56e; 56f; 56g; 56h) which is configured at least for providing a restoring force for restoring the backrest (34a; 34b; 34c; 34d; 34e; 34f; 34g; 34h) from the comfort position into the upright sitting position and for this purpose is arranged at least to a large extent in a region above the bearing points (38a, 40a; 38b, 40b; 38c, 40c; 38d, 40d; 38e, 40e; 38f, 40f; 38g, 40g; 38h, 40h) of the seat structure elements (26a, 28a; 26b, 28b; 26c, 28c; 26d, 28d; 26e, 28e; 26f, 28f; 26g, 28g; 26h, 28h),
**characterized in that** for supporting the pivotable backrest element (36a-36h), the bearing points (38a-38h, 40a-40h) define an axis of rotation (44a-44h) which is arranged above a knee region (50a-50h) of the backrest (34a-34h).

2. Aircraft seat device according to claim 1,
**characterized in that** the seat structure elements (26a-26h, 28a-28h) extend in their rear region upwards, away from the mounting unit (12a-12h), up to at least substantially an armrest height (X),
wherein the seat structure elements (26a-26h, 28a-28h) each have at their rear, upper end the bearing point (38a-38h, 40a-40h) for supporting the pivotable backrest element (36a-36h).

3. Aircraft seat device according to claim 1 or 2,
**characterized in that** the restoring module (56a-56h) has at least one spring element (58a-58h) which is configured for providing the restoring force.

4. Aircraft seat device according to any one of the preceding claims, **characterized in that** the backrest (34a-34h) has a lower backrest element (36a-36h) which forms a lower region of the backrest (34a-34h) and is fastened to the seat structure elements (26a-26h, 28a-28h).

5. Aircraft seat device according to claim 4,
**characterized in that** the lower backrest element (36a-36h) extends from a height of the at least one transverse beam (22a-22h, 24a-24h) up to a height of 450 mm-700 mm measured from a mounting plane.

6. Aircraft seat device according to claims 3 and 4,
**characterized in that** the spring element (58a-58h) is embodied as a leaf spring element and is configured to be attached to the lower backrest element (36a-36h) or to the mounting unit (12a-12h).

7. Aircraft seat device at least according to claim 3,
**characterized in that** the backrest (34a-34h) has in a region above the bearing points (38a-38h, 40a-40h) a transverse beam (66a-66h) to which the spring element (58a-58h) embodied as a leaf spring element is attached for a transmission of a restoring force to the pivotable backrest element (36a-36h).

8. Aircraft seat device at least according to claim 4,
**characterized in that** the lower backrest element (36a-36h) has at its upper end an upper lip (104b) which extends into a region above the bearing points (38a-38h, 40a-40h) for supporting the backrest (34a-34h).

9. Aircraft seat device according to any one of the preceding claims, **characterized in that** the pivotable backrest element (36a-36h) has a backrest frame (60a-60h) and a covering (100a-100h) which is tensioned onto the backrest frame (60a-60h), or has a shell element (62a-62h) which is connected to the backrest frame (60a-60h).

10. Aircraft seat device according to claim 1,
**characterized in that** the restoring module (56a-56h) has a spring element (58e-58f) which is embodied as a gas pressure spring and is arranged in a region above the bearing points (38a-38h, 40a-40h).

11. Aircraft seat device according to any one of the preceding claims, **characterized in that** the restoring module (56a-56h) has at least one lever gear (110e-110f), which is configured for transmitting a restoring force to the pivotable backrest element (36a-36h).

12. Aircraft seat device according to any one of the preceding claims, **characterized in that** the restoring module (56a-56h) has a torsion tube (132f) which transmits a restoring force from one side of the pivotable backrest element (36a-36h) to an opposite side.

13. Aircraft seat device according to claim 6,
**characterized in that** the spring element (58a-58h) embodied as a leaf spring element is realized integrally with the lower backrest element (36a-36h) for providing a restoring force.

14. Aircraft seat device at least according to claim 3,
**characterized in that** for generating the restoring force the spring element (58a-58h) is at least partially realized integrally with the pivotable backrest element (36a-36h).

## Revendications

1. Dispositif de siège d'avion
avec une unité de montant (12a ; 12b ; 12c ; 12d ; 12e ; 12f ; 12g ; 12h) prévue pour le montage sur un plancher de cabine et comprenant au moins une traverse (22a, 24a ; 22b, 24b ; 22c, 24c ; 22d, 24d ; 22e, 24e ; 22f, 24f ; 22g, 24g ; 22h, 24h),
avec deux éléments de structure de siège (26a, 28a ; 26b, 28b ; 26c, 28c ; 26d, 28d ; 26e, 28e ; 26f, 28f ; 26g, 28g ; 26h, 28h) qui sont disposés respectivement sur un côté d'une zone d'assise (30a ; 30b ; 30c ; 30d ; 30e ; 30f ; 30g ; 30h) et qui présentent respectivement un point de support (38a, 40a ; 38b, 40b ; 38c, 40c ; 38d, 40d ; 38e, 40e ; 38f, 40f ; 38g, 40g ; 38h, 40h),
avec un dossier (34a, 34b ; 34c ; 34d ; 34e ; 34f ; 34g ; 34h) relié par le biais des points de support (38a, 40a ; 38b, 40b ; 38c, 40c ; 38d, 40d ; 38e, 40e ; 38f, 40f ; 38g, 40g ; 38h, 40h) des éléments de structure de siège (26a, 28a ; 26b, 28b ; 26c, 28c ; 26d, 28d ; 26e, 28e ; 26f, 28f ; 26g, 28g ; 26h, 28h),
avec un dispositif de palier (42a ; 42b ; 42c ; 42d ; 42e ; 42f ; 42g ; 42h) qui est prévu pour supporter le dossier (34a ; 34b ; 34c ; 34d ; 34e ; 34f ; 34g ; 34h) de manière pivotante entre une position d'assise droite et une position de confort, le dossier (34a ; 34b ; 34c ; 34d ; 34e ; 34f ; 34g ; 34h) comprenant un élément de dossier pivotable (36a ; 36b ; 36c ; 36d ; 36e ; 36f ; 36g ; 36h),
et avec au moins un module de rappel (56a ; 56b ; 56c ; 56d ; 56e ; 56f ; 56g ; 56h) qui est prévu au moins pour fournir une force de rappel pour ramener le dossier (34a ; 34b ; 34c ; 34d ; 34e ; 34f ; 34g ; 34h) de la position de confort à la position d'assise droite et qui est à cet effet disposé au moins en grande partie dans une zone au-dessus des points de support (38a, 40a ; 38b, 40b ; 38c, 40c ; 38d, 40d ; 38e, 40e ; 38f, 40f ; 38g, 40g ; 38h, 40h) des éléments de structure de siège (26a, 28a ; 26b, 28b ; 26c, 28c ; 26d, 28d ; 26e, 28e ; 26f, 28f ; 26g, 28g ; 26h, 28h),
**caractérisé en ce que** pour supporter l'élément de dossier pivotable (36a - 36h), les points de support (38a - 38h, 40a - 40h) définissent un axe rotatif (44a - 44h) qui est disposé au-dessus d'une zone de genou (50a - 50h) du dossier (34a - 34h).

2. Dispositif de siège d'avion selon la revendication 1,
**caractérisé en ce que** les éléments de structure de siège (26a - 26h, 28a - 28h) s'étendent dans leur zone arrière vers le haut, en s'éloignant de l'unité de montant (12a - 12h), au moins sensiblement jusqu'à une hauteur appuie-bras (X), les éléments de structure de siège (26a - 26h, 28a - 28h) présentant à leur extrémité supérieure arrière respectivement le point de support (38a - 38h, 40a - 40h) pour supporter l'élément de dossier pivotable (36a - 36h).

3. Dispositif de siège d'avion selon la revendication 1 ou 2,
**caractérisé en ce que** le module de rappel (56a - 56h) comprend au moins un élément de ressort (58a - 58h) qui est prévu pour fournir la force de rappel.

4. Dispositif de siège d'avion selon l'une quelconque des revendications précédentes,
**caractérisé en ce que** le dossier (34a - 34h) comprend un élément de dossier inférieur (36a - 36h) qui forme une zone inférieure du dossier (34a - 34h) et est fixé aux éléments de structure de siège (26a - 26h, 28a - 28h).

5. Dispositif de siège d'avion selon la revendication 4,
**caractérisé en ce que** l'élément de dossier inférieur (36a - 36h) s'étend à partir d'une hauteur de l'au moins une traverse (22a - 22h, 24a - 24h) jusqu'à une hauteur de 450 mm - 700 mm mesurée à partir d'un plan de montant.

6. Dispositif de siège d'avion selon les revendications 3 et 4,
**caractérisé en ce que** l'élément de ressort (58a - 58h) est réalisé sous la forme d'un élément de ressort à lame et est prévu pour être relié à l'élément de dossier inférieur (36a - 36h) ou à l'unité de montant (12a - 12h).

7. Dispositif de siège d'avion au moins selon la revendication 3, **caractérisé en ce que** le dossier (34a - 34h) présente dans une zone au-dessus des points de support (38a - 38h, 40a - 40h) une traverse (66a - 66h) à laquelle l'élément de ressort (58a - 58h), réalisé sous la forme d'élément de ressort à lame, est relié pour la transmission d'une force de rappel à l'élément de dossier pivotable (36a - 36h).

8. Dispositif de siège d'avion au moins selon la revendication 4, **caractérisé en ce que** l'élément de dossier inférieur (36a - 36h) présente à son extrémité supérieure une lèvre supérieure (104b) qui s'étend jusque dans une zone au-dessus des points de support (38a - 38h, 40a - 40h) pour supporter le dossier (34a - 34h).

9. Dispositif de siège d'avion selon l'une quelconque des revendications précédentes,
**caractérisé en ce que** l'élément de dossier pivotable (36a - 36h) comprend un cadre de dossier (60a - 60h) et un entoilage (100a - 100h) tendue sur le cadre de dossier (60a - 60h), ou comprend un élément de coque (62a - 62h) qui est relié au cadre de dossier (60a - 60h).

10. Dispositif de siège d'avion selon la revendication 1,
**caractérisé en ce que** le module de rappel (56a - 56h) comprend un élément de ressort (58e - 58f) réalisé sous la forme d'un ressort à gaz disposé dans une zone au-dessus des points de support (38a - 38h, 40a - 40h).

11. Dispositif de siège d'avion selon l'une quelconque des revendications précédentes,
**caractérisé en ce que** le module de rappel (56a - 56h) comprend au moins un mécanisme à levier (110e - 110f) qui est prévu pour transmettre une force de rappel à l'élément de dossier pivotable (36a - 36h).

12. Dispositif de siège d'avion selon l'une quelconque des revendications précédentes,
**caractérisé en ce que** le module de rappel (56a - 56h) comprend un tube de torsion (132f) qui transmet une force de rappel d'un côté de l'élément de dossier pivotable (36a - 36h) à un côté opposé.

13. Dispositif de siège d'avion selon la revendication 6,
**caractérisé en ce que** l'élément de ressort (58a - 58h), réalisé sous la forme d'un élément de ressort à lame, est réalisé intégralement avec l'élément de dossier inférieur (36a - 36h) pour fournir une force de rappe**l.**

14. Dispositif de siège d'avion au moins selon la revendication 3, **caractérisé en ce que** pour générer la force de rappel, l'élément de ressort (58a - 58h) est réalisé au moins en partie intégralement avec l'élément de dossier pivotable (36a - 36h).
